(19) 

Europäisches Patentamt
European Patent Office
Office européen des brevets

(11) **EP 4 168 752 B1**

(12) **EUROPÄISCHE PATENTSCHRIFT**

(45) Veröffentlichungstag und Bekanntmachung des Hinweises auf die Patenterteilung:
**13.08.2025 Patentblatt 2025/33**

(21) Anmeldenummer: **21734309.4**

(22) Anmeldetag: **15.06.2021**

(51) Internationale Patentklassifikation (IPC):
**G01F 1/84** (2006.01) **G01F 25/10** (2022.01)

(52) Gemeinsame Patentklassifikation (CPC):
**G01F 1/8431; G01F 1/8436; G01F 25/10**

(86) Internationale Anmeldenummer:
**PCT/EP2021/066125**

(87) Internationale Veröffentlichungsnummer:
**WO 2021/255034 (23.12.2021 Gazette 2021/51)**

(54) **VIBRONISCHES MESSSYSTEM**

VIBRONIC MEASURING SYSTEM

SYSTÈME DE MESURE VIBRONIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.06.2020 DE 102020116185**
**15.07.2020 DE 102020118702**

(43) Veröffentlichungstag der Anmeldung:
**26.04.2023 Patentblatt 2023/17**

(73) Patentinhaber: **Endress+Hauser Flowtec AG**
**4153 Reinach (CH)**

(72) Erfinder:
• **KIRST, Michael**
**79540 Lörrach (DE)**
• **RIEDER, Alfred**
**84032 Landshut (DE)**

(74) Vertreter: **Endress + Hauser Group Services (Deutschland) AG+Co. KG**
**Colmarer Straße 6**
**79576 Weil am Rhein (DE)**

(56) Entgegenhaltungen:
EP-A1- 2 638 367   DE-A1- 19 634 663
JP-B2- 4 112 817   US-A1- 2016 116 319
US-B2- 7 360 453   US-B2- 9 052 225

EP 4 168 752 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein mittels eines Meßwandlers vom Vibrationstyp und einer daran elektrisch angeschlossenen Meßsystem-Elektronik gebildetes vibronisches Meßsystem, insb. ein Coriolis-Massedurchfluß-Meßgerät oder Coriolis-Massedurchfluß-/Dichte-Meßgerät, zum Messen und/oder Überwachen wenigstens einer Meßgröße eines strömenden Meßstoffs, insb. nämlich eines Gases, einer Flüssigkeit oder einer Dispersion. Meßgröße kann beispielsweise ein zeitlich veränderlicher Strömungsparameter, beispielsweise ein Massestrom, ein Volumenstrom bzw. eine Strömungsgeschwindigkeit, und/oder ein zeitlich veränderlicher Stoffparameter, beispielsweise eine Dichte und/oder eine Viskosität, des jeweiligen Meßstoffs sein. Derartige - typischerweise als ein In-Line-Meßgeräts in Kompaktbauweise ausgebildete - Meßsysteme sind seit langem bekannt und haben sich im industriellen Einsatz, nicht zuletzt auch im Bereich der Regelung und Überwachung von automatisierten verfahrenstechnischen Prozessen bzw. Prozeßanlagen oder im Bereich von Übergabestellen des ggf. auch eichpflichtigen Güterverkehrs, bewährt. Beispiele für vibronische Meßsysteme der in Rede stehenden Art, sind z.B. in der EP-A 317 340, der EP-A 816 807, der JP-A 8-136311, der JP-A 9-015015, der DE-A 10 2019 124709, der US-A 2005/0125167, der US-A 2006/0000293, der US-A 2006/0112774, der US-A 2006/0266129, der US-A 2007/0062308, der US-A 2007/0113678, der US-A 2007/0119264, der US-A 2007/0119265, der US-A 2007/0151370, der US-A 2007/0151371, der US-A 2007/0186685, der US-A 2008/0034893, der US-A 2008/0041168, der US-A 2008/0141789, der US-A 2010/0011882, der US-A 2010/0050783, der US-A 2010/0101333, der US-A 2010/0139417, der US-A 2010/0236338, der US-A 2010/0242623, der US-A 2010/0242624, der US-A 2010/0251830, der US-A 2011/0167907, der US-A 2012/0123705, der US-A 2014/0352454, der US-A 2016/0033314, der US-A 2016/0349091, der US-A 2016/0116319, der US-A 2016/0123836, der US-A 2016/0138997, der US-A 2017/0030870, der US-A 2017/0356777, der US-A 2019/0003875, der US-A 2020/0132529, der US-A 2020/0393278, der US-A 46 80 974, der US-A 47 38 144, der US-A 47 68 384, der US-A 47 77 833, der US-A 47 93 191, der US-A 48 01 897, der US-A 48 23 614, der US-A 48 31 885, der US-A 48 79 911, der US-A 50 09 109, der US-A 50 24 104, der US-A 50 27 662, der US-A 50 50 439, der US-A 52 91 792, der US-A 53 59 881, der US-A 53 98 554, der US-A 54 76 013, der US-A 55 31 126, der US-A 56 02 345, der US-A 56 91 485, der US-A 57 28 952, der US-A 57 34 112, der US-A 57 96 010, der US-A 57 96 011, der US-A 57 96 012, der US-A 58 04 741, der US-A 58 31 178, der US-A 58 61 561, der US-A 58 69 770, der US-A 59 26 096, der US-A 59 45 609, der US-A 59 79 246, der US-A 60 47 457, der US-A 60 73 495, der US-A 60 92 429, der US-A 63 11 136, der US-A 2010/0011882, der US-A 2010/0139416, der US-B 62 23 605, der US-B 63 11 136, der US-B 63 30 832, der US-B 63 97 685, der US-B 65 13 393, der US-B 65 57 422, der US-B 66 51 513, der US-B 66 66 098, der US-B 66 91 583, der US-B 68 40 109, der US-B 68 68 740, der US-B 68 83 387, der US-B 70 17 424, der US-B 70 40 179, der US-B 70 73 396, der US-B 70 77 014, der US-B 70 80 564, der US-B 71 34 348, der US-B 72 99 699, der US-B 73 05 892, der US-B 73 60 451, der US-B 73 92 709, der US-B 74 06 878, der US-B 75 62 586, der WO-A 00/14485, der WO-A 01/02816, der WO-A 03/021205, der WO-A 2004/072588, der WO-A 2005/040734, der WO-A 2005/050145, der WO-A 2006/036139, der WO-A 2007/097760, der WO-A 2008/013545, der WO-A 2008/077574, der WO-A 2009/136943, der WO-A 2011/019345, der WO-A 2013/002759, der WO-A 2013/009307, der WO-A 2017/019016, der WO-A 2017/069749, der WO-A 2019/017891, der WO-A 2019/081169, der WO-A 2019/081170, der WO-A 2020/259762, der WO-A 2020/126285, der WO-A 87/06691, der WO-A 93/01472, der WO-A 95/16897, der WO-A 95/29386, der WO-A 96/05484, der WO-A 96/08697, der WO-A 97/26508, der WO-A 99/39164, der WO-A 99/40394 oder der WO-A 99/44018 beschrieben und werden u.a. auch durch die Anmelderin selbst seit langem hergestellt und als Coriolis-Massendurchfluß-Meßgerät bzw. als Coriolis-Massendurchfluß-/Dichte-Meßgerät, beispielsweise unter der Warenbezeichnung "PROMASS G 100", "PROMASS O 100", "PROMASS E 200", "PROMASS F 300", "PROMASS X 500", "CNGmass", "LPGmass" oder "Dosimass" (https://www.endress.com/de/search?filter.text=promass), angeboten.

Jeder der Meßwandler der darin gezeigten Meßsysteme umfaßt jeweils wenigstens eine Rohranordnung zum Führen des strömenden Meßstoffs, eine Erregeranordnung zum Wandeln elektrischer Leistung in dem Anregen und Aufrechterhalten erzwungener mechanischer Schwingungen der Rohranordnung dienliche mechanische Leistung und eine Sensoranordnung zum Erfassen von mechanischen Schwingungen der Rohranordnung und zum Bereitstellen von jeweils Schwingungsbewegungen der Rohranordnung repräsentierenden Schwingungssignalen auf. Sowohl die Erregeranordnung als auch die Sensoranordnung ist jeweils mit der Meßsystem-Elektronik elektrisch gekoppelt, die wiederum dazu dient, den Meßwandler, insb. nämlich dessen Erregeranordnung, anzusteuern sowie davon gelieferte Meßsignale, insb. nämlich von dessen Sensoranordnung gelieferte Schwingungssignale, zu empfangen und auszuwerten, insb. nämlich die wenigstens eine Meßgröße repräsentierende Meßwerte zu ermitteln. Zum Schutz vor äußeren Einflüssen ist die Rohranordnung zusammen mit der Erreger- und der Sensoranordnung in einem typischerweise metallischen Wandler-Schutzgehäuse und ist die Meßsystem-Elektronik in einem, beispielsweise ebenfalls metallischen, Elektronik-Schutzgehäuse untergebracht; letzteres kann beispielsweise unter Bildung eines Coriolis-Massedurchfluß-Meßgeräts bzw. eines Coriolis-Massedurchfluß-/Dichte-Meßgeräts in Kompaktbauweise auch direkt am vorbezeichneten Wandler-Schutzgehäuse gehaltert sein. Bei in der WO-A 96/08697 oder WO-A 2019/017891 gezeigten Meßsystemen sind das Wandler-Schutzgehäuse und die Rohranordnung im besonderen wieder lösbar miteinander verbunden, beispielsweise um ein nachträgliches Einsetzen der Rohranordnung bzw. einen Austausch einer defekten oder verschlissenen Rohranordnung gegen eine intakte Rohranordnung vor Ort zu ermöglichen.

Die vorbezeichneten Rohranordnungen sind jeweils dafür vorgesehen, in den Verlauf einer Prozeßleitung eingegliedert zu werden und weisen jeweils wenigstens ein Rohr - beispielsweise nämlich genau ein Rohr oder genau zwei Rohre oder genau vier Rohre - auf, das sich jeweils von einem jeweiligen ersten Rohrende bis zu einem jeweiligen zweiten Rohrende mit einer Rohrlänge erstreckt und ein von einer - typischerweise metallischen - Rohrwandung umschlossenes, sich vom ersten Rohrende bis zum zweiten Rohrende erstreckendes Lumen aufweist. Das zumindest abschnittsweise gekrümmte und/oder zumindest abschnittsweise gerade Rohr ist - Meßprinzip bedingt - eingerichtet, zumindest in einer vom ersten Rohrende zum zweiten Rohrende weisenden Strömungsrichtung von dem via angeschlossener Prozeßleitung zu- bzw. wieder abgeführten Meßstoff durchströmt und währenddessen, beispielsweise zwecks Generierung vom Massestrom abhängiger Corioliskräfte, von der Dichte des Meßstoffs abhängiger Trägheitskräfte und/oder von der Viskosität des Meßstoffs abhängiger Reibungskräfte, vibrieren gelassen zu werden, beispielsweise nämlich Biegeschwingungen um ein statische Ruhelage auszuführen. Die Rohre marktgängiger (Standard-) Meßsysteme weisen typischerweise wenigstens zwei zueinander orthogonale Symmetrieebenen auf und können beispielsweise eine U- oder V- bzw. Rechteck- oder Triangel-Form, seltener auch eine $\Omega$- oder Helix-Form aufweisen. Zudem bestehen deren jeweilige Rohrwandung typischerweise aus einem Stahl, beispielsweise nämlich einem Edelstahl, Duplexstahl oder Superduplexstahl, aus einer Titan-Legierung, einer Zirconium-Legierung, beispielsweise einem Zircaloy, und/oder einer Tantal-Legierung. Die Rohrlänge solcher Rohre kann in einem Bereich zwischen etwa 100 mm und etwa 2000 mm und ein Kaliber (Rohrinnendurchmesser) solcher Rohre kann im Bereich zwischen etwa 0,1 mm und etwa 100 mm liegen, typischerweise derart, daß das jeweilige Rohr ein Kaliber-zu-Rohrlänge-Verhältnis aufweist, das im Bereich zwischen etwa 0,08 und etwa 0,25 liegt.

Bei Meßwandlern mit einem einzigen Rohr kommuniziert dieses zumeist über ein einlaßseitig einmündendes im wesentlichen gerades Verbindungsrohrstück sowie über ein auslaßseitig einmündendes im wesentlichen gerades Verbindungsrohrstück mit der vorbezeichneten Prozeßleitung. Ferner umfaßt die Rohranordnung solcher Meßwandler mit einem einzigen Rohr jeweils wenigstens einen einstückigen oder mehrteilig ausgeführten, beispielsweise rohr-, kasten- oder plattenförmigen, Gegenschwinger, der unter Bildung einer ersten Kopplungszone einlaßseitig an das Rohr gekoppelt ist und der unter Bildung einer zweiten Kopplungszone auslaßseitig an das Rohr gekoppelt ist, und der im Betrieb im wesentlichen ruht oder zum Rohr gegengleich, also gleichfrequent und gegenphasig, oszilliert. Die mittels Rohr und Gegenschwinger gebildete Rohranordnung eines derartigen Meßwandlers ist zumeist allein mittels der zwei Verbindungsrohrstücke, über die das Rohr im Betrieb mit der Prozeßleitung kommuniziert, im vorbezeichneten Wandler-Schutzgehäuse schwingfähig gehalten. Bei den beispielsweise in der US-A 52 91 792, der US-A 57 96 010, der US-A 59 45 609, der US-B 70 77 014, der US-A 2007/0119264, der WO-A 01/02816 oder auch der WO-A 99/40394 gezeigten (Standard-)Meßwandlern mit einem einzigen, im wesentlichen geraden Rohr sind letzteres und der Gegenschwinger, wie bei herkömmlichen Meßwandlern durchaus üblich, zueinander im wesentlichen koaxial ausgerichtet. Als Materialien für die Gegenschwinger kommen, nicht zuletzt auch bei Verwendung von Titan, Tantal oder Zirkonium für das Rohr, zumeist vergleichsweise kostengünstige Stahlsorten, wie etwa Baustahl oder Automatenstahl, zum Einsatz. Bei Meßwandlern mit zwei oder mehr Rohren weist die jeweilige Rohranordnung typischerweise jeweils einen sich zwischen den Rohren und einem einlaßseitigen Anschlußflansch erstreckenden einlaßseitig Strömungsteiler sowie über einen sich zwischen den Rohren und einem auslaßseitigen Anschlußflansch erstreckenden auslaßseitig Strömungsteiler auf, über den die Rohranordnung in die Prozeßleitung eingebunden werden kann. In der US-A 2012/0123705, der US-A 56 02 345, der US-A 59 26 096, der WO-A 2009/136943, der WO-A 87/06691, der WO-A 96/05484, der WO-A 96/08697, der WO-A 97/26508, der WO-A 99/39164 oder der WO-A 2019/017891 gezeigte Rohranordnungen weisen jeweils zwei Rohre, nämlich ein erstes Rohr sowie ein dazu baugleiches und paralleles zweites Rohr sowie einen - hier als Leitungsverzweigung dienlichen bzw. einlaßseitigen - ersten Strömungsteiler mit genau zwei Strömungsöffnungen und einen dem ersten Strömungsteiler baugleichen - hier als Leitungsvereinigung dienlichen bzw. auslaßseitigen - zweiten Strömungsteiler mit genau zwei Strömungsöffnungen auf, während in der US-A 56 02 345, der WO-A 96/08697 oder der US-A 2017/0356777 oder der WO-A 2019/081169 oder der WO-A 2019/081170 oder der erwähnten Patentanmeldung PCT/EP2019/082044 gezeigte Rohranordnungen jeweils einen - hier als Leitungsverzweigung dienlichen bzw. einlaßseitigen - ersten Strömungsteiler mit genau zwei Strömungsöffnungen, einen dem ersten Strömungsteiler baugleichen - hier als Leitungsvereinigung dienlichen bzw. auslaßseitigen - zweiten Strömungsteiler mit genau zwei Strömungsöffnungen sowie zwei Rohre, nämlich ein erstes Rohr sowie ein zweites Rohr aufweisen. Zudem ist jedes der zwei bzw. vier Rohre jeweils an jeden der ersten und zweiten Strömungsteiler angeschlossen, derart, daß das erste Rohr mit dessen ersten Ende in eine erste Strömungsöffnung des ersten Strömungsteilers und mit dessen zweiten Ende in eine erste Strömungsöffnung des zweiten Strömungsteilers, das zweite Rohr mit dessen ersten Ende in eine zweite Strömungsöffnung des ersten Strömungsteilers und mit dessen zweiten Ende in eine zweite Strömungsöffnung des zweiten Strömungsteilers münden bzw. daß das erste Rohr mit dessen ersten Ende in eine erste Strömungsöffnung des ersten Strömungsteilers und mit dessen zweiten Ende in eine erste Strömungsöffnung des zweiten Strömungsteilers, das zweite Rohr mit dessen ersten Ende in eine zweite Strömungsöffnung des ersten Strömungsteilers und mit dessen zweiten Ende in eine zweite Strömungsöffnung des zweiten Strömungsteilers, das dritte Rohr mit dessen ersten Ende in eine dritte Strömungsöffnung des ersten Strömungsteilers und mit dessen zweiten Ende in eine dritte Strömungsöffnung des zweiten Strömungsteilers und das vierte Rohr mit dessen ersten Ende in eine vierte Strömungsöffnung des ersten Strömungsteilers und mit dessen zweiten Ende in eine vierte Strömungsöffnung des zweiten Strömungsteilers münden. Die Strömungsteiler marktgängiger Meßwandler sind typischerweise zudem als integraler Bestandteil des vorbezeichneten Wandler-Schutzgehäuses ausgebildet.

Zum Generieren von durch die jeweils zu messenden Meßgröße beeinflußten bzw. damit entsprechend korrespondierenden Schwingungssignalen wird das wenigstens eine Rohr des Meßwandlers im Betrieb des Meßsystems mittels der Erregeranordnung aktiv zu Vibrationen in einer für die Messung der jeweiligen Meßgröße bzw. die Generierung der vorbezeichneten Coriolis-, Trägheits- bzw. Reibungskräfte geeigneten, gelegentlich auch als Antriebs- oder Nutzmode bezeichneten Schwingungsform angeregt und werden die entsprechenden Schwingungsantworten, nämlich die resultierende Schwingungsbewegungen des wenigstens ein Rohrs zeitgleich mittels der Sensoranordnung erfaßt.

Zum Anregen mechanischer Schwingungen des wenigstens einen Rohrs weist die Erregeranordnungen wenigstens einen elektro-mechanischen, typischerweise nämlich elektrodynamischen, Schwingungserreger auf, der anteilig mit dem Rohr mechanisch verbunden und dafür eingerichtet ist, elektrische Leistung mit einem zeitlich veränderlichen elektrischen Strom in mechanische Leistung zu wandeln, derart, daß an einem mittels des Schwingungserregers am damit mechanisch verbundenen Rohr gebildeten Antriebspunkt eine zeitlich veränderliche Antriebskraft auf das Rohr wirkt. Für den vorbezeichneten Fall, daß die Rohranordnung zumindest ein weiteres (zweites) Rohr aufweist, kann der wenigstens eine Schwingungserreger zudem anteilig auch daran befestigt sein, derart, daß der Schwingungserreger differenziell auf die beiden Rohre wirkt. Für den anderen vorbezeichneten Fall, daß die Rohranordnung einen Gegenschwinger aufweist, kann Schwingungserreger anteilig daran befestigt sein, derart, daß der Schwingungserreger differenziell auf Rohr und Gegenschwinger wirkt. Der Schwingungserreger kann aber beispielsweise auch anteilig am vorbezeichneten Wandler-Schutzgehäuse angebracht sein. Bei Meßwandlern konventioneller (Standard-)Meßsystemen ist der wenigstens eine Schwingungserreger typischerweise zudem so ausgestaltet und angeordnet, daß die damit generierten Antriebskraft praktisch lediglich punktuell auf das jeweilige Rohr wirkt bzw. daß eine Wirklinie der damit generierten Antriebskraft im wesentlichen senkrecht zu einer Normalen einer Antriebs-Querschnittsfläche, nämlich einer Querschnittsfläche des Rohrs, die von einer durch den vorbezeichneten Antriebspunkt hindurchführende gedachten Umfangslinie umschlossen ist, verläuft. Bei (Standard-)Meßwandlern marktgängiger (Standard-)Meßsysteme sind die Erregeranordnungen, wie u.a. auch in der US-A 56 02 345, der US-A 57 96 010, der US-B 68 40 109, der US-B 70 77 014 oder der US-B 70 17 424, der US-A 2014/0352454, der WO-A 93/01472, der WO-A 2005/050145, der WO-A 2013/002759, der WO-A 2011/019345 gezeigt, typischerweise zudem so ausgebildet, daß jedes der Rohre mit genau einem Schwingungserreger (anteilig) verbunden ist, derart, daß die Erregeranordnung außer dem (einen) Schwingungserreger keinen weiteren mit dem jeweiligen Rohr verbunden Schwingungserreger aufweist. Nicht zuletzt für diesen (Standard-)Fall ist der Schwingungserreger typischerweise vom elektrodynamischen Typ, nämlich mittels einer Schwingspule gebildet, beispielsweise derart, daß deren magnetischer Anker unter Bildung des Antriebspunkts mechanisch mit dem wenigstens einen Rohr verbundenen ist und daß deren vom Magnetfeld des Ankers durchflutete Luftspule elektrisch an die Meßsystem-Elektronik angeschlossen und mechanisch mit dem anderen Rohr bzw. dem Gegenschwinger der Rohranordnung oder mit dem Wandler-Schutzgehäuse verbunden ist. Gleichwohl sind auch vibronische Meßsysteme bekannt, beispielsweise aus der WO-A 2017/069749, der WO-A 2017/019016, der WO-A 2006/036139, der US-A 59 26 096, der WO-A 99/28708, der WO-A 99/44018, der WO-A 99/02945, der US-A 2016/0116319, der US-A 2020/0132529, der US-A 48 31 885, der US-B 65 57 422, der US-A 60 92 429 oder auch der US-A 48 23 614, bei denen die Erregeranordnung zwei oder mehr mit jeweils ein und demselben der Rohre der jeweiligen Rohranordnung verbundene und/oder mittels einem oder mehreren Piezoelementen gebildete Schwingungserreger aufweist.

Zum Erfassen von Schwingungen des wenigstens einen Rohrs weist die Sensoranordnung zumindest zwei, beispielsweise elektrodynamische oder optische, Schwingungssensoren auf, von denen ein erster Schwingungssensor in Strömungsrichtung vom Schwingungserreger beabstandet einlaßseitig am Rohr positioniert und ein - typischerweise zum ersten Schwingungssensor baugleicher - zweiter Schwingungssensor in Strömungsrichtung vom Schwingungserreger beabstandet auslaßseitig am Rohr positioniert ist. Jeder der wenigstens zwei Schwingungssensoren ist zudem eingerichtet, Schwingungsbewegungen des Rohrs zu erfassen und in ein nämliche Schwingungsbewegungen repräsentierendes, insb. elektrisches bzw. optisches, erstes bzw. zweites Schwingungssignal zu wandeln, beispielsweise mit einer von den Schwingungen des Rohrs abhängigen elektrischen Spannung. Im Falle elektrodynamischer Schwingungssensoren können diese beispielsweise jeweils mittels einer elektrisch an die Meßsystem-Elektronik angeschlossenen Tauchspule gebildet sein, beispielsweise nämlich derart, daß deren magnetischer Anker mechanisch mit dem wenigstens einen Rohr verbundenen ist und daß deren vom Magnetfeld des Ankers durchflutete Luftspule elektrisch an die Meßsystem-Elektronik angeschlossen und mechanisch mit dem anderen Rohr bzw. dem Gegenschwinger der Rohranordnung oder mit dem Wandlerschutz-Gehäuse verbunden ist.

Die Meßsystem-Elektronik jedes der vorbezeichneten Meßsysteme ist zudem dafür eingerichtet, im Betrieb den wenigstens einen Schwingungserreger entsprechend dem anzuregenden Nutzmode zu bestromen, nämlich mittels wenigstens eines einen zeitlich veränderlichen, z.B. mit einem hinsichtlich (Wechselstrom-)Frequenz, Phasenwinkel und Amplitude geregelten, elektrischen Strom aufweisenden elektrischen Treibersignals elektrische Leistung in den wenigstens Schwingungserreger einzuspeisen, derart, daß das Rohr erzwungene mechanische Schwingungen, beispielsweise nämlich Biegeschwingungen, mit einer oder mehreren durch das Treibersignal vorgegebenen, typischerweise nämlich einer bzw. mehreren Resonanzfrequenzen des wenigstens einen Rohrs entsprechenden Schwingungsfrequenzen ausführt; dies beispielsweise auch mit konstant geregelter Schwingungsamplitude. Im besonderen ist die Meßsystem-Elektronik eingerichtet, das vorbezeichnete Treibersignal für den Schwingungserreger zumindest zeitweise mit einem eine (Wechselstrom-)Frequenz aufweisenden sinusförmigen (Nutz-)Strom bereitzustellen, derart, daß das wenigstens eine Rohr zumindest anteilig bzw. überwiegend Nutzschwingungen, nämlich durch den (bestromten) Schwingungserreger erzwungene mechanische Schwingungen mit einer Nutzfrequenz, nämlich einer der vorbezeichneten (Wechselstrom-)Frequenz entsprechenden (Schwingungs-)Frequenz ausführt. Das Treibersignal kann dafür als ein harmonisches, nämlich genau die eine (Wechselstrom-)Frequenz aufweisendes Sinussignal, mithin außer der (Nutz-)Strom keine weitere spektrale Stromkomponente enthaltendes oder beispielsweise auch als multifrequentes, nämlich mehrere Signalkomponenten mit voneinander abweichenden (Wechselstrom-)Frequenzen enthaltendes Signal ausgebildet sein. Infolge der vorbezeichneten Anregung von Nutzschwingungen des wenigstens einen Rohrs enthält auch jedes der von der Sensoranordnung gelieferten ersten und zweiten Schwingungssignale jeweils eine oder mehrere sinusförmige Signalkomponenten mit jeweils einer einer Schwingungsfrequenz von Schwingungsbewegungen des Rohrs entsprechenden Frequenz, und zwar derart, daß jedes der ersten und zweiten Schwingungssignale, jeweils zumindest auch eine Nutz-Signalkomponente, nämlich eine sinusförmige Signalkomponente mit einer der Nutzfrequenz entsprechenden (Signal-)Frequenz aufweist.

Bei Meßsystemen der in Rede stehenden Art dient als Nutzmode typischerweise eine oder mehrere von einer Vielzahl von dem Rohr innewohnenden, jeweils eine zugehörige Resonanzfrequenz aufweisenden natürlichen Schwingungsmoden, insb. nämlich eine oder mehrere symmetrische Schwingungsmoden, in denen das Rohr jeweils eine ungerade Anzahl Schwingungsbäuche und jeweils eine dementsprechend gerade Anzahl Schwingungsknoten aufweisende Schwingungsbewegungen ausführen kann bzw. ausführt. Nicht zuletzt aufgrund ihrer besonderen Eignung zur Messung sowohl des Massenstroms als auch der Dichte und auch der Viskosität des strömenden Meßstoffs werden bei solchen Meßsystemen, insbesondere auch bei marktgängigen Standard-Meßsystemen, als Nutzmode vorzugsweise eine oder mehrere natürliche symmetrische Biegeschwingungsmode genutzt, insb. nämlich derart, daß die Nutzschwingungen im mit einem von Null verschiedenen Massestrom durch das wenigstens eine Rohr strömenden Meßstoff Corioliskräfte zu bewirken. Bei Meßwandlern mit gekrümmtem Rohr bzw. gekrümmten Rohren wird typischerweise eine solche symmetrische Biegeschwingungsmode, mithin eine solche Biegeschwingungsmode von ungeradzahliger Ordnung als Nutzmode gewählt, bei der das jeweilige Rohr um eine die ersten und zweiten Rohrenden imaginär verbindende gedachte erste Schwingungsachse nach Art eines lediglich endseits eingespannten Auslegers um eine statische Ruhelage pendelt (out-of-plane-Mode), während bei Meßwandlern mit geradem Rohr bzw. geraden Rohren als Nutzmode üblicherweise eine solche symmetrische Biegeschwingungsmode gewählt, bei der das jeweilige Rohr um eine mit einer von dessen Hauptträgheitsachsen (Längsachse) koinzidente, die ersten und zweiten Rohrenden imaginär verbindende gedachte Schwingungsachse nach Art einer eingespannten Saite um eine statische Ruhelage oszilliert (in-plane-Mode). In marktgängigen Meßsystemen hat sich im besonderen die Verwendung der, gelegentlich auch als Grund-Schwingunsgmode oder f1-Mode bezeichneten, (Biege-)Schwingungsmode erster Ordnung, in der Schwingungsbewegungen des Rohrs jeweils genau einen Schwingungsbauch und zwei Schwingungsknoten aufweisen, mithin symmetrisch sind, als Nutzmode etabliert, seltener auch die Verwendung von (Biege-)Schwingungsmoden höherer ungeradzahliger Ordnung, beispielsweise der (Biege-)Schwingungsmode dritter Ordnung (f3-Mode), in der Schwingungsbewegungen des Rohrs also jeweils genau drei Schwingungsbäuche und vier Schwingungsknoten aufweisen. Ein (Resonanz-)Frequenzabstand, nämlich eine Differenz zwischen den Resonanzfrequenzen der f1-Mode und der benachbarten (Biege-)Schwingungsmode zweiter Ordnung (f2-Mode) bzw. zwischen der f2-Mode und der f3-Mode liegt bei marktgängigen Meßsystemen typischerweise jeweils in einer Größenordnung zwischen einigen 100 Hz und wenigen 1000 Hz.

Nicht zuletzt zwecks einer effizienten Anregung der Nutzmode ist die Meßsystem-Elektronik im besonderen auch dafür eingerichtet, die die Nutzfrequenz bestimmende (Wechselstrom-)Frequenz dementsprechend so einzustellen, daß im Ergebnis die Nutzfrequenz möglichst genau einer Resonanzfrequenz einer der (symmetrischen) Schwingungsmoden mit ungeradzahliger Ordnung, insb. nämlich der Resonanzfrequenz (f1) der Schwingungsmode erster Ordnung (f1-Mode) oder einer Resonanzfrequenz (f3) der Schwingungsmode dritter Ordnung (f3-Mode) entspricht bzw. von der jeweils einzustellenden Resonanzfrequenz um weniger als 1% nämlicher Resonanzfrequenz und/oder um weniger als 1 Hz, mithin von der Resonanzfrequenz jeder anderen der natürlichen Schwingungsmoden des Rohrs jeweils um mehr als 5% nämlicher Resonanzfrequenz und/oder um mehr als 10 Hz abweicht, bzw. ist die Meßsystem-Elektronik entsprechend auch eingerichtet, einer Änderung nämlicher Resonanzfrequenz, beispielsweise infolge einer Änderung der Dichte des im Rohr geführten Meßstoffs, mit einer Änderung der (Wechselstrom-)Frequenz des Treibersignals zu folgen, derart, daß die angeregten Nutzschwingungen überwiegend Resonanzschwingungen des wenigstens einen Rohrs sind. Zum Einstellen der (Wechselstrom-)Frequenz kann die Meßsystem-Elektronik des jeweiligen Meßsystems, wie u.a. in den US-A 2016/0349091, US-A 2017/0030870, US-A 58 31 178 und US-A 48 01 897 jeweils gezeigt, beispielsweise eine, ggf. auch digitale Phasenregelschleife (*PLL -phase locked loop*) aufweisen.

Infolge der in der vorbezeichneten Weise angeregten Nutzschwingungen des wenigstens einen Rohrs werden im hindurchströmenden Meßstoff bekanntlich u.a. auch vom Massenstrom abhängige Corioliskräfte induziert, derart, daß den Nutzschwingungen Coriolisschwingungen, nämlich zusätzlich erzwungene Schwingungen mit Nutzfrequenz überlagert sind, die einer, gelegentlich auch als Coriolismode bezeichneten, natürlichen Schwingungsmode mit im Vergleich zur Ordnung der Nutzmode jeweils um Eins erhöhter Ordnung entsprechen; dies im besonderen derart, daß die Nutz-Signalkomponenten der Schwingungssignale auf Grund der Coriolisschwingungen auch vom Massestrom des Meßstoffs abhängig sind, nämlich jeweils einen von einem Massestrom des im wenigstens einen Rohr geführten Meßstoffs abhängigen (Meß-)Phasenwinkel aufweisen bzw. einer Änderung nämlichen Massenstromes mit einer Änderung einer (Meß-)Phasendifferenz der Nutz-Signalkomponenten, nämlich einer (auf die Nutzfrequenz normierte) Differenz zwischen dem (Meß-)Phasenwinkel der Nutz-Signalkomponente des ersten Schwingungssignals und dem (Meß-)Phasenwinkel der Nutz-Signalkomponente des zweiten Schwingungssignals folgen. Bei marktgängigen (Standard-)Meßsystemen dient im Falle der Verwendung der Grundschwingungsmode als Nutzmode typischerweise der antisymmetrische Schwingungsmode zweiter Ordnung bzw. im Falle der Verwendung der Schwingungsmode dritter Ordnung als Nutzmode typischerweise der antisymmetrische Schwingungsmode vierter Ordnung als Coriolismode.

Die Meßsystem-Elektronik jedes der vorbezeichneten Meßsystem ist zudem entsprechend eingerichtet, anhand eines oder mehrerer der vorbezeichneten Schwingungssignale einen oder mehrere den jeweils zu messenden Strömungsparameter des Meßstoffs repräsentierender Meßwerte zu ermitteln, im Falle eines als Coriolis-Massedurchfluß-Meßgerät bzw. als Coriolis-Massedurchfluß-/Dichte-Meßgerät ausgebildeten Meßsystems beispielsweise nämlich anhand der vorbezeichneten, durch die Schwingungen des Rohrs in der Coriolismode bewirkten (Meß-)Phasendifferenz der Nutz-Signalkomponenten sowie einer in der Meßsystem-Elektronik eingerichteten Phasendifferenz-zu-Meßwert-Kennlinienfunktion den Massenstrom repräsentierende (Massenstrom-)Meßwerte zu generieren. Bei der Phasendifferenz-zu-Massenstrom-Meßwert-Kennlinienfunktion kann sich beispielsweise um eine (lineare) Parameterfunktion mit einem (Skalen-)Nullpunkt, der einer bei ruhendem Meßstoff bzw. einem Massestrom von Null meßbaren (Meß-)Phasendifferenz der Nutz-Signalkomponenten entspricht, und mit einer Steigung, die einer (Meß-)Empfindlichkeit bzw. einer auf eine Änderung des Massenstroms bezogene Änderung der (Meß-)Phasendifferenz der Nutz-Signalkomponenten entspricht, handeln. Da die Resonanzfrequenz der als Nutzmode dienlichen Schwingungsmode, wie bereits erwähnt, im besonderen auch von der momentanen Dichte des Meßstoffs abhängig ist, wird mittels eines solchen Meßsystems neben dem Massestrom zusätzlich auch die Dichte vom jeweils hindurch strömenden Meßstoff anhand der (Wechselstrom-)Frequenz des Treibersignals und/oder anhand der (Signal-)Frequenz der Nutz-Signalkomponenten der Schwingungssignale direkt gemessen werden. Dementsprechend ist die Meßsystem-Elektronik von Meßsystemen der in Rede stehenden Art typischerweise ferner auch eingerichtet, anhand der vorbezeichneten (Wechselstrom-)Frequenz des Treibersignals und/oder anhand der Signalfrequenz der vorbezeichneten Nutz-Signalkomponente wenigstens eines der Schwingungssignale die Dichte repräsentierende (Dichte-)Meßwerte zu generieren, beispielsweise unter Verwendung einer in der Meßsystem-Elektronik entsprechend eingerichteten Nutzfrequenz-zu-Meßwert-Kennlinienfunktion. Darüberhinaus ist es auch möglich, mittels vibronischer Meßsysteme der in Rede stehenden Art die Viskosität des hindurchströmenden Meßstoffs direkt zu messen, beispielsweise basierend auf einer für die Aufrechterhaltung der Nutzschwingungen erforderlichen Erregerenergie bzw. Erregerleistung und/oder basierend auf einer aus einer Dissipation von Schwingungsenergie resultierenden Dämpfung der Nutzschwingungen bzw. unter Verwendung einer in der Meßsystem-Elektronik entsprechend eingerichteten Dämpfung-zu-Meßwert-Kennlinienfunktion. Darüberhinaus können aus den vorgenannten Strömungs- und/oder Stoffparametern weitere abgeleitete Meßgrößen, wie etwa die Reynoldszahl mittels solcher vibronischer Meßsysteme ohne weiteres zu ermittelt werden.

Für den vorbezeichneten (Standard-)Fall, daß im jeweiligen Meßsystem als Nutzmode eine oder mehrere natürliche symmetrische (Biege-)Schwingungsmoden bzw. (Biege-)Schwingungsmoden von ungeradzahliger Ordnung genutzt werden (sollen) und daß pro Rohr (bzw. pro Rohrpaar) genau ein einziger Schwingungserreger vorgesehen ist, ist dieser typischerweise so positioniert und ausgerichtet, daß die vorbezeichnete Antriebs-Querschnittsfläche (nominell) im Bereich einer halben Rohrlänge, mithin bei einer jeweiligen maximalen Schwingungsamplitude jeder der vorbezeichneten symmetrischen Schwingunsgmoden bzw. einer maximalen Amplitude der dementsprechenden Nutzschwingungen, gleichwohl bei einem Schwingungsknoten von dem Rohr ebenfalls innewohnenden antisymmetrischen (Biege-)Schwingungsmoden (von geradzahliger Ordnung) verortetet ist. Auf Grund von diversen Fertigungstoleranzen bei der Meßwandler-Herstellung, beispielsweise bei der Positionierung des Schwingungserregers und/oder der Schwingungssensoren am wenigstens einen Rohr und/oder auch bei der Fertigung des wenigstens einen Rohrs selbst, ist allerdings regelmäßig davon auszugehen, daß ein so bereitgestellter Meßwandler jeweils einen Antriebsversatz, gemessen als einen kleinster Abstand zwischen der Antriebs-Querschnittsfläche des Rohrs und einer vorgegebenen, nämlich bei einer maximalen Amplitude der Schwingungsbewegungen der Nutzschwingungen verorteten Referenz-Querschnittsfläche des wenigstens einen Rohrs, aufweist, der geringfügig von Null verschieden ist. Bei einem perfekt symmetrischen Rohr entspricht die Referenz-Querschnittsfläche auch einer Symmetrieebene des Rohrs bzw. liegt eine Schnittgerade zwischen nämlicher Symmetrieebene und einer dazu orthogonalen anderen Symmetrieebenen des wenigstens einen Rohrs bzw. eine senkrecht zur Schwingungsrichtung der Schwingungsbewegungen des Rohrs in der Nutzmode stehende Hauptträgheitsachse des wenigstens einen Rohrs innerhalb der vorbezeichneten Referenz-Querschnittsfläche. Bei marktgängigen (Standard-)Meßsystemen kann der Antriebsversatz durchaus in einer Größenordnung von bis zu 5 mm bzw. 0,5% der Rohrlänge liegen, beträgt typischerweise aber zumeist weniger als 2 mm bzw. weniger als 0,2% der Rohrlänge.

Nicht zuletzt der vorbezeichnete Antriebsversatz führt u.a. auch dazu, daß auch bei nicht von Fluid durchströmtem Rohr bzw. bei einem Massestrom von Null im Rohr zusätzlich zu den Nutzschwingungen auch solche frequenzgleichen Störschwingungen des Rohrs erzwungen werden, die der Schwingungsmode zweiter Ordnung (f2-Mode), mithin der vorbezeichneten Coriolismode entsprechen. Im Ergebnis dessen können u.a. auch die Nutz-Signalkomponenten der Schwingungssignale jeweils zusätzliche (Stör-)Phasenwinkel aufweisen, derart, daß zwischen den Nutz-Signalkomponenten der Schwingungssignale zusätzlich zur jeweiligen (Meß-)Phasendifferenz auch eine dazu frequenzgleiche, vom Massenstrom unabhängige (Stör-)Phasendifferenz existiert, mithin die Schwingungssignale einen der (auf die Nutzfrequenz normierten) Phasendifferenz zwischen den Nutz-Signalkomponenten der beiden Schwingungssignale bei einem Massestrom von Null entsprechenden, nicht verschwindenden systematischen Phasen- oder auch Nullpunkt-Fehler aufweisen; dies im besonderen auch in der Weise, das der Phasenfehler auch von einem oder mehreren Stoffparametern des Meßstoffs, insb. auch dessen Viskosität, abhängig ist. Eine Kompensation des vorbezeichneten Phasenfehlers erfolgt typischerweise im Zuge einer (Naß-)Kalibrierung des jeweiligen Meßsystems, etwa mit Hilfe eines oder mehrerer vorgegebener, beispielsweise jeweils konstanter bzw. gelegentlich auch Null betragender, (Referenz-)Masseströme ein oder mehrerer möglichst stabil auf einer (Referenz-)Temperatur und/oder einem (Referenz-)Druck gehaltene Kalibrierfluide, wie z.B. Wasser oder Luft, ggf. auch Öl bei 20°C (Raumtemperatur) und 1 bar (Atmosphärendruck), die (sequentiell) jeweils durch den Meßwandler hindurch geführt werden, während das wenigstens eine Rohr jeweils in der vorbezeichneten Weise zu Nutzschwingungen angeregt wird. Anhand der Schwingungssignalen kann so eine jeweilige Referenz-Phasendifferenz, nämlich eine Differenz zwischen einem (Referenz-)Phasenwinkel der Nutz-Signalkomponente jedes der beiden Schwingungssignale beim jeweiligen Referenz-Massestrom jeweils repräsentierende (digitale) Referenz-Phasendifferenzwert ermittelt und hernach unter Verwendung der Referenz-Phasendifferenzwerte ein die (Stör-)Phasendifferenz entsprechend kompensierender (Dämpfungs-)Korrekturwert, beispielsweise mittels Ausgleichsrechnung, berechnet werden; dies beispielsweise derart, daß der (Dämpfungs-)Korrekturwert dem vorbezeichneten (Skalen-)Nullpunkt der Phasendifferenz-zu-Meßwert-Kennlinienfunktion entspricht und/oder daß im Ergebnis die Meßsystem-Elektronik mittels der Phasendifferenz-zu-Meßwert-Kennlinienfunktion anhand der jeweiligen Referenz-Phasendifferenz bzw. dem jeweiligen Referenz-Phasendifferenzwert den jeweiligen Referenz-Massestrom zumindest für eines der Kalibrierfluide, beispielsweise Wasser bei 20°C und 1 bar, repräsentierende Massestrom-Meßwerte ermittelt, die jeweils eine Meßabweichung von weniger als 0,1% nämlichen Referenz-Massestroms und/oder weniger als 0,05 kg/h aufweisen. Ein Berücksichtigung von darüberhinausgehende Abhängigkeiten der (Stör-)Phasendifferenz, etwa von den vorbezeichneten Stoffparametern des jeweiligen Kalibrierfluids, nicht zuletzt auch dessen Viskosität, erfordern weitergehende Messungen unter entsprechend variierten Referenzbedingungen. So wird beispielsweise bei den in der US-B 65 13 393, US-A 2020/0393278, US-A 20190003875 bzw. WO-A 2020/259762 gezeigten Meßsystemen wird die Abhängigkeit der (Stör-)Phasendifferenz von der Viskosität des Meßstoffs anhand von zuvor ermittelten Viskositätswerten kompensiert, beispielsweise auch Verwendung eines die Abhängigkeit des Strömungsparameters von der Viskosität aufzeigendes, durch aufwendige Einzelmessungen und Interpolationsverfahrens ermitteltes Datenfeld für (Dämpfungs-)Korrekturwerte.

Es besteht daher ein Bedarf einerseits an einer weiteren Verbesserung der Meßgenauigkeit von vibronischen Meßsystemen der in Rede stehenden Art bzw. einer Verbesserung der Robustheit bzw. Stabilität mit der die Meßwerte für den wenigstens einen Strömungsparameter im Betrieb eines solchen Meßsystems auch bei schwankenden Eigenschaften bzw. Stoffparametern des jeweiligen Meßstoffs, insb. nämlich auch dessen Viskosität, ermittelt werden können und andererseits an einer Verringerung des technischen Aufwands zur Erfassung und Berücksichtigung weiterer Abhängigkeiten der (Stör-)Phasendifferenz bei der Ermittlung der Meßwerte, nicht zuletzt auch bei der Ermittlung von (Massestrom-)Meßwerten mittels der vorbezeichneten Phasendifferenz-zu-Meßwert-Kennlinienfunktion.

Dem Rechnung tragend besteht eine Aufgabe der vorliegenden Erfindung darin, vibronische Meßsysteme der in Rede stehenden Art durch eine entsprechende Berücksichtigung des Antriebsversatzes bzw. dessen zeitlicher Änderungen hinsichtlich der erzielbaren (Meß-)Genauigkeit und Robustheit, mit der die Meßwerte damit im Betrieb ermittelt werden, weiter zu verbessern; dies nicht zuletzt auch im Falle einer erstmaligen oder auch wiederkehrenden Kalibrierung eines solchen vibronischen Meßsystems in situ, nämlich direkt vor Ort an der jeweiligen Meßstelle und/oder im Falle eines vibronischen Meßsystems mit einer vor Ort austauschbaren Rohranordnung und/oder im Falle einer Verwendung eines für konventionelle vibronische Meßsysteme etablierten (Standard-)Meßwandlers und/oder einer gleichermaßen weitgehenden Beibehaltung bewährter Technologien und Architekturen für die jeweilige Meßsystem-Elektronik. Zudem besteht eine weitere Aufgabe der Erfindung darin, ein vibronisches Meßsystem bereitzustellen, das eine Berücksichtigung des vorbezeichneten Antriebsversatzes im Betrieb bzw. bei der Kalibrierung ermöglicht und bei dem damit einhergehend ein durch den Antriebsversatz bedingter (Stör-)Phasenwinkel bzw. eine dementsprechende Querempfindlichkeit der vom Meßsystem ermittelten Meßwerte auf sich ändernden Stoffparameter des Meßstoffs verringert ist.

Zur Lösung der Aufgabe besteht die Erfindung in einem vibronischem Meßsystem, beispielsweise einem Coriolis-Massedurchfluß-Meßgerät oder Coriolis-Massedurchfluß-/Dichte-Meßgerät,

- welches, beispielsweise als In-Line-Meßgerät und/oder Meßgerät in Kompaktbauweise ausgebildete, Meßsystem dafür eingerichtet ist, wenigstens einen Strömungsparameter, beispielsweise nämlich einen Massenstrom und/oder einen Volumenstrom und/oder eine Strömungsgeschwindigkeit, eines strömenden, beispielsweise in einer Rohrleitung und/oder einer Schlauchleitung, fluiden Meßstoffs, beispielsweise eines Gases, einer Flüssigkeit oder einer Dispersion, zu messen;

- und welches Meßsystem:

  -- einen Meßwandler (vom Vibrationstyp)

    --- mit einer Rohranordnung zum Führen des strömenden Meßstoffs,
    --- mit einer Erregeranordnung zum Wandeln elektrischer Leistung in dem Anregen und Aufrechterhalten erzwungener mechanischer Schwingungen der Rohranordnung dienliche mechanische Leistung
    --- und mit einer Sensoranordnung zum Erfassen von mechanischen Schwingungen der Rohranordnung und zum Bereitstellen von jeweils Schwingungsbewegungen der Rohranordnung repräsentierenden Schwingungssignalen;

  -- sowie eine an den Meßwandlers, beispielsweise nämlich sowohl an dessen Erregeranordnung als auch an dessen Sensoranordnung und/oder mittels elektrischer Verbindungsleitungen, elektrisch angeschlossene, beispielsweise mittels wenigstens eines Mikroprozessors gebildete und/oder in einem Elektronik-Schutzgehäuse angeordnete, Meßsystem-Elektronik umfaßt, wobei die Meßsystem-Elektronik eingerichtet ist, zumindest zeitweise ein elektrisches Treibersignal in den Schwingungserreger einzuspeisen;

- wobei die Rohranordnung wenigstens ein, beispielsweise zumindest abschnittsweise gekrümmtes und/oder zumindest abschnittsweise gerades und/oder erstes, Rohr (111) aufweist,

  -- welches Rohr sich von einem ersten Rohrende bis zu einem zweiten Rohrende mit einer, beispielsweise mehr als 100 mm betragenden, Rohrlänge erstreckt und ein von einer, beispielsweise metallischen, Rohrwandung umschlossenes, sich vom ersten Rohrende bis zum zweiten Rohrende erstreckendes Lumen aufweist,
  -- und welches Rohr eingerichtet ist, zumindest in einer vom ersten Rohrende zum zweiten Rohrende weisenden Strömungsrichtung von Meßstoff durchströmt und währenddessen vibrieren gelassen zu werden,
  -- und wobei der Rohranordnung eine Vielzahl von jeweils eine zugehörige (modale) Dämpfung sowie eine davon (mit-)bestimmte zugehörige Resonanzfrequenz aufweisenden Schwingungsmoden (Eigenschwingungsformen) innewohnt, in denen das wenigstens eine Rohr jeweils ein oder mehr Schwingungsbäuche und jeweils zwei oder mehr Schwingungsknoten aufweisende (gedämpfte) Schwingungsbewegungen ausführen kann bzw. ausführt, derart,

    --- daß Schwingungsbewegungen des Rohrs in einer Grund-Schwingungsmode, nämlich einer Schwingungsmode erster Ordnung (f1-Mode), beispielsweise nämlich eine Biegeschwingungsmode erster Ordnung, genau einen Schwingungsbauch und zwei Schwingungsknoten aufweisen
    --- und daß Schwingungsbewegungen des Rohrs in einer Ober-Schwingungsmode, nämlich einer Schwingungsmode zweiter oder höherer Ordnung (f2-Mode, f3-Mode,... fx-Mode), beispielsweise nämlich eine Biegeschwingungsmode zweiter bzw. höherer Ordnung, zwei oder mehr Schwingungsbäuche und drei oder mehr Schwingungsknoten aufweisen;

- wobei die Erregeranordnung wenigstens einen, beispielsweise einzigen und/oder elektrodynamischen, Schwingungserreger aufweist,

  -- der mechanisch mit dem wenigstens einen Rohr verbunden
  -- und eingerichtet ist, elektrische Leistung mit einem zeitlich veränderlichen elektrischen Strom in mechanische Leistung zu wandeln, derart, daß an einem mittels des Schwingungserregers am damit mechanisch verbundenen Rohr gebildeten Antriebspunkt eine zeitlich veränderliche Antriebskraft auf das Rohr wirkt, beispielsweise derart, daß eine Wirklinie der Antriebskraft senkrecht zu einer Normalen einer Antriebs-Querschnittsfläche des Rohrs verläuft,

-- wobei der Schwingungserreger so positioniert und ausgerichtet ist, daß ein Antriebsversatz, nämlich ein kleinster Abstand zwischen einer von einer durch den Antriebspunkt hindurchführende gedachte Umfangslinie des Rohrs umschlossenen Antriebs-Querschnittsfläche des Rohrs und einer vorgegebenen, beispielsweise bei intaktem bzw. ursprünglichem Meßwandler ermittelten, Referenz-Querschnittsfläche des wenigstens einen Rohrs nicht mehr als 3°mm, beispielsweise weniger als 2 mm, und/oder weniger als 0,5% der Rohrlänge, beispielsweise nämlich weniger als 0,2% der Rohrlänge, beträgt, wobei ein zwischen zwei Schwingungsbäuchen von Schwingungsbewegungen des wenigstens einen Rohrs in einer (von der Schwingungsmode erster Ordnung abweichenden) Schwingungsmode (zweiter oder höherer Ordnung) gebildeter, beispielsweise (nominell) bei einer halben Rohrlänge verorteter, Schwingungsknoten nämlicher Schwingungsbewegungen innerhalb der Referenz-Querschnittsfläche liegt;

- wobei die Sensoranordnung einen, beispielsweise elektrodynamischen oder opto-elektrischen, ersten Schwingungssensor aufweist,

-- der, beispielsweise in Strömungsrichtung mehr als 10 mm und/oder mehr als ein Fünftel der Rohrlänge vom Schwingungserreger beabstandet, am Rohr positioniert, beispielsweise nämlich zumindest anteilig mit dem Rohr mechanisch verbunden, ist
-- und der eingerichtet ist, Schwingungsbewegungen des wenigstens einen Rohrs zu erfassen und in ein nämliche Schwingungsbewegungen repräsentierendes, beispielsweise elektrisches oder optisches, erstes Schwingungssignal zu wandeln, beispielsweise derart, daß das erste Schwingungssignal eine oder mehrere sinusförmige Signalkomponenten mit jeweils einer einer Schwingungsfrequenz von Schwingungsbewegungen des Rohrs entsprechenden Frequenz enthält;

- und wobei die Sensoranordnung wenigstens einen, beispielsweise elektrodynamischen oder opto-elektrischen, zweiten Schwingungssensor aufweist,

-- der, beispielsweise in Strömungsrichtung mehr als 10 mm und/oder mehr als ein Fünftel der Rohrlänge vom Schwingungserreger beabstandet und/oder der in Strömungsrichtung vom ersten Schwingungssensor beabstandet, am Rohr positioniert, beispielsweise nämlich zumindest anteilig mit dem Rohr mechanisch verbunden, ist
-- und der eingerichtet ist, Schwingungsbewegungen des wenigstens einen Rohrs zu erfassen und in ein nämliche Schwingungsbewegungen repräsentierendes, beispielsweise elektrisches oder optisches, zweites Schwingungssignal zu wandeln, beispielsweise derart, daß das zweite Schwingungssignal eine oder mehrere sinusförmige Signalkomponenten mit jeweils einer einer Schwingungsfrequenz von Schwingungsbewegungen des Rohrs entsprechenden Frequenz enthält;

- wobei die Meßsystem-Elektronik eingerichtet ist, das elektrische Treibersignal

-- sowohl zumindest zeitweise mit einem eine erste (Wechselstrom-)Frequenz und eine, beispielsweise vorgegebene und/oder veränderliche, erste (Strom-)Amplitude aufweisenden sinusförmigen ersten (Nutz-)Stromkomponente zum Anregen von ersten Nutzschwingungen, nämlich durch den (bestromten) Schwingungserreger erzwungenen mechanischen Schwingungen des wenigstens einen Rohrs mit einer ersten Nutzfrequenz, nämlich einer der ersten (Wechselstrom-)Frequenz entsprechenden (Schwingungs-)Frequenz in den Schwingungserreger einzuspeisen, derart,

--- daß die erste die (Wechselstrom-)Frequenz von einer Resonanzfrequenz einer (symmetrischen) Schwingungsmode von ungeradzahliger Ordnung, beispielsweise nämlich der Grund-Schwingungsmode (f1-Mode), um weniger als 1% nämlicher Resonanzfrequenz und/oder um weniger als 1 Hz abweicht, beispielsweise nämlich der Resonanzfrequenz der Schwingungsmode von ungeradzahliger Ordnung entspricht und/oder derart, daß die zweiten Nutzschwingungen geeignet sind, in einem mit einem von Null verschiedenen Massestrom durch das wenigstens eine Rohr strömenden Meßstoff Corioliskräfte zu bewirken, wobei die Resonanzfrequenz mit einer zugehörigen ersten modalen Dämpfung nämlicher Schwingungsmode von ungeradzahliger Ordnung korrespondiert bzw. davon abhängig ist,
--- und daß die mittels der ersten und zweiten Schwingungssensoren erzeugten ersten bzw. zweiten Schwingungssignale jeweils eine erste Nutz-Signalkomponente, nämlich einer sinusförmigen Signalkomponente mit einer der ersten Nutzfrequenz entsprechenden (Signal-)Frequenz, beispielsweise nämlich auch jeweils mit einem vom Massenstrom des durch das wenigstens eine Rohr strömenden Meßstoffs abhängigen Phasenwinkel, aufweisen,

-- als auch zumindest zeitweise mit einem eine zweite (Wechselstrom-)Frequenz und eine, beispielsweise vorgegebene und/oder veränderliche, zweite (Strom-)Amplitude aufweisenden sinusförmigen zweiten (Nutz-) Stromkomponente zum Erzeugen von zweiten Nutzschwingungen, nämlich durch den (bestromten) Schwingungserreger erzwungenen mechanischen Schwingungen des Rohrs mit einer zweiten Nutzfrequenz, nämlich einer der zweiten (Wechselstrom-)Frequenz entsprechenden (Schwingungs-)Frequenz, beispielsweise gleichzeitig mit dem ersten (Nutz-)Stromkomponente, in den Schwingungserreger einzuspeisen, derart,

--- daß die zweite (Wechselstrom-)Frequenz von einer Resonanzfrequenz einer (antisymmetrischen) Schwingungsmode von geradzahliger Ordnung, beispielsweise nämlich der Schwingungsmode zweiter Ordnung (f2-Mode), um weniger als 1%, beispielsweise um weniger als 0,1 %, nämlicher Resonanzfrequenz, und/oder um weniger als 1 Hz, beispielsweise um weniger als 0,1 Hz, abweicht, beispielsweise nämlich der Resonanzfrequenz der Schwingungsmode von geradzahliger Ordnung entspricht, wobei die Resonanzfrequenz mit einer zugehörigen zweiten modalen Dämpfung nämlicher Schwingungsmode von geradzahliger Ordnung korrespondiert bzw. davon abhängig ist,
--- und daß die mittels der ersten und zweiten Schwingungssensoren erzeugte ersten bzw. zweiten Schwingungssignale jeweils eine zweite Nutz-Signalkomponente, nämlich einer sinusförmige Signalkomponente mit einer der zweiten Nutzfrequenz entsprechenden (Signal-)Frequenz, aufweisen,

- und wobei die Meßsystem-Elektronik eingerichtet ist, anhand sowohl der ersten Nutz-Signalkomponenten, beispielsweise anhand einer Differenz zwischen einem Phasenwinkel der ersten Nutz-Signalkomponente des ersten Schwingungssignals und einem Phasenwinkel der ersten Nutz-Signalkomponente des zweiten Schwingungssignals, als auch wenigsten einer der zweiten Nutz-Signalkomponenten und/oder der zweiten (Nutz-)Stromkomponente den wenigstens einen Strömungsparameter des Meßstoffs repräsentierenden Meßwerte, beispielsweise nämlich den Massestrom des Meßstoffs repräsentierende Massestrom-Meßwerte, zu ermitteln.

Nach einer ersten Ausgestaltung der Erfindung ist ferner vorgesehen, daß die erste Nutzfrequenz von einer Resonanzfrequenz der Grund-Schwingungsmode um weniger als 1% nämlicher Resonanzfrequenz und/oder um weniger als 1 Hz abweicht, insb. nämlich der Resonanzfrequenz der Schwingungsmode erster Ordnung entspricht.

Nach einer zweiten Ausgestaltung der Erfindung ist ferner vorgesehen, daß die erste Nutzfrequenz von einer Resonanzfrequenz einer dem wenigstens einen Rohr innewohnenden Schwingungsmode dritter Ordnung, insb. nämlich eine Biegeschwingungsmode dritter Ordnung, in welcher Schwingunsgmode die Schwingungsbewegungen des Rohrs genau drei Schwingungsbäuche und zwei Schwingungsknoten aufweisen, um weniger als 1% nämlicher Resonanzfrequenz und/oder um weniger als 1 Hz abweicht, insb. nämlich der Resonanzfrequenz der Schwingungsmode dritter Ordnung entspricht; dies beispielsweise derart, daß ein erster Schwingungsknoten von Schwingungsbewegungen des wenigstens einen Rohrs in der Schwingungsmode dritter Ordnung im ersten Rohrende und ein zweiter Schwingungsknoten Schwingungsmode dritter Ordnung im zweiten Rohrende verortet ist.

Nach einer dritten Ausgestaltung der Erfindung ist ferner vorgesehen, daß die zweite Nutzfrequenz von einer Resonanzfrequenz einer dem wenigstens einen Rohr innewohnenden Schwingungsmode zweiter Ordnung (f2-Mode), insb. nämlich einer Biegeschwingungsmode zweiter Ordnung, in welcher Schwingunsgmode die Schwingungsbewegungen des Rohrs genau zwei Schwingungsbäuche und drei Schwingungsknoten aufweisen, um weniger als 1% nämlicher Resonanzfrequenz und/oder um weniger als 1 Hz abweicht, insb. nämlich der Resonanzfrequenz entspricht.

Nach einer vierten Ausgestaltung der Erfindung ist ferner vorgesehen, daß die zweite Nutzfrequenz von einer Resonanzfrequenz einer dem wenigstens einen Rohr innewohnenden Schwingungsmode zweiter Ordnung (f2-Mode), insb. nämlich einer Biegeschwingungsmode zweiter Ordnung, in welcher Schwingunsgmode die Schwingungsbewegungen des Rohrs genau zwei Schwingungsbäuche und drei Schwingungsknoten aufweisen, um weniger als 1% nämlicher Resonanzfrequenz und/oder um weniger als 1 Hz abweicht, insb. nämlich der Resonanzfrequenz entspricht und daß ein erster Schwingungsknoten von Schwingungsbewegungen des wenigstens einen Rohrs in der Schwingungsmode zweiter Ordnung im ersten Rohrende und ein zweiter Schwingungsknoten von Schwingungsbewegungen des wenigstens einen Rohrs in der Schwingungsmode zweiter Ordnung im zweiten Rohrende verortet ist.

Nach einer fünften Ausgestaltung der Erfindung ist ferner vorgesehen, daß die zweite Nutzfrequenz von einer Resonanzfrequenz einer dem wenigstens einen Rohr innewohnenden Schwingungsmode zweiter Ordnung (f2-Mode), insb. nämlich einer Biegeschwingungsmode zweiter Ordnung, in welcher Schwingunsgmode die Schwingungsbewegungen des Rohrs genau zwei Schwingungsbäuche und drei Schwingungsknoten aufweisen, um weniger als 1% nämlicher Resonanzfrequenz und/oder um weniger als 1 Hz abweicht, insb. nämlich der Resonanzfrequenz entspricht und daß ein zwischen den zwei Schwingungsbäuchen der Schwingungsbewegungen des wenigstens einen Rohrs in der Schwingungsmode zweiter Ordnung gebildeter, insb. bei einer halben Rohrlänge verorteter, Schwingungsknoten nämlicher Schwingungsbewegungen innerhalb der Referenz-Querschnittsfläche liegt.

Nach einer sechsten Ausgestaltung der Erfindung ist ferner vorgesehen, daß die zweite Nutzfrequenz von einer Resonanzfrequenz einer dem wenigstens einen Rohr innewohnenden Schwingungsmode zweiter Ordnung (f2-Mode), insb. nämlich einer Biegeschwingungsmode zweiter Ordnung, in welcher Schwingunsgmode die Schwingungsbewegungen des Rohrs genau zwei Schwingungsbäuche und drei Schwingungsknoten aufweisen, um weniger als 1% nämlicher Resonanzfrequenz und/oder um weniger als 1 Hz abweicht, insb. nämlich der Resonanzfrequenz entspricht und daß eine senkrecht zur Schwingungsrichtung der Schwingungsbewegungen des Rohrs in der Schwingungsmode zweiter Ordnung stehende Hauptträgheitsachse des wenigstens einen Rohrs innerhalb der Referenz-Querschnittsfläche des wenigstens einen Rohrs liegt.

Nach einer siebenten Ausgestaltung der Erfindung ist ferner vorgesehen, daß der Antriebsversatz einem Abstand zwischen einem Flächenschwerpunkt (Mittelpunkt) der Antriebs-Querschnittsfläche des Rohrs und einem Flächenschwerpunkt (Mittelpunkt) der Referenz-Querschnittsfläche des wenigstens einen Rohrs entspricht.

Nach einer achten Ausgestaltung der Erfindung ist ferner vorgesehen, daß eine Wirklinie der Antriebskraft senkrecht zu einer Normalen einer Antriebs-Querschnittsfläche des Rohrs verläuft.

Nach einer neunten Ausgestaltung der Erfindung ist ferner vorgesehen, daß eine Schnittgeraden zweier zueinander orthogonaler Symmetrieebenen des wenigstens einen Rohrs innerhalb der Referenz-Querschnittsfläche liegt.

Nach einer zehnten Ausgestaltung der Erfindung ist ferner vorgesehen, daß eine senkrecht zur Antriebskraft stehende Hauptträgheitsachse des wenigstens einen Rohrs innerhalb der Referenz-Querschnittsfläche des wenigstens einen Rohrs liegt.

Nach einer elften Ausgestaltung der Erfindung ist ferner vorgesehen, daß der Antriebsversatz aus einer Fertigungstoleranz bei der Herstellung der Erregeranordnung, insb. nämlich aus Toleranzen bei einer Positionierung des Schwingungserregers am wenigstens einen Rohr und/oder aus Toleranzen bei einer Positionierung der Rohranordnung innerhalb eines Wandler-Schutzgehäuses, resultiert.

Nach einer zwölften Ausgestaltung der Erfindung ist ferner vorgesehen, daß der Antriebsversatz aus einer Fertigungstoleranz bei der Herstellung der Rohranordnung, insb. nämlich der Fertigung des wenigstens einen Rohrs, resultiert.

Nach einer dreizehnten Ausgestaltung der Erfindung ist ferner vorgesehen, daß die Meßsystem-Elektronik eingerichtet ist, den zweiten Nutzstrom des Treibersignals zumindest zeitweise simultan mit dem ersten (Nutz-)Stromkomponente bereitzustellen, insb. derart, daß eine Amplitude des ersten (Nutz-)Stromkomponentes nicht kleiner als eine Amplitude des zweiten (Nutz-)Stromkomponentes eingestellt ist und/oder daß eine Amplitude des zweiten (Nutz-)Stromkomponentes auf mehr als 40 %, insb. nicht weniger als 50%, einer Amplitude des ersten (Nutz-)Stromkomponentes eingestellt ist.

Nach einer vierzehnten Ausgestaltung der Erfindung ist ferner vorgesehen, daß die Meßsystem-Elektronik eingerichtet ist, die zweite (Wechselstrom-)Frequenz in Abhängigkeit von der ersten (Wechselstrom-)Frequenz einzustellen, insb. derart, daß die zweite (Wechselstrom-)Frequenz innerhalb eines Frequenzeinstellintervall liegt, von dem eine obere Intervallgrenze und/oder eine untere Intervallgrenze und/oder eine Mittenfrequenz einem vorgegebenen Vielfachen der ersten (Wechselstrom-)Frequenz, insb. nämlich mehr als 230 % der ersten (Wechselstrom-)Frequenz und/oder weniger als 300 % der ersten (Wechselstrom-)Frequenz entsprechenden Vielfachen der ersten (Wechselstrom-)Frequenz, entspricht.

Nach einer fünfzehnten Ausgestaltung der Erfindung ist ferner vorgesehen, daß die Meßsystem-Elektronik eingerichtet ist, die ersten und zweiten (Nutz-)Ströme des Treibersignals, insb. für ein nicht weniger als zwei Schwingungsperioden des ersten (Nutz-)Stromkomponentes und/oder mehr als 10 ms andauerndes Zeitintervall, simultan in den Schwingungserreger einzuspeisen.

Nach einer sechzehnten Ausgestaltung der Erfindung ist ferner vorgesehen, daß die Meßsystem-Elektronik eingerichtet ist, während des Einspeisens des ersten (Nutz-)Stromkomponentes den zweiten (Nutz-)Stromkomponente zuzuschalten, insb. nämlich nach einem nicht weniger als zwei Schwingungsperioden des ersten (Nutz-)Stromkomponentes und/oder mehr als 1 s andauernden Zeitintervall den zweiten (Nutz-)Stromkomponente wieder abzuschalten.

Nach einer siebzehnten Ausgestaltung der Erfindung ist ferner vorgesehen, daß die Meßsystem-Elektronik eine dem Einstellen der ersten (Wechselstrom-)Frequenz dienliche, insb. digitale, erste Phasenregelschleife sowie eine dem Einstellen der zweiten (Wechselstrom-)Frequenz dienliche, insb. digitale, zweite Phasenregelschleife aufweist. Zudem kann die Meßsystem-Elektronik ferner eingerichtet sein, einen Fangbereich der zweiten Phasenregelschleife mittels wenigstens eines Ausgangssignals der ersten Phasenregelschleife, insb. einem Ausgangssignal eines Schleifenfilters der ersten Phasenregelschleife, und/oder anhand der ersten (Wechselstrom-)Frequenz einzustellen.

Nach einer achtzehnten Ausgestaltung der Erfindung ist ferner vorgesehen, daß das Meßsystem weiters ein, insb. metallisches und/oder als Wandler-Schutzgehäuse ausgebildetes, Trägergerüst umfaßt, wobei das Trägergerüst und die Rohranordnung aneinander, insb. wieder lösbar, befestigt sind, und wobei die Erregeranordnung, insb. nämlich der wenigstens eine Schwingungserreger, und/oder die Sensoranordnung, insb. nämlich die ersten und zweiten Schwingungssensoren, anteilig am Trägergerüst angebracht sind.

Nach einer neunzehnten Ausgestaltung der Erfindung ist ferner vorgesehen, daß das Meßsystem weiters ein, insb. an einem Trägergerüst bzw. einem Wandler-Schutzgehäuse des Meßwandlers befestigtes und/oder metallisches, Elektronik-Schutzgehäuse für die Meßsystem-Elektronik umfaßt.

Nach einer zwanzigsten Ausgestaltung der Erfindung ist ferner vorgesehen, daß der Meßwandler außer dem Schwingungserreger keinen weiteren Schwingungserreger aufweist, der mechanisch mit dem wenigstens einen Rohr verbunden ist.

Nach einer einundzwanzigsten Ausgestaltung der Erfindung ist ferner vorgesehen, daß die Meßsystem-Elektronik eingerichtet ist, basierend auf der ersten Nutz-Signalkomponente wenigstens eines der ersten und zweiten Schwingungssignale und/oder dem ersten (Nutz-)Stromkomponente des Treibersignals wenigstens einen, insb. digitalen, ersten Gütewert zu ermitteln, wobei der erste Gütewert ein Maß für die erste modale Dämpfung, insb. nämlich eine Güte der ersten Nutzschwingungen oder einen Dämpfungsgrad der ersten Nutzschwingungen, repräsentiert bzw. von nämlicher ersten modalen Dämpfung abhängig ist, und daß die Meßsystem-Elektronik eingerichtet ist, basierend auf der zweiten Nutz-Signalkomponente wenigstens eines der ersten und zweiten Schwingungssignale und/oder dem zweiten (Nutz-)Stromkomponente des Treibersignals wenigstens einen, insb. digitalen, zweiten Gütewert zu ermitteln, wobei der zweite Gütewert ein Maß für die zweite modale Dämpfung, insb. nämlich eine Güte der zweiten Nutzschwingungen oder einen Dämpfungsgrad der zweiten Nutzschwingungen, repräsentiert bzw. von nämlicher zweiten modalen Dämpfung abhängig ist.

Nach einer zweiundzwanzigsten Ausgestaltung der Erfindung ist ferner vorgesehen, daß die Meßsystem-Elektronik eingerichtet ist, den wenigstens einen Strömungsparameter des Meßstoffs zumindest vorläufig repräsentierenden Meßwerte, insb. nämlich den Massestrom des Meßstoffs zumindest vorläufig repräsentierende Massestrom-Meßwerte, anhand einer Meß-Phasendifferenz, nämlich einer Differenz zwischen einem Phasenwinkel der ersten Nutz-Signalkomponente des ersten Schwingungssignals und einem Phasenwinkel der ersten Nutz-Signalkomponente des zweiten Schwingungssignals zu ermitteln, und daß die Meßsystem-Elektronik eingerichtet ist, basierend auf den der ersten und zweiten Schwingungssignalen und/oder dem Treibersignal, insb. anhand wenigstens einer ersten Nutz-Signalkomponente und wenigstens einer zweiten Nutz-Signalkomponente und/oder anhand der ersten und zweiten (Nutz-)Stromkomponenten, wenigstens einen, insb. digitalen, (Dämpfungs-)Korrekturwert für die Meß-Phasendifferenz und/oder anhand nämlicher Meß-Phasendifferenz vorläufig ermittelte Meßwerte zu ermitteln.

Nach einer dreiundzwanzigsten Ausgestaltung der Erfindung ist ferner vorgesehen, daß die Meßsystem-Elektronik eingerichtet ist, den wenigstens einen Strömungsparameter des Meßstoffs zumindest vorläufig repräsentierenden Meßwerte, insb. nämlich den Massestrom des Meßstoffs zumindest vorläufig repräsentierende Massestrom-Meßwerte, anhand einer Meß-Phasendifferenz, nämlich einer Differenz zwischen einem Phasenwinkel der ersten Nutz-Signalkomponente des ersten Schwingungssignals und einem Phasenwinkel der ersten Nutz-Signalkomponente des zweiten Schwingungssignals zu ermitteln, und daß die Meßsystem-Elektronik eingerichtet ist, basierend auf den der ersten und zweiten Schwingungssignalen und/oder dem Treibersignal, insb. anhand wenigstens einer ersten Nutz-Signalkomponente und wenigstens einer zweiten Nutz-Signalkomponente und/oder anhand der ersten und zweiten (Nutz-)Stromkomponenten, wenigstens einen, insb. digitalen, (Dämpfungs-)Korrekturwert für die Meß-Phasendifferenz bzw. anhand nämlicher Meß-Phasendifferenz vorläufig ermittelte Meßwerte zu ermitteln, derart, daß der (Dämpfungs-)Korrekturwert mit den ersten und zweiten modalen Dämpfungen korrespondiert bzw. eine Funktionen nämlicher ersten und zweiten modalen Dämpfungen ist und/oder daß der (Dämpfungs-)Korrekturwert von der Meß-Phasendifferenz bzw. von anhand der Meß-Phasendifferenz vorläufig ermittelten Meßwerte abgezogen wird und/oder daß der (Dämpfungs-)Korrekturwert mit dem Antriebsversatz korrespondiert, insb. nämlich davon abhängig ist und/oder ein Maß für den Antriebsversatz ist.

Nach einer vierundzwanzigsten Ausgestaltung der Erfindung ist ferner vorgesehen, daß die Meßsystem-Elektronik eingerichtet ist, den wenigstens einen Strömungsparameter des Meßstoffs zumindest vorläufig repräsentierenden Meßwerte, insb. nämlich den Massestrom des Meßstoffs zumindest vorläufig repräsentierende Massestrom-Meßwerte, anhand einer Meß-Phasendifferenz, nämlich einer Differenz zwischen einem Phasenwinkel der ersten Nutz-Signalkomponente des ersten Schwingungssignals und einem Phasenwinkel der ersten Nutz-Signalkomponente des zweiten Schwingungssignals zu ermitteln, und daß die Meßsystem-Elektronik eingerichtet ist, basierend auf den der ersten und zweiten Schwingungssignalen und/oder dem Treibersignal, insb. anhand wenigstens einer ersten Nutz-Signalkomponente und wenigstens einer zweiten Nutz-Signalkomponente und/oder anhand der ersten und zweiten (Nutz-)Stromkomponenten, wenigstens einen, insb. digitalen, (Dämpfungs-)Korrekturwert für die Meß-Phasendifferenz und/oder anhand nämlicher Meß-Phasendifferenz vorläufig ermittelte Meßwerte zu ermitteln, derart, daß der (Dämpfungs-)Korrekturwert mit den ersten und zweiten modalen Dämpfungen korrespondiert bzw. eine Funktionen der ersten und zweiten modalen Dämpfungen ist, insb. derart, daß der (Dämpfungs-)Korrekturwert einer Funktion einer Güte (1/D2) der zweiten Nutzschwingungen bzw. eines Kehrwerts eines Dämpfungsgrads der zweiten Nutzschwingungen sowie einer zweiten Potenz eines Dämpfungsgrades der ersten Nutzschwingungen bzw. eines Kehrwerts einer Güte (1/D1) der ersten Nutzschwingungen entspricht.

Nach einer fünfundzwanzigsten Ausgestaltung der Erfindung ist ferner vorgesehen, daß die Meßsystem-Elektronik eingerichtet ist, den wenigstens einen Strömungsparameter des Meßstoffs zumindest vorläufig repräsentierenden Meßwerte, insb. nämlich den Massestrom des Meßstoffs zumindest vorläufig repräsentierende Massestrom-Meßwerte, anhand einer Meß-Phasendifferenz, nämlich einer Differenz zwischen einem Phasenwinkel der ersten Nutz-Signalkomponente des ersten Schwingungssignals und einem Phasenwinkel der ersten Nutz-Signalkomponente des zweiten Schwingungssignals zu ermitteln, und daß die Meßsystem-Elektronik eingerichtet ist, basierend auf den der ersten und zweiten Schwingungssignalen und/oder dem Treibersignal, insb. anhand wenigstens einer ersten Nutz-Signalkomponente und wenigstens einer zweiten Nutz-Signalkomponente und/oder anhand der ersten und zweiten (Nutz-)Stromkomponenten, wenigstens einen, insb. digitalen, (Dämpfungs-)Korrekturwert für die Meß-Phasendifferenz bzw. anhand nämlicher Meß-Phasendifferenz vorläufig ermittelte Meßwerte zu ermitteln, derart, daß der (Dämpfungs-)Korrekturwert einer Funktion eines Produkts einer Güte (1/D1) der ersten Nutzschwingungen und einer zweiten Potenz einer Güte (1/D2) der zweiten Nutzschwingungen bzw. eines Produkts eines Kehrwerts eines Dämpfungsgrads der ersten Nutzschwingungen und einer zweiten Potenz eines Kehrwerts eines Dämpfungsgrades der zweiten Nutzschwingungen entspricht.

Nach einer sechsundzwanzigsten Ausgestaltung der Erfindung ist ferner vorgesehen, daß die Meßsystem-Elektronik eingerichtet ist, den wenigstens einen Strömungsparameter des Meßstoffs zumindest vorläufig repräsentierenden Meßwerte, insb. nämlich den Massestrom des Meßstoffs zumindest vorläufig repräsentierende Massestrom-Meßwerte, anhand einer Meß-Phasendifferenz, nämlich einer Differenz zwischen einem Phasenwinkel der ersten Nutz-Signalkomponente des ersten Schwingungssignals und einem Phasenwinkel der ersten Nutz-Signalkomponente des zweiten Schwingungssignals zu ermitteln, und daß die Meßsystem-Elektronik eingerichtet ist, basierend auf den der ersten und zweiten Schwingungssignalen und/oder dem Treibersignal, insb. anhand wenigstens einer ersten Nutz-Signalkomponente und wenigstens einer zweiten Nutz-Signalkomponente und/oder anhand der ersten und zweiten (Nutz-)Stromkomponenten, wenigstens einen, insb. digitalen, (Dämpfungs-)Korrekturwert für die Meß-Phasendifferenz bzw. anhand nämlicher Meß-Phasendifferenz vorläufig ermittelte Meßwerte zu ermitteln, derart, daß ein Betrag des (Dämpfungs-)Korrekturwerts bei zunehmender erster modaler Dämpfung (D1) kleiner und/oder bei zunehmender zweiter modaler Dämpfung (D2) größer wird.

Nach einer siebenundzwanzigsten Ausgestaltung der Erfindung ist ferner vorgesehen, daß die Meßsystem-Elektronik eingerichtet ist, den wenigstens einen Strömungsparameter des Meßstoffs zumindest vorläufig repräsentierenden Meßwerte, insb. nämlich den Massestrom des Meßstoffs zumindest vorläufig repräsentierende Massestrom-Meßwerte, anhand einer Meß-Phasendifferenz, nämlich einer Differenz zwischen einem Phasenwinkel der ersten Nutz-Signalkomponente des ersten Schwingungssignals und einem Phasenwinkel der ersten Nutz-Signalkomponente des zweiten Schwingungssignals zu ermitteln, und daß die Meßsystem-Elektronik eingerichtet ist, basierend auf den der ersten und zweiten Schwingungssignalen und/oder dem Treibersignal, insb. anhand wenigstens einer ersten Nutz-Signalkomponente und wenigstens einer zweiten Nutz-Signalkomponente und/oder anhand der ersten und zweiten (Nutz-)Stromkomponenten, wenigstens einen, insb. digitalen, (Dämpfungs-)Korrekturwert für die Meß-Phasendifferenz bzw. anhand nämlicher Meß-Phasendifferenz vorläufig ermittelte Meßwerte zu ermitteln, derart, daß der (Dämpfungs-)Korrekturwert proportional ist zu einem Verhältnis ($D1^2$/D2) einer zweiten Potenz ($D1^2$) der ersten modalen Dämpfung (D1) zur zweiten modalen Dämpfung (D2) .

Nach einer achtundzwanzigsten Ausgestaltung der Erfindung ist ferner vorgesehen, daß die Meßsystem-Elektronik eingerichtet ist, den wenigstens einen Strömungsparameter des Meßstoffs zumindest vorläufig repräsentierenden Meßwerte, insb. nämlich den Massestrom des Meßstoffs zumindest vorläufig repräsentierende Massestrom-Meßwerte, anhand einer Meß-Phasendifferenz, nämlich einer Differenz zwischen einem Phasenwinkel der ersten Nutz-Signalkomponente des ersten Schwingungssignals und einem Phasenwinkel der ersten Nutz-Signalkomponente des zweiten Schwingungssignals zu ermitteln, und daß die Meßsystem-Elektronik eingerichtet ist, basierend auf den der ersten und zweiten Schwingungssignalen und/oder dem Treibersignal, insb. anhand wenigstens einer ersten Nutz-Signalkomponente und wenigstens einer zweiten Nutz-Signalkomponente und/oder anhand der ersten und zweiten (Nutz-)Stromkomponenten, wenigstens einen, insb. digitalen, (Dämpfungs-)Korrekturwert für die Meß-Phasendifferenz bzw. anhand nämlicher Meß-Phasendifferenz vorläufig ermittelte Meßwerte zu ermitteln, derart, daß die Meßsystem-Elektronik eingerichtet ist, den (Dämpfungs-)Korrekturwert zu speichern, insb. in einem nicht flüchtigen Datenspeicher und/oder derart, daß der (Dämpfungs-)Korrekturwert als ein Meßsystem spezifische Referenzwert abgespeichert ist und/oder in einer Meßfunktion des Meßsystems, gemäß der das Meßsystem den wenigstens einen zu messenden Strömungsparameter in die jeweiligen Meßwerte konvertiert, enthalten ist.

Nach einer neunundzwanzigsten Ausgestaltung der Erfindung ist ferner vorgesehen, daß die Meßsystem-Elektronik eingerichtet ist, den wenigstens einen Strömungsparameter des Meßstoffs zumindest vorläufig repräsentierenden Meßwerte, insb. nämlich den Massestrom des Meßstoffs zumindest vorläufig repräsentierende Massestrom-Meßwerte, anhand einer Meß-Phasendifferenz, nämlich einer Differenz zwischen einem Phasenwinkel der ersten Nutz-Signalkomponente des ersten Schwingungssignals und einem Phasenwinkel der ersten Nutz-Signalkomponente des zweiten Schwingungssignals zu ermitteln, und daß die Meßsystem-Elektronik eingerichtet ist, basierend auf den der ersten und zweiten Schwingungssignalen und/oder dem Treibersignal, insb. anhand wenigstens einer ersten Nutz-Signalkomponente und wenigstens einer zweiten Nutz-Signalkomponente und/oder anhand der ersten und zweiten (Nutz-)Stromkomponenten, wenigstens einen, insb. digitalen, (Dämpfungs-)Korrekturwert für die Meß-Phasendifferenz bzw. anhand nämlicher Meß-Phasendifferenz vorläufig ermittelte Meßwerte zu ermitteln, derart, daß die Meßsystem-Elektronik eingerichtet ist, den (Dämpfungs-)Korrekturwert mit einem vorab, insb. unter Referenzbedingungen und/oder während einer Inbetriebnahme des Meßsystems und/oder während einer (Re-)Kalibrierung des Meßsystems und/oder mit einem baugleichen anderen Meßsystem, ermittelten, insb. in der Meßsystem-Elektronik gespeicherten und/oder als Referenzwert dienlichen, initialen (Dämpfungs-)Korrekturwert zu vergleichen.

Nach einer dreißigsten Ausgestaltung der Erfindung ist ferner vorgesehen, daß die Meßsystem-Elektronik eingerichtet ist, den wenigstens einen Strömungsparameter des Meßstoffs zumindest vorläufig repräsentierenden Meßwerte, insb. nämlich den Massestrom des Meßstoffs zumindest vorläufig repräsentierende Massestrom-Meßwerte, anhand einer Meß-Phasendifferenz, nämlich einer Differenz zwischen einem Phasenwinkel der ersten Nutz-Signalkomponente des ersten Schwingungssignals und einem Phasenwinkel der ersten Nutz-Signalkomponente des zweiten Schwingungssignals zu ermitteln, und daß die Meßsystem-Elektronik eingerichtet ist, basierend auf den der ersten und zweiten Schwingungssignalen und/oder dem Treibersignal, insb. anhand wenigstens einer ersten Nutz-Signalkomponente und wenigstens einer zweiten Nutz-Signalkomponente und/oder anhand der ersten und zweiten (Nutz-)Stromkomponenten, wenigstens einen, insb. digitalen, (Dämpfungs-)Korrekturwert für die Meß-Phasendifferenz bzw. anhand nämlicher Meß-Phasendifferenz vorläufig ermittelte Meßwerte zu ermitteln, derart, daß die Meßsystem-Elektronik eingerichtet ist, den (Dämpfungs-)Korrekturwert mit wenigstens einem dafür vorgegebenen, insb. einen außerhalb einer Spezifikation liegenden Meßwandler und/oder einen unzulässig großen Antriebsversatz repräsentierenden, Schwellenwert zu vergleichen und/oder daß die Meßsystem-Elektronik eingerichtet ist, mittels der wenigstens eines der ersten und zweiten Schwingungsignale und/oder des Treibersignals, insb. unter Verwendung des (Dämpfungs-)Korrekturwerts, ein Ausmaß des Antriebsversatzes zu ermitteln und/oder eine Überprüfung des Meßsystems durchzuführen.

Nach einer einunddreißigsten Ausgestaltung der Erfindung ist ferner vorgesehen, daß die Meßsystem-Elektronik eingerichtet ist, den wenigstens einen Strömungsparameter des Meßstoffs zumindest vorläufig repräsentierenden Meßwerte, insb. nämlich den Massestrom des Meßstoffs zumindest vorläufig repräsentierende Massestrom-Meßwerte, anhand einer Meß-Phasendifferenz, nämlich einer Differenz zwischen einem Phasenwinkel der ersten Nutz-Signalkomponente des ersten Schwingungssignals und einem Phasenwinkel der ersten Nutz-Signalkomponente des zweiten Schwingungssignals zu ermitteln, und ist ferner vorgesehen, daß die Meßsystem-Elektronik eingerichtet ist, basierend auf der ersten Nutz-Signalkomponente wenigstens eines der ersten und zweiten Schwingungssignale und/oder dem ersten (Nutz-)Stromkomponente des Treibersignals wenigstens einen, insb. digitalen, ersten Gütewert zu ermitteln, wobei der erste Gütewert ein Maß für die erste modale Dämpfung, insb. nämlich eine Güte der ersten Nutzschwingungen oder einen Dämpfungsgrad der ersten Nutzschwingungen, repräsentiert bzw. von nämlicher ersten modalen Dämpfung abhängig ist, und daß die Meßsystem-Elektronik eingerichtet ist, basierend auf der zweiten Nutz-Signalkomponente wenigstens eines der ersten und zweiten Schwingungssignale und/oder dem zweiten (Nutz-)Stromkomponente des Treibersignals wenigstens einen, insb. digitalen, zweiten Gütewert zu ermitteln, wobei der zweite Gütewert ein Maß für die zweite modale Dämpfung, insb. nämlich eine Güte der zweiten Nutzschwingungen oder einen Dämpfungsgrad der zweiten Nutzschwingungen, repräsentiert bzw. von nämlicher zweiten modalen Dämpfung abhängig ist, wobei die Meßsystem-Elektronik eingerichtet ist, mittels der ersten und zweiten Gütewerte wenigstens einen, insb. digitalen, (Dämpfungs-)Korrekturwert für die Meß-Phasendifferenz bzw. anhand nämlicher Meß-Phasendifferenz vorläufig ermittelte Meßwerte zu ermitteln, beispielsweise derart, daß der (Dämpfungs-)Korrekturwert einer Funktion einer Güte $(1/D2)$ der zweiten Nutzschwingungen bzw. eines Kehrwerts eines Dämpfungsgrads der zweiten Nutzschwingungen sowie einer zweiten Potenz eines Dämpfungsgrades der ersten Nutzschwingungen bzw. eines Kehrwerts einer Güte $(1/D1)$ der ersten Nutzschwingungen entspricht.

Nach einer zweiunddreißigsten Ausgestaltung der Erfindung ist ferner vorgesehen, daß die ersten Nutz-Signalkomponenten der ersten und zweiten Schwingungssignale einer Änderung eines Massenstromes des im Rohr geführten Meßstoffs mit einer Änderung einer (Meß-)Phasendifferenz der ersten Nutz-Signalkomponenten, nämlich einer Differenz zwischen einem Phasenwinkel der ersten Nutz-Signalkomponente des ersten Schwingungssignals und einem Phasenwinkel der ersten Nutz-Signalkomponente des zweiten Schwingungssignals folgen, und daß die Meßsystem-Elektronik eingerichtet ist, anhand der (Meß-)Phasendifferenz der ersten Nutz-Signalkomponenten den Massenstrom repräsentierende Massenstrom-Meßwerte zu generieren.

Nach einer dreiunddreißigsten Ausgestaltung der Erfindung ist ferner vorgesehen, daß in der Meßsystem-Elektronik eine Phasendifferenz-zu-Meßwert-Kennlinienfunktion, gemäß der die Meßsystem-Elektronik anhand der Meß-Phasendifferenz den wenigstens einen Strömungsparameter des Meßstoffs repräsentierenden Meßwerte, insb. nämlich den Massestrom des Meßstoffs repräsentierende Massestrom-Meßwerte, ermitteln kann bzw. ermittelt, eingerichtet ist, insb. derart, daß die ersten und zweiten modalen Dämpfungen in der Phasendifferenz-zu-Massenstrom-Meßwert-Kennlinienfunktion berücksichtigt sind bzw. daß der (Dämpfungs-)Korrekturwert in der Phasendifferenz-zu-Massenstrom-Meßwert-Kennlinienfunktion enthalten ist.

Nach einer vierunddreißigsten Ausgestaltung der Erfindung ist ferner vorgesehen, daß in der Meßsystem-Elektronik eine Phasendifferenz-zu-Meßwert-Kennlinienfunktion, gemäß der die Meßsystem-Elektronik anhand der Meß-Phasendifferenz den wenigstens einen Strömungsparameter des Meßstoffs repräsentierenden Meßwerte, insb. nämlich den Massestrom des Meßstoffs repräsentierende Massestrom-Meßwerte, ermitteln kann bzw. ermittelt, eingerichtet ist, insb. derart, daß die ersten und zweiten modalen Dämpfungen in der Phasendifferenz-zu-Massenstrom-Meßwert-Kennlinienfunktion berücksichtigt sind bzw. daß der (Dämpfungs-)Korrekturwert in der Phasendifferenz-zu-Massenstrom-Meßwert-Kennlinienfunktion enthalten ist, derart daß die ersten und zweiten modale Dämpfungen in der Phasendifferenz-zu-Massenstrom-Meßwert-Kennlinienfunktion berücksichtigt sind bzw. der (Dämpfungs-)Korrekturwert in der Phasendifferenz-zu-Massenstrom-Meßwert-Kennlinienfunktion enthalten ist, insb. derart, daß in der Phasendifferenz-zu-Massenstrom-Meßwert-Kennlinienfunktion ein Produkt einer zweiten Potenz der ersten modalen Dämpfung und eines Kehrwerts der zweiten modalen Dämpfung berücksichtigt und/oder ein Produkt aus einer zweiten Potenz des Kehrwerts der Güte der ersten Nutzschwingungen und der Güte der zweiten Nutzschwingungen enthalten ist.

Nach einer fünfunddreißigsten Ausgestaltung der Erfindung ist ferner vorgesehen, daß in der Meßsystem-Elektronik eine Phasendifferenz-zu-Meßwert-Kennlinienfunktion, gemäß der die Meßsystem-Elektronik anhand der Meß-Phasendifferenz den wenigstens einen Strömungsparameter des Meßstoffs repräsentierenden Meßwerte, insb. nämlich den Massestrom des Meßstoffs repräsentierende Massestrom-Meßwerte, ermitteln kann bzw. ermittelt, eingerichtet ist, insb. derart, daß die ersten und zweiten modalen Dämpfungen in der Phasendifferenz-zu-Massenstrom-Meßwert-Kennlinienfunktion berücksichtigt sind bzw. daß der (Dämpfungs-)Korrekturwert in der Phasendifferenz-zu-Massenstrom-Meßwert-Kennlinienfunktion enthalten ist, derart daß die Meßsystem-Elektronik eingerichtet ist, mittels der wenigstens eines der ersten und zweiten Schwingungssignale und/oder des Treibersignals, insb. unter Verwendung des (Dämpfungs-)Korrekturwerts, die Phasendifferenz-zu-Meßwert-Kennlinienfunktion zu überprüfen.

Nach einer sechsunddreißigsten Ausgestaltung der Erfindung ist ferner vorgesehen, daß in der Meßsystem-Elektronik eine Phasendifferenz-zu-Meßwert-Kennlinienfunktion, gemäß der die Meßsystem-Elektronik anhand der Meß-Phasendifferenz den wenigstens einen Strömungsparameter des Meßstoffs repräsentierenden Meßwerte, insb. nämlich den Massestrom des Meßstoffs repräsentierende Massestrom-Meßwerte, ermitteln kann bzw. ermittelt, eingerichtet ist, insb. derart, daß die ersten und zweiten modalen Dämpfungen in der Phasendifferenz-zu-Massenstrom-Meßwert-Kennlinienfunktion berücksichtigt sind bzw. daß der (Dämpfungs-)Korrekturwert in der Phasendifferenz-zu-Massenstrom-Meßwert-Kennlinienfunktion enthalten ist, und daß die Meßsystem-Elektronik ferner eingerichtet ist, unter Verwendung des (Dämpfungs-)Korrekturwerts eine (Selbst-)Diagnose und/oder (Re-)Kalibrierung des Meßsystems, insb. bei in ein Rohrleitungssystem eingegliedertem Meßwandler und/oder mittels einer an den Meßwandler elektrisch angeschlossenen Meßsystem-Elektronik, durchzuführen.

Nach einer siebenunddreißigsten Ausgestaltung der Erfindung ist ferner vorgesehen, daß die Meßsystem-Elektronik eingerichtet ist, anhand wenigstens eines der ersten und zweiten Schwingungssignale einen ersten Geschwindigkeitswert, der eine erste Schwingungsgeschwindigkeit, nämlich eine Geschwindigkeit der Schwingungsbewegungen des die ersten Nutzschwingungen ausführenden wenigstens einen Rohrs repräsentiert, zu ermitteln, insb. in einem nicht flüchtigen Datenspeicher zu speichern.

Nach einer achtunddreißigsten Ausgestaltung der Erfindung ist ferner vorgesehen, daß die Meßsystem-Elektronik eingerichtet ist, wenigstens einen zweiten Geschwindigkeitswert, der eine zweite Schwingungsgeschwindigkeit, nämlich eine Geschwindigkeit der Schwingungsbewegungen des die zweiten Nutzschwingungen ausführenden wenigstens einen Rohrs repräsentiert, zu ermitteln, insb. in einem nicht flüchtigen Datenspeicher zu speichern.

Nach einer neununddreißigsten Ausgestaltung der Erfindung ist ferner vorgesehen, daß die Meßsystem-Elektronik eingerichtet ist, wenigstens einen den ersten (Nutz-)Stromkomponente, insb. eine (Strom-)Amplitude der ersten (Nutz-)Stromkomponente oder einen Effektivwert des ersten (Nutz-)Stromkomponente, repräsentierenden, insb. digitalen, ersten Strom-Meßwert zu ermitteln, insb. in einem nicht flüchtigen Datenspeicher zu speichern.

Nach einer vierzigsten Ausgestaltung der Erfindung ist ferner vorgesehen, daß die Meßsystem-Elektronik eingerichtet ist, wenigstens einen den zweiten (Nutz-)Stromkomponente, insb. eine Amplitude der zweiten (Nutz-)Stromkomponente oder einen Effektivwert der zweiten (Nutz-)Stromkomponente, repräsentierenden, insb. digitalen, zweiten Strom-Meßwert zu ermitteln, insb. in einem nicht flüchtigen Datenspeicher zu speichern.

Nach einer einundvierzigsten Ausgestaltung der Erfindung ist ferner vorgesehen, daß in der Meßsystem-Elektronik eine Phasendifferenz-zu-Meßwert-Kennlinienfunktion, gemäß der die Meßsystem-Elektronik anhand der Meß-Phasendifferenz den wenigstens einen Strömungsparameter des Meßstoffs repräsentierenden Meßwerte, insb. nämlich den Massestrom des Meßstoffs repräsentierende Massestrom-Meßwerte, ermitteln kann bzw. ermittelt, eingerichtet ist. Darüberhinaus ist die Meßsystem-Elektronik zudem eingerichtet, anhand wenigstens eines der ersten und zweiten Schwingungssignale einen ersten Geschwindigkeitswert, der eine erste Schwingungsgeschwindigkeit, nämlich eine Geschwindigkeit der Schwingungsbewegungen des die ersten Nutzschwingungen ausführenden wenigstens einen Rohrs repräsentiert, sowie wenigstens einen zweiten Geschwindigkeitswert, der eine zweite Schwingungsgeschwindigkeit, nämlich eine Geschwindigkeit der Schwingungsbewegungen des die zweiten Nutzschwingungen ausführenden wenigstens einen Rohrs repräsentiert, zu ermitteln, insb. in einem nicht flüchtigen Datenspeicher zu speichern, sowie anhand des Treibersignals wenigstens einen die erste (Nutz-)Stromkomponente, insb. eine (Strom-)Amplitude der ersten (Nutz-)Stromkomponente oder einen Effektivwert des ersten (Nutz-)Stromkomponente, repräsentierenden, insb. digitalen, ersten Strom-Meßwert sowie wenigstens einen die zweiten (Nutz-)Stromkomponente, insb. eine Amplitude der zweiten (Nutz-)Stromkomponente oder einen Effektivwert der zweiten (Nutz-)Stromkomponente, repräsentierenden, insb. digitalen, zweiten Strom-Meßwert zu ermitteln, insb. in einem nicht flüchtigen Datenspeicher zu speichern, sowie mittels der ersten und zweiten Geschwindigkeitswerte sowie der ersten und zweiten Strom-Meßwerte wenigstens einen, insb. digitalen, (Dämpfungs-)Korrekturwert für die Meß-Phasendifferenz bzw. anhand nämlicher Meß-Phasendifferenz vorläufig ermittelte Meßwerte zu ermitteln, insb. als eine Funktion der ersten Schwingungsgeschwindigkeit, einer zweiten Potenz einer (Strom-)Amplitude des zweiten (Nutz-)Stromkomponentes (eN2), eines Kehrwerts einer (Strom-)Amplitude des ersten (Nutz-)Stromkomponentes (eN1) sowie eines Kehrwerts einer zweiten Potenz der zweiten Schwingungsgeschwindigkeit.

Nach einer zweiundvierzigsten Ausgestaltung der Erfindung ist ferner vorgesehen, daß die Meßsystem-Elektronik einen nicht-flüchtigen Datenspeicher (EEPROM) aufweist, der dafür eingerichtet ist, digitale Daten, insb. nämlich den ersten Gütewert und/oder den (Dämpfungs-)Korrekturwert, vorzuhalten, insb. auch ohne eine angelegte Betriebsspannung.

Nach einer dreiundvierzigsten Ausgestaltung der Erfindung ist ferner vorgesehen, daß der Schwingungserreger mittels einer, insb. eine Luftspule und einen Anker aufweisende, Schwingspule gebildet ist.

Nach einer vierundvierzigsten Ausgestaltung der Erfindung ist ferner vorgesehen, daß jeder der ersten und zweiten Schwingungssensoren jeweils mittels einer, insb. eine Luftspule und einen Anker aufweisende, Tauchspule gebildet ist.

Nach einer fünfundvierzigsten Ausgestaltung der Erfindung ist ferner vorgesehen, daß der Schwingungserreger einen, insb. mittels eines Permanentmagneten gebildeten, magnetischen Anker sowie eine vom Magnetfeld des Ankers durchfluteten Spule, insb. nämlich eine Luftspule, aufweist; dies beispielsweise auch derart, daß der magnetische Anker unter Bildung des Antriebspunkts mechanisch mit dem wenigstens einen Rohr verbundenen ist und/oder daß die Spule elektrisch an die Meßsystem-Elektronik angeschlossen und eingerichtet ist, das Treibersignal zu empfangen und dessen erste und zweite (Nutz-)Ströme zu führen.

Nach einer sechsundvierzigsten Ausgestaltung der Erfindung ist ferner vorgesehen, daß die Meßsystem-Elektronik eingerichtet ist, einer Änderung einer Dichte des im Rohr geführten Meßstoffs mit einer Änderung der ersten (Wechselstrom-)Frequenz des Treibersignals zu folgen, und daß die Meßsystem-Elektronik eingerichtet ist, anhand der ersten (Wechselstrom-)Frequenz des Treibersignals und/oder anhand der Signalfrequenz der ersten Nutz-Signalkomponente wenigstens eines der Schwingungssignale die Dichte repräsentierende Dichte-Meßwerte zu generieren.

Nach einer siebenundvierzigsten Ausgestaltung der Erfindung ist ferner vorgesehen, daß die Meßsystem-Elektronik eingerichtet ist, das Treibersignal (e1) mit der zweiten (Nutz-)Stromkomponente (eN2) während eines, insb. mehr als 10 ms andauernden und/oder zeitlich begrenzten und/oder wiederkehrend aufgestarteten, Testintervalls mit einem eine zweite (Wechselstrom-)Frequenz aufweisenden sinusförmigen bereitzustellen; dies beispielsweise auch derart, daß das Testintervall jeweils länger als 100 ms (Millisekunde), insb. nicht weniger als 1 s (Sekunde), andauert und/oder daß die Meßsystem-Elektronik eingerichtet ist, selbsttätig, insb. zeitgesteuert, das Testintervall, insb. wiederkehrend, aufzustarten und/oder zu beenden und/oder daß die Meßsystem-Elektronik eingerichtet ist, einen oder mehrere Befehle zu empfangen und auszuführen, der das Testintervall startet.

Nach einer achtundvierzigsten Ausgestaltung der Erfindung ist ferner vorgesehen, daß die Rohrwandung aus einem Stahl, insb. einem Edelstahl, Duplexstahl oder Superduplexstahl, aus einer Titan-Legierung und/oder einer Zirconium-Legierung, insb. einem Zircaloy, und/oder einer Tantal-Legierung besteht.

Nach einer neunundvierzigsten Ausgestaltung der Erfindung ist ferner vorgesehen, daß das Rohr ein Kaliber (Rohrinnendurchmesser) aufweist, das mehr als 0,1 mm, insb. nämlich mehr als 0,5 mm, beträgt; dies beispielsweise auch derart, daß das Rohr ein Kaliber-zu-Rohrlänge-Verhältnis aufweist, das mehr als 0,08, insb. mehr als 0,1, und/oder weniger als 0,25, insb. weniger als 0,2, beträgt und/oder daß die Rohrlänge des Rohrs mehr als 200 mm, insb. mehr als 500 mm, und/oder weniger als 2000 mm, insb. weniger als 1500 mm, beträgt und/oder daß das Rohr ein Kaliber aufweist, das mehr als 10 mm, insb. nämlich mehr als 15 mm, beträgt.

Nach einer fünfzigsten Ausgestaltung der Erfindung ist ferner vorgesehen, daß die Erregeranordnung außer dem Schwingungserreger keinen weiteren mit dem Rohr verbunden Schwingungserreger aufweist.

Nach einer einundfünfzigsten Ausgestaltung der Erfindung ist ferner vorgesehen, daß der Schwingungserreger so positioniert und ausgerichtet ist, daß Antriebsversatz weniger als 0,5 mm beträgt, insb. nämlich Null ist, bzw. daß der Flächenschwerpunkt der Antriebs-Querschnittsfläche des Rohrs dem Antriebs-Referenzpunkt entspricht bzw. damit koinzidiert.

Nach einer zweiundfünfzigsten Ausgestaltung der Erfindung ist ferner vorgesehen, daß jede der Schwingungsmoden erster und zweiter Ordnung des Rohrs jeweils einen im ersten Rohrende des wenigstens einen Rohrs verorteten ersten Schwingungsknoten und einen im zweiten Rohrende des wenigstens einen Rohrs verorteten zweiten Schwingungsknoten aufweist.

Nach einer dreiundfünfzigsten Ausgestaltung der Erfindung ist ferner vorgesehen, daß das Rohr abschnittsweise, insb. kreisbogenförmig und/oder V-förmig, gekrümmt ist, insb. derart, daß das Rohr ein zentrales Scheitelbogensegment aufweist und/oder daß genau eine Haupttägheitsachse des wenigstens einen Rohrs innerhalb der Referenz-Querschnittsfläche des wenigstens einen Rohrs liegt.

Nach einer vierundfünfzigsten Ausgestaltung der Erfindung ist ferner vorgesehen, daß das Rohr abschnittsweise, insb. über die gesamte Rohrlänge, gerade ist, insb. derart, daß ein Massenschwerpunkt innerhalb der Referenz-Querschnittsfläche des wenigstens einen Rohrs liegt.

Nach einer fünfundfünfzigsten Ausgestaltung der Erfindung ist ferner vorgesehen, daß die Rohranordnung wenigstens ein, insb. zumindest abschnittsweise gekrümmtes und/oder zumindest abschnittsweise gerades und/oder zum ersten Rohr baugleiches und/oder zum ersten Rohr zumindest abschnittsweise paralleles, zweites Rohr aufweist. Diese Ausgestaltung der Erfindung weiterbildend ist ferner vorgesehen, daß der Schwingungserreger sowohl anteilig mit dem ersten Rohr als auch anteilig mit dem zweiten Rohr mechanisch verbunden ist, und/oder daß der Schwingungserreger eingerichtet ist, differenziell auf die ersten und zweiten Rohre zu wirken, insb. derart, daß die ersten und zweiten Rohre simultan Frequenz gleiche, entgegengesetzte erzwungene mechanische Schwingungen ausführen, und/oder daß der Schwingungserreger eingerichtet ist, elektrische Leistung mit einem zeitlich veränderlichen elektrischen Strom so in mechanische Leistung zu wandeln, daß an einem mittels des Schwingungserregers am damit mechanisch verbundenen zweiten Rohr gebildeten Antriebspunkt eine zeitlich veränderliche Antriebskraft auf das zweite Rohr wirkt, insb. zeitgleich und/oder entgegengesetzt zu der am mittels des Schwingungserregers am damit mechanisch verbundenen ersten Rohr gebildeten Antriebspunkt auf das erste Rohr wirkende Antriebskraft, und/oder daß der Schwingungserreger eingerichtet ist, mittels des elektrischen Treibersignals eingespeiste elektrische Leistung zeitgleich in erzwungene mechanische Schwingungen der ersten und zweiten Rohre zu wandeln, insb. derart, daß die ersten und zweiten Rohre erzwungene mechanische Schwingungen mit der ersten Nutzfrequenz und/oder mit der zweiten Nutzfrequenz simultan ausführen.

Ein Grundgedanke der Erfindung besteht darin, während des Betriebs vibronischer Meßsystemen der in Rede stehenden Art, nicht zuletzt zum Zwecke des Kompensierens von von veränderlichen Stoffparametern des jeweiligen Meßstoffs abhängige Meßfehlern, mittels des wenigstens einen (mittig des wenigstens einen Rohrs angeordneten) Schwingungserregers außer den typischerweise angeregten Nutzschwingungen gemäß einer (Biege-)Schwingungsmode von ungeradzahliger Ordnung, zumindest zeitweise auch Nutzschwingungen, beispielsweise nämlich Biegeschwingungen, gemäß einer Schwingungsmode von geradzahliger Ordnung, mithin einer solchen natürlichen Schwingungsmode des wenigstens einen Rohrs aktiv anzuregen, die (nominell) einen beim Schwingungserreger bzw. dessen unmittelbarer Nähe verorteten Schwingungsknoten aufweist, beispielsweise nämlich eine (Biege-)Schwingungsmode zweiter Ordnung (f2-Mode) und/oder eine (Biege-)Schwingungsmode vierter Ordnung (f4-Mode).

Die Erfindung beruht u.a. auch auf der überraschenden Erkenntnis, daß aufgrund des typischerweise zwar sehr geringen, gleichwohl auch bei einem ursprünglichen bzw. unversehrten Meßwandler regelmäßig von Null verschiedenen Antriebsversatzes die vorbezeichneten, der Schwingungsmode von geradzahliger Ordnung entsprechenden Nutzschwingungen bei einer aktiven Anregung auf der jeweiligen Resonanzfrequenz nämlicher Schwingungsmode, beispielsweise nämlich der Resonanzfrequenz (f2) der (Biege-)Schwingunsgmode zweiter Ordnung (f2-Mode), eine zwar eher geringe, gleichwohl regelmäßig ausreichend gut meßbare Amplitude bzw. dementsprechend auch eine gut meßbare (modale) Dämpfung aufweisen; dies im besonderen auch in dem Maße, daß basierend auf den jeweiligen modalen Dämpfungen beider angeregter Nutzschwingungen der vorbezeichnete Antriebsversatz bzw. der dadurch provozierte Einfluß eines oder mehrerer Stoffparameter des Meßstoffs auf den jeweiligen Meßfehler mit einem erfindungsgemäßen Meßsystem im Betrieb ermittelt werden kann, etwa auch im Zuge eines (Selbst-)Abgleichs des Meßsystems ("Autozero") und/oder derart, daß der Einfluß des Antriebsversatzes bei der Ermittlung der Meßwerte entsprechend berücksichtigt wird. Zudem ist auch erkannt worden, daß es auch möglich ist, basierend auf einer oder mehreren solcher aktiv angeregten (Biege-)Schwingunsgmode von geradzahliger Ordnung, beispielsweise nämlich der f2-Mode, in Kombination mit einer oder mehreren zeitnah oder auch simultan aktiv angeregter Schwingungsmoden von ungeradzahliger Ordnung, beispielsweise nämlich einer typischerweise angeregten (Biege-)Schwingunsgmode erster Ordnung (f1-Mode) oder (Biege-)Schwingunsgmode dritter Ordnung (f3-Mode) bzw. anhand des jeweiligen Treibersignals und wenigstens eines der dementsprechenden Schwingungssignale, den vorbezeichneten, in konventionellen Meßsystemen typischerweise als von einem oder mehreren Stoffparametern des Meßstoffs abhängige systematische (Meß-)Abweichung auftretenden Phasenfehler auch "on-the-fly", nämlich im laufenden Betrieb des jeweiligen Meßsystems zumindest näherungsweise in Form eines (Dämpfungs-)Korrekturwerts quantitativ zu ermitteln; dies beispielsweise auch, um im Falle einer Änderung des Phasenfehlers, etwa infolge sich ändernder Stoffparameter des Meßstoffs, nicht zuletzt auch der Viskosität, den (Dämpfungs-)Korrekturwert entsprechend nachzuführen.

Darüberhinaus ist erkannt worden, daß umgekehrt auch eine mit einer Verschiebung des vorbezeichneten, dem Schwingungserreger am nächsten liegenden Schwingungsknotens einhergehende Änderung des Antriebsversatzes während des Einsatzes des jeweiligen Meßsystems, etwa aufgrund sich ändernder geometrischer bzw. mechanischer Eigenschaften des Rohrs bzw. des damit gebildeten Meßwandlers relativ zum ursprünglichen, beispielsweise nämlich für die (Erst-)Kalibrierung des Meßsystems wirksamen Antriebsversatz dazu, daß sich u.a. auch die modalen Dämpfungen der Nutzschwingungen bei gleicher Anregung im Vergleich zur jeweils initial gemessenen Dämpfung entsprechend ändern können; dies im besonderen in der Weise, daß bei größer werdendem Antriebsversatz die modale Dämpfung der (Biege-)Schwingunsgmode von ungeradzahliger Ordnung (f1-Mode) größer bzw. die modale Dämpfung der (Biege-) Schwingunsgmode von geradzahliger Ordnung (f2-Mode) kleiner wird. Somit kann basierend auf den Nutzschwingungen gemäß der Schwingungsmode von geradzahliger Ordnung sehr einfach zusätzlich auch eine (Selbst-)Diagnose, beispielsweise im Sinne einer Überprüfen der Funktiontüchtigkeit des Meßsystems bzw. einer Verifikation des Meßsystems ("pass/fail"), durchgeführt werden. Zum Zwecke einer solchen (Selbst-)Diagnose des Meßsystems können die durch aktive Anregung von Nutzschwingungen gemäß der Schwingungsmode von geradzahliger Ordnung generierten Schwingungsantworten bzw. diese charakterisierende (System-)Parameter, ggf. auch zusammen mit den durch die Nutzschwingungen gemäß der Schwingungsmode von ungeradzahliger Ordnung generierten Schwingungsantworten, im Betrieb des Meßsystems vorteilhaft sehr einfach wiederkehrend ermittelt und mit entsprechenden Referenz-Schwingungsantworten ("Fingerabdruck") bzw. Bezugswerten dafür verglichen werden, beispielsweise derart, daß bei erhöhten bzw. ein vorgegebenes Toleranzmaß überschreitenden Abweichungen von den entsprechenden Bezugswerten das Vorliegen einer Störung des Meßsystems detektiert, ggf. auch vermeldet wird; dies vorteilhaft auch simultan zum eigentlichen Meßbetrieb ohne diesen nennenswert zu beeinflussen bzw. ohne den Meßbetrieb dafür länger andauernd unterbrechen zu müssen.

Ein weiterer Vorteil der Erfindung besteht auch darin, daß sowohl die erfindungsgemäße Kompensation bzw. Korrektur des Phasenfehlers als auch die vorbezeichnete (Selbst-)Diagnose auch unter weitgehender, ggf. auch ausschließlicher Verwendung der für konventionelle vibronischen Meßsystemen, nicht zuletzt auch für die darin bis anhin verbauten Meßwandler, bewährten Designs wie auch unter gleichermaßen weitgehender Beibehaltung bewährten Technologien und Architekturen etablierter Meßsystem-Elektroniken realisiert werden kann; beispielsweise auch derart, daß konventionelle, ggf. auch bereits installierte Meßsysteme durch ein entsprechendes Umprogrammieren der jeweiligen Meßsystem-Elektronik nachgerüstet werden.

Die Erfindung wird durch den Gegenstand des unabhängigen Anspruchs definiert. Die abhängigen Ansprüche beziehen sich auf vorteilhafte Ausführungsformen.

Die Erfindung sowie vorteilhafte Ausgestaltungen davon werden nachfolgend anhand von Ausführungsbeispielen näher erläutert, die in den Figuren der Zeichnung dargestellt sind. Gleiche bzw. gleichwirkende oder gleichartig fungierende Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet.

Im einzelnen zeigen:

Fig. 1      in einer perspektivischen Seitenansicht ein Ausführungsbeispiel eines vibronischen Meßsystems;

Fig. 2      nach Art eines Blockschaltbildes schematisch ein Ausführungsbeispiel eines für ein vibronisches Meßsystem gemäß Fig. 1 geeigneten Meßwandlers vom Vibratuionstyp und einer damit elektrisch gekoppelten Meßsystem-Elektronik;

Fig. 3      nach Art eines Blockschaltbildes schematisch ein weiteres Ausführungsbeispiel eines für ein vibronisches Meßsystem gemäß Fig. 1 geeigneten Meßwandlers vom Vibrationstyp und damit elektrisch gekoppelter Meßsystem-Elektronik;

Fig. 4a     schematisch eine Rohranordnung eines für ein vibronisches Meßsystem gemäß Fig. 1 geeigneten Meßwandlers vom Vibrationstyp mit einem zu ersten Nutzschwingungen angeregten Rohr;

Fig. 4b     schematisch bei einer Rohranordnung gemäß Fig. 4 aufgrund von Nutzschwingungen angeregte, Massenstrom abhängige Coriolisschwingungen des Rohrs;

Fig. 5      schematisch ein Diagramm von einem Rohr einer Rohranordnung gemäß Fig. 4 immanenten Schwingungsmoden erster, zweiter bzw. dritter Ordnung;

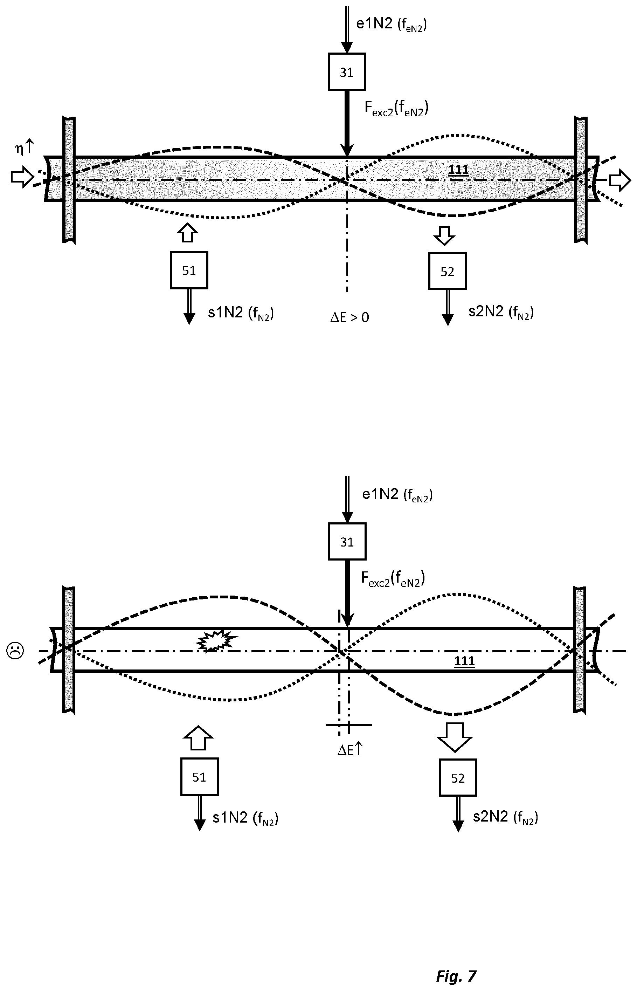

Fig. 6, 7   schematisch die Rohranordnung gemäß Fig. 4 mit zu zweiten Nutzschwingungen angeregtem Rohr;

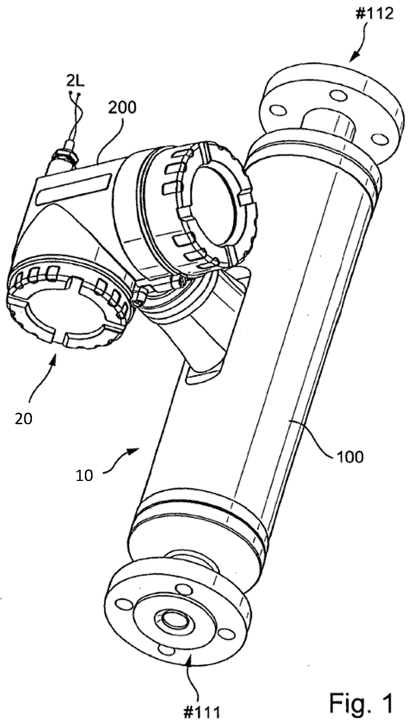

In Fig. 1 bzw. 2 und 3, sind Ausführungsbeispiele bzw. Ausgestaltungvarianten für ein dem Messen und/oder Überwachen wenigstens einer, insb. zeitlich veränderlichen, Meßgröße eines fluiden, beispielsweise zumindest zeitweise strömenden und/oder zumindest zeitweise zwei- oder mehrphasigen bzw. inhomogenen, Meßstoffs FL dienliches vibronisches Meßsystems schematisch dargestellt, wobei es sich bei der Meßgröße beispielsweise um einen Strömungsparameter, wie z.B. einem Massenstrom $\dot{m}$, einem Volumenstrom und/oder einer Strömungsgeschwindigkeit, oder beispielsweise einen Stoffparameter, wie z.B. einer Dichte $\rho$ und/oder einer Viskosität $\eta$, des Meßstoffs FL handeln kann. Das Meßsystem ist im besonderen dafür vorgesehen bzw. eingerichtet, in den Verlauf einer ein als Meßstoff dienliches Fluid FL - beispielsweise nämlich ein Gas, eine Flüssigkeit oder eine Dispersion - führenden Prozeßleitung eingegliedert und im Betrieb von dem via Prozeßleitung zu- bzw. wieder abgeführten Fluid FL zumindest zeitweise durchströmt zu werden. Zudem ist das Meßsystem dafür vorgesehen, die wenigstens ein physikalische Meßgröße (zeitlich aufeinanderfolgend) quantifizierende, ggf. auch digitale Meßwerte $X_M$ ermitteln, insb. nämlich zu berechnen und/oder auszugeben. Die Prozeßleitung kann beispielsweise Bestandteil eines, ggf. auch weitläufigen und/oder verzweigten Leitungssystems und/oder eine Rohr- oder Schlauchleitung, beispielsweise nämlich eine Rohrleitung einer Abfüllanlage bzw. einer Betankungsvorrichtung oder beispielsweise auch eine Schlauchleitung in einer biotechnologischen Anlage, sein.

Wie in Fig. 1, 2 bzw. 3 jeweils dargestellt bzw. aus deren Zusammenschau ohne weiters ersichtlich, umfaßt das Meßsystem einen Meßwandler 10 vom Vibrationstyp, nämlich einen Meßwandler mit einer mittels wenigstens eines (ersten) oder mehreren Rohren gebildete Rohranordnung zum Führen des Meßstoffs, eine Erregeranordnung (31) zum Wandeln elektrischer Leistung in dem Anregen und Aufrechterhalten erzwungener mechanischer Schwingungen des wenigsten einen Rohrs sowie eine Sensoranordnung (41, 42) zum Erfassen von mechanischen Schwingungen der Rohranordnung und zum Bereitstellen von jeweils Schwingungsbewegungen der Rohranordnung, insb. nämlich von deren einem oder mehreren Rohren, repräsentierenden, beispielsweise elektrischen oder optischen, Schwingungssignalen (s1, s2). Darüberhinaus umfaßt das Meßsystem ferner eine mit dem Meßwandler 10, nämlich sowohl mit der vorbezeichneten Erregeranordnung des Meßwandlers als auch mit der vorbezeichneten Sensoranordnung des Meßwandlers, beispielsweise nämlich mittels entsprechender elektrischer Verbindungsleitungen, elektrisch gekoppelte, insb. mittels wenigstens eines Mikroprozessors (μC) gebildete und/oder in einem Elektronik-Schutzgehäuse (200) angeordnete und/oder als Transmitter dienliche, Meßsystem-Elektronik 20 zum Ansteuern des Meßwandlers, insb. nämlich zum Bewirken der vorbezeichneten mechanischen Schwingungen des wenigstens einen Rohrs, und zum Auswerten von vom Meßwandler gelieferten Schwingungssignalen, beispielsweise nämlich zum Ermitteln der vorbezeichneten Meßwerte. Die Meßsystem-Elektronik 20 kann beispielsweise programmierbar und/oder fernparametrierbar ausgebildet, beispielsweise nämlich entsprechend mittels wenigstens einem Mikroprozessor und/oder wenigstens einem digitalen Signalprozessor (DSP) und/oder mittels eines programmierbaren Logikbausteins (FPGA) und/oder mittels eines kundenspezifisch programmierten Logikbausteins (ASIC) gebildet sein. Desweiteren kann die Meßsystem-Elektronik 20 mittels interner Energiespeicher und/oder von extern der Meßsystem-Elektronik 20 via Anschlußkabel mit der im Betrieb benötigten elektrischen Energie versorgt sein. Das elektrische Koppeln bzw. Anschließen des Meßwandlers 10 an die Meßsystem-Elektronik 20 kann mittels entsprechender elektrischer Anschlußleitungen und entsprechender Kabeldurchführungen erfolgen. Die Anschlußleitungen können dabei zumindest anteilig als elektrische, zumindest abschnittsweise in von einer elektrischen Isolierung umhüllte Leitungsdrähte ausgebildet sein, z.B. inform von "Twisted-pair"-Leitungen, Flachbandkabeln und/oder Koaxialkabeln. Alternativ oder in Ergänzung dazu können die Anschlußleitungen zumindest abschnittsweise auch mittels Leiterbahnen einer, insb. flexiblen, gegebenenfalls lackierten Leiterplatte gebildet sein.

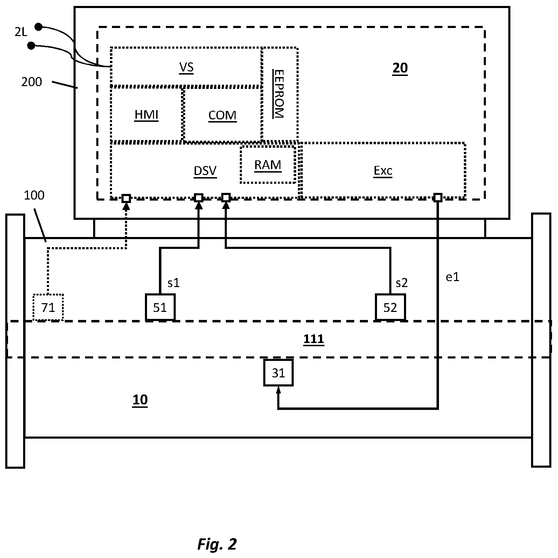

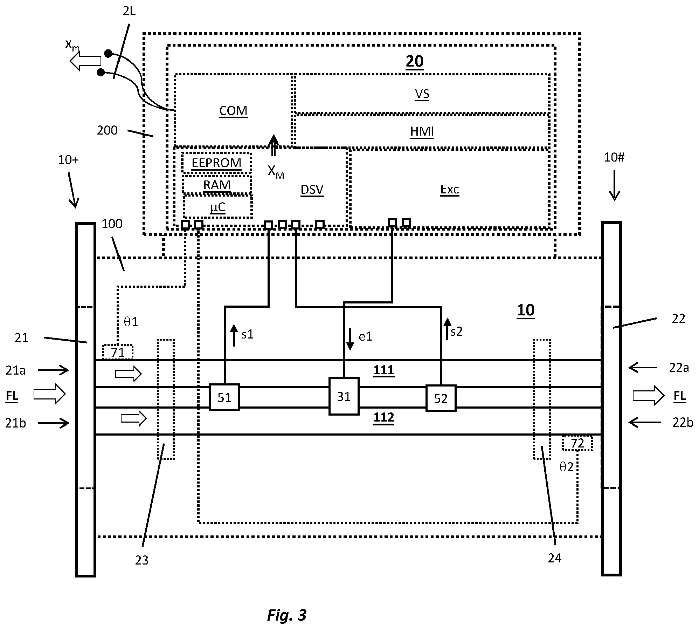

Die Meßsystem-Elektronik 20 kann zudem - wie auch in Fig. 1 schematisch dargestellt - beispielsweise in einem entsprechenden, insb. schlag- und/oder auch explosionsfest und/oder zumindest gegen Spritzwasser schützenden, eigenen Elektronik-Schutzgehäuse 200 untergebracht und zudem so ausgelegt sein, daß sie im Betrieb des Meßsystems mit einem diesem übergeordneten (hier nicht dargestellten) elektronischen (Meß-)Datenverarbeitungssystem, beispielsweise einer speicherprogrammierbaren Steuerung (SPS), einem Prozeßleitsystem (PLS), einem Fernbdienungsteminal (RTU), oder einer auf einem Personalcomputer (PC) und/oder einer Workstation ausgeführten Überwachungssteuerung und Datenerfassung (SCADA), via Datenübertragungssystem, beispielsweise einem Feldbussystem und/oder drahtlos per Funk, Meß- und/oder andere Betriebsdaten, beispielsweise auch Statusmeldungen, austauschen kann, wie etwa jeweils aktuelle Meßwerte oder der Steuerung des Meßsystems dienende Einstell- und/oder Diagnosewerte (Fig. 2 bzw. 3). Dementsprechend kann die Meßsystem-Elektronik 20 beispielsweise eine solche Sende- und Empfangsschaltung COM aufweisen, die im Betrieb von einer im vorbezeichneten Datenverarbeitungssystem vorgesehen, vom Meßsystem entfernten (zentrale) Auswerte- und Versorgungseinheit gespeist wird. Beispielsweise kann die Meßsystem-Elektronik 20 (bzw. deren vorbezeichnete Sende- und Empfangsschaltung COM zudem so ausgebildet sein, daß sie über eine, ggf. auch als 4-20 mA-Stromschleife konfigurierte Zweileiter-Verbindung 2L mit dem vorbezeichneten externen elektronischen Datenverarbeitungssystem elektrisch verbindbar ist und darüber sowohl die für den Betrieb des Meßsystems erforderliche elektrische Leistung von der vorbezeichneten Auswerte- und Versorgungseinheit des Datenverarbeitungssystems beziehen als auch, ggf. digitalisierte Meßwerte zum Datenverarbeitungssystem übermitteln kann, beispielsweise durch (Last-)Modulation eines von der Auswerte- und Versorgungseinheit gespeisten Versorgungsgleichstroms Versorgungsgleichstromes. Zudem kann die Meßsystem-Elektronik 20 auch so ausgebildet sein, daß sie nominell mit einer maximalen Leistung von 1 W oder weniger betrieben werden kann und/oder eigensicher ist. Die Meßsystem-Elektronik 20 kann zudem beispielsweise auch modular aufgebaut sein, derart, daß diverse Elektronik-Komponenten der Meßsystem-Elektronik 20, wie etwa eine, beispielsweise mittels eines oder mehrerer Mikroprozessoren und/oder mittels eines oder mehrerer digitaler Signalprozessoren gebildete, Meß- und Auswerteschaltung DSV zum Verarbeiten und Auswerten der vom Meßwandler 10 bereitgestellten Meßsignalen, nicht zuletzt den Schwingungssignalen, eine Treiberschaltung Exc zum Ansteuern des Meßwandlers 10 bzw. dessen Erregeranordnung, eine interne Energieversorgungsschaltung VS zum Bereitstellen einer oder mehrerer interner Betriebsspannungen und/oder die vorbezeichnete, der Kommunikation mit dem vorbezeichneten übergeordneten (Meß-)Datenverarbeitungssystem bzw. dem vorbezeichneten externen Feldbus dienliche Sende- und Empfangsschaltung COM, jeweils auf einer oder mehreren eigenen Leiterplatten angeordnet und/oder jeweils mittels eines oder mehreren eigenen Mikroprozessoren gebildet sind.

Wie aus der Fig. 2 bzw. 3 jeweils ersichtlich, kann die vorbezeichnete Sende- und Empfangsschaltung COM beispielsweise auch für eine der Ausgabe ($x_m$) von, beispielsweise von der vorbezeichneten Meß- und Steuerschaltung DSV, Meßsystem intern ermittelten Meßwerten ($X_m$) vorgesehen sein. Dementsprechend kann die Sende- und Empfangsschaltung COM zudem eingerichtet sein, empfangene Meßwerte $X_M$ in ein nämliche Meßwerte $X_M$ bereitstellendes, beispielsweise zu einem Industriestandard, beispielsweise nämlich der DIN IEC 60381-1:1985-11, der IEC 61784-1 CPF1 (Foundation Fieldbus), der IEC 61784-1 CPF3 (Profibus), IEC 61158 oder der IEC 61784-1 CPF9 (HART), konformes, Ausgabesignal $x_m$ zu wandeln. Zum Visualisieren von Meßsystem intern erzeugten Meßwerten ($X_M$) und/oder Meßsystem intern generierten Statusmeldungen, wie etwa eine Fehlermeldung oder einen Alarm, vor Ort kann das Meßsystem desweiteren ein, zumindest zeitweise auch mit der Meßsystem-Elektronik 20 kommunizierendes Anzeige- und Bedienelement HMI aufweisen, wie etwa ein in vorbezeichnetem Elektronik-Gehäuse 200 hinter einem darin entsprechend vorgesehenen Fenster plaziertes LCD-, OLED- oder TFT-Display sowie eine entsprechende Eingabetastatur und/oder ein Touchscreen.

Die im Betrieb des Meßsystems in der Meßsystem-Elektronik 20, beispielsweise nämlich in einem oder mehreren der vorbezeichneten Mikroprozessoren bzw. digitalen Signalprozessoren der Meßsystem-Elektronik 20, ausgeführten Programm-Codes können jeweils z.B. in einem oder mehreren nicht flüchtigen, nämliche digitale Daten auch ohne eine angelegte Betriebsspannung, vorzuhaltenden Datenspeichern (EEPROM) der Meßsystem-Elektronik 20 persistent gespeichert sein und beim Starten derselben in einen in der Meßsystem-Elektronik 20 bzw. der vorbezeichneten Meß- und Auswerteschaltung DSV vorgesehenen, z.B. im Mikroprozessor integrierten, flüchtigen Datenspeicher (RAM) geladen werden. Die Schwingungssignale s1, s2 sind für eine Verarbeitung im Mikroprozessor bzw. im digitalen Signalprozessor mittels entsprechender Analog-zu-digital-Wandler (A/D) selbstverständlich zunächst in entsprechende Digitalsignale umzuwandeln, beispielsweise nämlich indem die jeweilige Signalspannung jedes der - hier elektrischen- Schwingungssignale s1, s2 jeweils geeignete digitalisiert wird, vgl. hierzu beispielsweise die eingangs erwähnten US-B 63 11 136. Dementsprechend können in der Meßsystem-Elektronik 20, beispielsweise nämlich in der vorbezeichneten Meß- und Auswerteschaltung DSV, entsprechende Analog-zu-Digital-Wandler für die Schwingungssignale s1, s2 und/oder wenigstens ein nicht flüchtiger elektronischer Datenspeicher EEPROM vorgesehen sein, der dafür eingerichtet ist, digitale Daten, beispielsweise nämlich auch ohne eine angelegte Betriebsspannung, vorzuhalten.

Nach einer weiteren Ausgestaltung der Erfindung weist das Meßsystem ferner ein, insb. bieg- und/oder verwindungssteifes, Trägergerüst 100 auf, wobei - wie auch in Fig. 1, 2 bzw. 3 schematisch dargestellt - nämliches Trägergerüst 100 und die Rohranordnung aneinander, beispielsweise stoffschlüssig oder - wie in u.a. der eingangs erwähnten WO-A 2019/017891 gezeigt - auch wieder lösbar, befestigt sind. Zum Schutz des Meßwandlers bzw. dessen Komponenten vor schädlichen Umwelteinflüssen, zur Vermeidung von unerwünschten Schallemissionen durch die vibrierenden Rohre oder auch zum Auffangen von aus einer leckgeschlagenen Rohranordnung ausgetretenem Meßstoff kann, wie bei vibronischen Meßsystemen der in Rede stehenden Art durchaus üblich, das vorbezeichnete Trägergerüst 100 auch als ein die Rohranordnung, zusammen mit der Erreger- und Sensoranordnung umhüllendes Wandler-Schutzgehäuse ausgebildet sein, beispielsweise auch derart, daß nämliches Wandler-Schutzgehäuse metallisch ist und/oder eine Druckfestigkeit aufweist, die größer als eine größte Druckfestigkeit des wenigstens einen Rohrs der Rohranordnung ist und/oder die mehr als 50 bar beträgt. Die Erregeranordnung und/oder die Sensoranordnung können dabei auch anteilig am Trägergerüst bzw. am Wandler-Schutzgehäuse angebracht sein. Für den vorbezeichneten Fall, daß die Meßsystem-Elektronik 20 innerhalb eines Elektronik-Schutzgehäuse 200 untergebracht ist, kann letzteres, wie auch in Fig. 1, 2 und 3 jeweils schematisch dargestellt bzw. aus deren Zusammenschau ohne weiteres ersichtlich und wie bei Meßsystemen der in Rede stehenden Art durchaus üblich, beispielsweise auch am vorbezeichneten Trägergerüst bzw. außen am Wandler-Schutzgehäuse des Meßwandlers befestigt sein.

Das wenigstens einen Rohr der Rohranordnung kann zumindest abschnittsweise gerade, insb. nämlich hohlzylindrisch, und/oder zumindest abschnittsweise gekrümmt sein, beispielsweise derart, daß nämliches Rohr ein zentrales Scheitelbogensegment aufweist, insb. nämlich im wesentlichen V-förmig ausgebildet ist bzw. eine V-förmige Silhouette aufweist, und/oder daß das Rohr im Ergebnis eine in einer einzigen (Rohr-)Ebene liegende Rohrform aufweist. Wie in Fig. 2 angedeutet, erstreckt sich das wenigstens eine Rohr von einem ersten Rohrende bis zu einem zweiten Rohrende mit einer einer Länge einer gedachten Mittellinie des Rohrs entsprechenden, beispielsweise mehr als 100 mm betragenden, Rohrlänge und weist das Rohr ein von einer Rohrwandung umschlossenes, sich vom ersten Rohrende bis zum zweiten Rohrende erstreckendes Lumen auf. Nach einer weiteren Ausgestaltung der Erfindung beträgt die Rohrlänge des Rohrs mehr als 200 mm, beispielsweise auch mehr als 500 mm, und/oder weniger als 2000 mm, beispielsweise auch weniger als 1500 mm. Im Falle eines zumindest abschnittsweise gekrümmten Rohrs entspricht die vorbezeichnete Rohrlänge einer gestreckten oder abgewickelten Länge des Rohrs und kann das Rohr durch Biegen eines rohrförmigen Halbzeugs gefertigt sein. Nach einer weiteren Ausgestaltung der Erfindung besteht die Rohrwandung des wenigstens eine Rohrs aus einem Metall, beispielsweise nämlich einem Stahl, insb. einem Edelstahl, Duplexstahl oder Superduplexstahl, einer Titan-Legierung und/oder einer Zirconium-Legierung, insb. einem Zircaloy, und/oder einer Tantal-Legierung und/oder einer Nickelbasislegierung. Zudem kann das wenigstens eine Rohr der Rohranordnung einstückig ausgebildet sein, beispielsweise derart, daß das Rohr nahtlos oder (zumindest im Falle einer Rohrwandung aus Metall) mit einer einzigen geschweißten Naht hergestellt ist. Nach einer weiteren Ausgestaltung der Erfindung weist das wenigstens eine Rohr der Rohranordnung ein Kaliber (Rohrinnendurchmesser) auf, das mehr als 0,1 mm, beispielsweise nämlich auch mehr als 0,5 mm, beträgt und/oder weist die Rohrwandung des wenigstens einen Rohrs eine kleinste Wandstärke auf, die nicht weniger als 0,5 mm, beispielsweise auch mehr als 1,5 mm beträgt, dies im besonderen in der Weise, daß die Wandstärke der Rohrwandung im wesentlichen einheitlich ist. Nach einer weiteren Ausgestaltung der Erfindung weist das Rohr ein Kaliber-zu-Rohrlänge-Verhältnis auf, das mehr als 0,08, insb. mehr als 0,1, und/oder weniger als 0,25, insb. weniger als 0,2, beträgt. Das wenigstens eine Rohr bzw. jedes der Rohre der Rohranordnung kann im übrigen aber auch jedes anderer der in vibronischen konventionellen (Standard-)Meßsystemen üblichen geometrischen Formen und/oder Abmaße annehmen, beispielsweise nämlich 1 mm, 2 mm, 5 mm, 10 mm, 15 mm oder auch mehr betragen, und/oder aus weiteren dafür üblichen Materialien hergestellt sein.

Nach einer weiteren Ausgestaltung der Erfindung weist die Rohranordnung des Meßwandlers 10 - wie in Fig. 3 schematisch dargestellt - wenigstens ein zweites Rohr 112 auf. Das Rohr 112 kann zumindest abschnittsweise gekrümmtes und/oder zumindest abschnittsweise gerade sein. Zudem kann das Rohr 112 - wie in Fig. 3 angedeutete - beispielsweise auch zum Rohr 111 baugleich ausgebildet und/oder zum Rohr 111 zumindest abschnittsweise parallel angeordnet sein. Das Rohr 112 erstreckt sich gleichermaßen wie das Rohr 111 von einem ersten Rohrende bis zu einem zweiten Rohrende mit einer Rohrlänge und weist gleichermaßen wie das Rohr 111 ein von einer, beispielsweise metallischen, Rohrwandung umschlossenes, sich vom ersten Rohrende bis zum zweiten Rohrende erstreckendes Lumen auf. Zudem ist das Rohr 112 ebenfalls eingerichtet, zumindest in einer vom ersten Rohrende zum zweiten Rohrende weisenden Strömungsrichtung, insb. zeitgleich mit dem ersten Rohr, von Meßstoff bzw. einem Teilvolumen davon durchströmt und währenddessen vibrieren gelassen zu werden. Darüberhinaus kann die Rohranordnung ferner einen, hier beispielsweise als Leitungsverzweigung dienlichen und/oder einlaßseitigen, ersten Strömungsteiler 21 mit wenigstens zwei Strömungsöffnungen sowie einen, beispielsweise dem vorbezeichneten Strömungsteiler 21 baugleichen und/oder als Leitungsvereinigung dienlichen und/oder auslaßseitigen, zweiten Strömungsteiler 22 mit ebenfalls wenigstens zwei Strömungsöffnungen aufweisen und kann dann jedes der Rohre 111, 112 der Rohranordnung unter Bildung zweier fluidisch paralleler Strömungskanäle jeweils an jeden der ersten und zweiten Strömungsteiler angeschlossen sein, beispielsweise derart, daß das Rohr 111 mit dessen ersten Rohrende in eine erste Strömungsöffnung 21a des Strömungsteilers 21 und mit dessen zweiten Rohrende in eine erste Strömungsöffnung 22a des Strömungsteilers 22 mündet und daß das Rohr 112 mit dessen ersten Rohrende in eine zweite Strömungsöffnung 21b des Strömungsteilers 21 und mit dessen zweiten Rohrende in eine zweite Strömungsöffnung 22b des Strömungsteilers 22 mündet. Die Rohrlänge des Rohrs 111 kann beispielsweise gleich der Rohrlänge des Rohrs 112 sein. Desweiteren kann die Rohranordnung noch weitere Rohre, beispielsweise nämlich weitere zwei Rohre, mithin, wie u.a. auch in den eingangs erwähnten US-A 56 02 345, WO-A 96/08697, US-A 2017/0356777, WO-A 2019/081169 oder WO-A 2019/081170 gezeigt, insgesamt vier Rohre aufweisen. Dementsprechend kann sowohl der Strömungsteiler 21 als auch der Strömungsteiler 22 jeweils, insb. genau, vier Strömungsöffnungen aufweisen und kann jedes der Rohre der Rohranordnung unter Bildung von vier fluidisch parallelen Strömungspfaden jeweils an jeden der Strömungsteiler 21, 22 angeschlossen sein. Für den vorbezeichneten Fall, daß die Rohranordnung vier Rohre aufweist, können die Rohre beispielsweise auch so ausgebildet sein, daß sie lediglich paarweise baugleich sind, beispielsweise nämlich die Rohrlängen lediglich paarweise gleich groß gewählt sind. Zudem kann für den vorzeichneten Fall, daß die Rohranordnung zwei oder mehr Rohre aufweist, die Wandung jedes der Rohre - wie bei Rohranordnungen der in Rede stehenden Art bzw. damit gebildeten Meßwandlern bzw. Meßsystemen durchaus üblich - beispielsweise aus gleichem Material bestehen; dies beispielsweise auch derart, daß die Rohrwandung jedes der Rohre der Rohranordnung eine Wandstärke aufweist, die gleich einer Wandstärke des anderen Rohrs bzw. jedes der anderen Rohre ist und/oder daß jedes der Rohre der Rohranordnung ein Kaliber, nämlich einen Innendurchmesser aufweist, das gleich einem Kaliber des anderen Rohrs bzw. jedes der anderen Rohre ist.

Die Rohranordnung bzw. der damit gebildete Meßwandler MW ist, wie bereits angedeutet, im besonderen dafür vorgesehen, über ein, beispielsweise auch von einem ersten Anschlußflansch eingefaßtes, Einlaßende 10+ der Rohranordnung bzw. des Meßwandlers MW sowie ein entsprechendes, beispielsweise von einem zweiten Anschlußflansch eingefaßtes, Auslaßende 10# an die vorbezeichnete Prozeßleitung angeschlossenen und im Betrieb vom Meßstoff FL durchströmt zu werden. An jedem der vorbezeichneten Anschlußflansche kann zudem jeweils eine Dichtfläche ausgebildet sein. Für den vorbezeichneten Fall, daß die Rohranordnung wenigstens zwei Rohre sowie die zwei damit jeweils verbundene Strömungsteiler aufweist, ist das Einlaßende 10+ der Rohranordnung entsprechend mittels des Strömungsteilers 21 und das Auslaßende 10# der Rohranordnung entsprechend mittels des Strömungsteilers 22 gebildet und kann dementsprechend der Strömungsteiler 21 den vorbezeichneten ersten Anschlußflansch und der Strömungsteiler 22 den vorbezeicheten zweiten Anschlußflansch aufweisen. Zudem ist das wenigstens eine Rohr der Rohranordnung ferner dafür eingerichtet, in dessen Lumen Meßstoff FL bzw. ein Teilvolumen davon zu führen und währenddessen vibrieren gelassen zu werden, beispielsweise nämlich - insb. einen mit der wenigstens einen Meßgröße korrespondierenden Meßeffekt bewirkende und/oder mittels der Erregeranordnung angeregte - erzwungene mechanische Schwingungen um eine zughörige statische Ruhelage auszuführen; dies im besonderen in der Weise, daß das wenigstens eine Rohr der Rohranordnung vibrieren gelassenen und währenddessen ausgehend von dessen ersten Rohrende in Richtung von dessen zweiten Rohrende (Strömungsrichtung) von Meßstoff durchströmt wird. Die vorbezeichneten erzwungenen mechanischen Schwingungen können, wie bei Meßwandlern der in Rede stehenden Art durchaus üblich, zumindest anteilig erzwungene Biegeschwingungen des wenigstens einen Rohrs um eine gedachte Schwingungsachse der Rohranordnung, beispielsweise nämlich eine die ersten und zweiten Rohrenden imaginär verbindende Schwingungsachse sein.

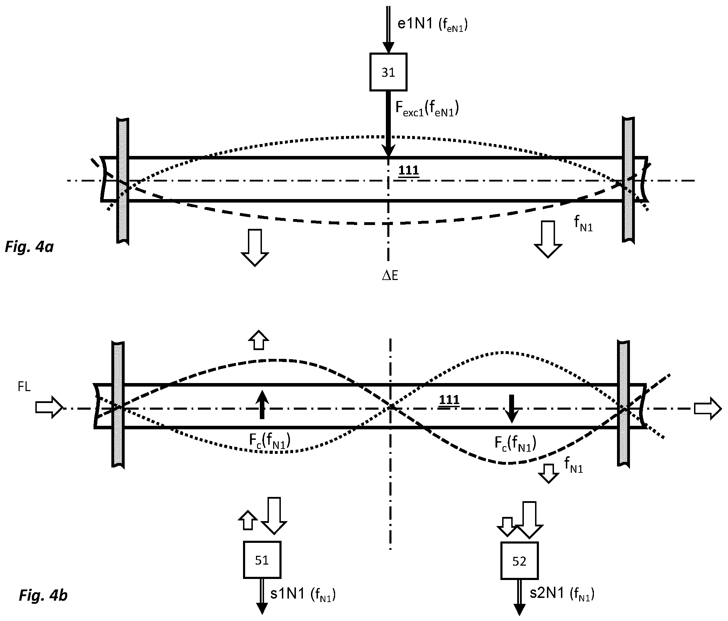

Die vorbezeichnete Erregeranordnung des Meßwandlers 10 wiederum ist im besonderen dafür vorgesehen bzw. eingerichtet, dorthin (von der Meßsystem-Elektronik 20) eingespeiste elektrische Leistung in mechanische Leistung zu wandeln, derart, daß - wie in Fig. 4a angedeutet bzw. auch aus einer Zusammenschau der Fig. 2 und 4a ohne weiters ersichtlich - das wenigstens eine Rohr 111 der Rohranordnung und/oder jedes von deren Rohren zumindest zeitweise erzwungene mechanische Schwingungen um eine jeweilige statische Ruhelage ausführt, während die Sensoranordnung dafür vorgesehen bzw. eingerichtet ist, mechanische Schwingungen der Rohranordnung, nicht zuletzt mittels der Erregeranordnung erzwungene mechanische Schwingungen und/oder Biegeschwingungen des wenigstens einen Rohrs zu erfassen und ein erstes Schwingungssignal s1 sowie ein zweites Schwingungssignal s2 bereitzustellen, von welchen - beispielsweise elektrischen - Schwingungssignalen s1, s2 jedes zumindest anteilig Schwingungsbewegungen eines oder mehrerer der Rohre der Rohranordnung repräsentiert, beispielsweise jeweils mittels einer jeweiligen, mit Schwingungsbewegungen ($X_{s1}$, $X_{s2}$) des wenigstens einen Rohrs korrespondierenden veränderlichen elektrischen Spannung.

Die Erregeranordnung des Meßsystems weist einen, beispielsweise elektrodynamischen, Schwingungserreger 31 auf, der mechanisch mit dem wenigstens einen Rohr verbunden und zudem eingerichtet ist, elektrische Leistung mit einem zeitlich veränderlichen elektrischen Strom in mechanische Leistung zu wandeln, derart, daß - wie in Fig. 2 angedeutet bzw. aus einer Zusammenschau der Fig. 2 und 4a ohne weiters ersichtlich - an einem mittels nämlichen Schwingungserregers 31 am damit mechanisch verbundenen Rohr gebildeten Antriebspunkt eine zeitlich veränderliche Antriebskraft $F_{exc1}$ auf das Rohr wirkt. Von einer durch den vorbezeichneten Antriebspunkt hindurchführenden gedachten Umfangslinie des Rohrs wird dabei eine Querschnittsfläche des Rohrs umschlossen, die im Folgenden auch als Antriebs-Querschnittsfläche des Rohrs bezeichnet ist. Die Meßsystem-Elektronik 20 wiederum ist dementsprechend u.a. auch dafür eingerichtet, den Schwingungserreger 31 zu bestromen, nämlich mittels eines einen zeitlich veränderlichen elektrischen Strom aufweisenden elektrischen Treibersignals e1 elektrische Leistung in den Schwingungserreger 31 einzuspeisen, derart, daß das wenigstens eine Rohr erzwungene mechanische Schwingungen, beispielsweise nämlich Biegeschwingungen, mit einer oder mehreren durch das Treibersignal e1 vorgegebenen Schwingungsfrequenzen ausführt. Der Schwingungserreger 31 ist nach einer weiteren Ausgestaltung der Erfindung so positioniert, daß - wie in Fig. 4a angedeutet - eine Wirklinie der vorbezeichneten Antriebskraft $F_{exc1}$ senkrecht zu einer Normalen der Antriebs-Querschnittsfläche des Rohrs verläuft. Nach einer weiteren Ausgestaltung der Erfindung ist der Schwingungserreger 31 vom elektrodynamischen Typ, nämlich mittels einer, beispielsweise eine Luftspule und einen Anker aufweisenden, Schwingspule gebildet bzw. weist der Schwingungserreger 31 einen, beispielsweise mittels eines Permanentmagneten gebildeten, magnetischen Anker sowie eine vom Magnetfeld des Ankers durchfluteten Spule, beispielsweise nämlich eine Luftspule, auf. Der magnetische Anker kann beispielsweise unter Bildung des Antriebspunkts mechanisch mit dem wenigstens einen Rohr 111 verbunden sein und/oder die Spule kann beispielsweise elektrisch an die Meßsystem-Elektronik 20 angeschlossen sein. Nach einer weiteren Ausgestaltung der Erfindung ist ferner vorgesehen, daß die Erregeranordnung, wie beispielsweise auch bei vibronischen konventionellen (Standard-)Meßsystemen üblich, außer dem Schwingungserreger 31 keinen weiteren mit dem Rohr 111 verbunden Schwingungserreger aufweist. Für den vorbezeichneten Fall, daß die Rohranordnung wenigstens zwei Rohre aufweist, kann der Schwingungserreger 31 zudem entsprechend auch eingerichtet sein, mittels des elektrischen Treibersignals e1 eingespeiste elektrische Leistung zeitgleich in erzwungene mechanische Schwingungen der ersten und zweiten Rohre 111, 112 zu wandeln; dies im besonderen in der Weise, daß der Schwingungserreger 31 differenziell auf die die beiden Rohre 111, 112 wirkt, nämlich lediglich gegengleiche Anregungskräfte in die beiden Rohre 111, 112 einleiten kann bzw. einleitet, beispielsweise derart, daß die ersten und zweiten Rohre 111, 112 simultan Frequenz gleiche, gleichwohl entgegengesetzte, insb. nämlich gegengleiche, erzwungene mechanische Schwingungen ausführen. Der Schwingungserreger 31 kann dementsprechend beispielsweise sowohl mit dem Rohr 111 als auch mit dem Rohr 112 mechanisch verbunden sein, beispielsweise nämlich derart, daß die vorbezeichnete Antriebskraft auf sowohl das Rohr 111 als auch das Rohr 112 wirkt. Zudem kann der Schwingungserreger 31 auch eingerichtet sein, elektrische Leistung mit einem zeitlich veränderlichen elektrischen Strom so in mechanische Leistung zu wandeln, daß an einem mittels des Schwingungserregers 31 am damit mechanisch verbundenen zweiten Rohr 112 gebildeten Antriebspunkt eine zeitlich veränderliche Antriebskraft auf das zweite Rohr wirkt, beispielsweise nämlich zeitgleich und/oder entgegengesetzt zu der am mittels nämlichem Schwingungserreger 31 am damit mechanisch verbundenen Rohr 111 gebildeten Antriebspunkt auf das Rohr 111 wirkende Antriebskraft. Für den vorbezeichneten Fall, daß der Schwingungserreger 31 mittels einer elektrisch an die Meßsystem-Elektronik angeschlossenen Spule gebildet ist, bedeutet bestromen des Schwingungserregers 31, daß die Spule das Treibersignal e1 empfängt, nämlich dessen Strom führt.

Die Sensoranordnung des Meßsystems wiederum weist - wie auch in Fig. 2 schematisch dargestellt - einen, insb. elektrodynamischen oder optischen, ersten Schwingungssensor 41 sowie einen, insb. elektrodynamischen oder optischen, zweiten Schwingungssensor 42 auf. Jeder der, beispielsweise auch baugleichen, Schwingungssensoren 41, 42 ist jeweils am Rohr positioniert, insb. nämlich jeweils zumindest anteilig mit dem Rohr mechanisch verbunden, und zudem dafür eingerichtet, Schwingungsbewegungen (Xs1; Xs2) des wenigstens Rohrs (punktuell) zu erfassen und in ein nämliche Schwingungsbewegungen repräsentierendes, beispielsweise elektrisches oder optisches, erstes Schwingungssignal s1 und ein zweites Schwingungssignal s2 zu wandeln; dies im besonderen in der Weise, daß jedes der ersten und zweiten Schwingungssignale (s1, s2) jeweils eine oder mehrere sinusförmige Signalkomponenten mit jeweils einer einer Schwingungsfrequenz von Schwingungsbewegungen des Rohrs entsprechenden Frequenz enthält. Nach einer weiteren Ausgestaltung der Erfindung ist ferner vorgesehen, daß jeder der Schwingungssensoren 41, 42 in Strömungsrichtung jeweils, insb. mehr als 10 mm und/oder mehr als ein Fünftel der Rohrlänge und/oder gleichweit, vom Schwingungserreger 31 beabstandet am Rohr positioniert ist; dies im besonderen, derart, daß die Schwingungssensoren 41, 42, wie auch bei konventionellen vibronischen (Standard-)Meßsystemen üblich, in Strömungsrichtung voneinander beabstandet am Rohr positioniert sind. Nach einer weiteren Ausgestaltung der Erfindung ist jeder der ersten und zweiten Schwingungssensoren 41, 42 jeweils mittels einer, beispielsweise eine Luftspule und einen Anker aufweisende, Tauchspule gebildet. Für den vorbezeichneten Fall, daß die Rohranordnung wenigstens zwei Rohre aufweist, kann jeder der Schwingungssensoren 41, 42 jeweils sowohl am ersten Rohr 111 als auch zweiten Rohr 112 positioniert, insb. nämlich sowohl anteilig mit dem ersten Rohr als auch anteilig mit dem zweiten Rohr mechanisch verbunden sein, und kann zudem jeder der Schwingungssensoren 41, 42 eingerichtet sein, Schwingungsbewegungen, insb. nämlich gegengleiche Schwingungsbewegungen, sowohl des ersten Rohrs als auch des zweiten Rohrs, insb. differenziell, zu erfassen und in das erste bzw. zweite Schwingungssignal zu wandeln, derart, daß jedes der Schwingungssignale, insb. gegengleiche, Schwingungsbewegungen der ersten und zweiten Rohre 111, 112 repräsentiert (Fig. 3); dies im besonderen auch für den vorgenannten Fall, daß es sich bei den Schwingungssensoren 41, 42 jeweils um nach Art einer Tauchspule aufgebaute elektrodynamische Schwingungssensoren handelt. Für den vorbezeichneten Fall, daß die Rohranordnung zwei Rohre aufweist, ist nach einer weiteren Ausgestaltung der Erfindung ist jeder der ersten und zweiten Schwingungssensoren sowohl am ersten Rohr als auch zweiten Rohr positioniert, beispielsweise nämlich sowohl anteilig mit dem ersten Rohr als auch anteilig mit dem zweiten Rohr mechanisch verbunden. Zudem ist jeder der ersten und zweiten Schwingungssensoren eingerichtet, Schwingungsbewegungen, beispielsweise nämlich gegengleiche Schwingungsbewegungen, sowohl des ersten Rohrs als auch des zweiten Rohrs zu erfassen und in das jeweilige erste bzw. zweite Schwingungssignal zu wandeln, derart, daß jedes der ersten und zweiten Schwingungssignale Schwingungsbewegungen der ersten und zweiten Rohre repräsentiert. Die Schwingungssensoren können im besonderen so ausgebildet sein, daß damit Schwingungsbewegungen, nicht zuletzt auch gegengleiche Schwingungsbewegungen der Rohre differenziell erfaßt werden und/oder daß jedes der ersten und zweiten Schwingungssignale jeweils gegengleiche Schwingungsbewegungen der ersten und zweiten Rohre repräsentiert.

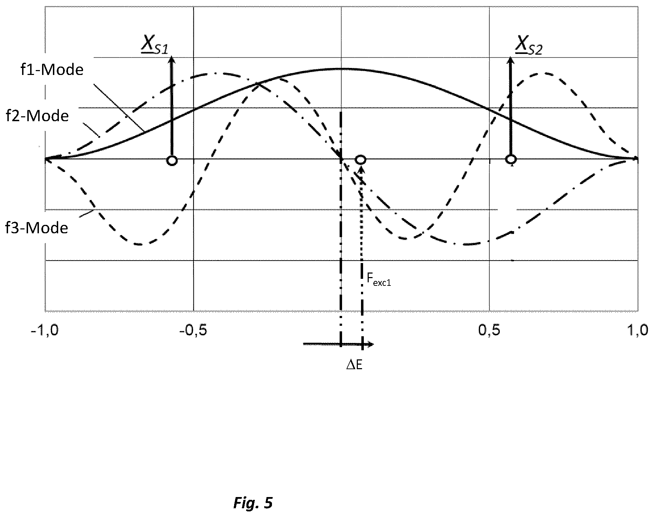

Dem wenigstens einen Rohr 111 bzw. der damit gebildeten Rohranordnung wohnt naturgemäß jeweils eine Vielzahl von jeweils eine zugehörige (modale) Dämpfung (D1, D2,..., Dx) sowie eine jeweils davon (mit-)bestimmte zugehörige Resonanzfrequenz (f1, f2, ... , fx) aufweisenden Schwingungsmoden (Eigenschwingungsformen) inne, in denen das wenigstens eine Rohr 111 jeweils ein oder mehr Schwingungsbäuche (SB) und jeweils zwei oder mehr Schwingungsknoten (SK) aufweisende Schwingungsbewegungen ausführen kann bzw. ausführt, derart, daß die Anzahl der Schwingungsknoten gegenüber der Anzahl der zugehörigen Schwingungsbäuche jeweils genau um Eins größer ist. Schwingungsbewegungen des wenigstens einen Rohrs 111 in einer Grund-Schwingungsmode, nämlich einer Schwingungsmode erster Ordnung (f1-Mode), beispielsweise nämlich einer Biegeschwingungsmode erster Ordnung, weisen - wie auch in Fig. 5 angedeutet - genau einen Schwingungsbauch und dementsprechend zwei Schwingungsknoten auf (f1-Mode: 1SB, 2SK), während Schwingungsbewegungen des Rohrs 111 in einer (von der Grund-Schwingungsmode abweichenden) Ober-Schwingungsmode, nämlich einer Schwingungsmode zweiter oder höherer Ordnung (f2-Mode, f3-Mode, f4-Mode, ... fx-Mode), beispielsweise nämlich eine Biegeschwingungsmode zweiter, dritter, vierter bzw. höherer Ordnung, dementsprechend zwei oder mehr Schwingungsbäuche und entsprechend drei oder mehr Schwingungsknoten aufweisen (f2-Mode: 2SB, 3SK, f3-Mode: 3SB, 4SK, f4-Mode: 4SB, 5SK,..., fx-Mode: x·SB, [x+1]·SK). Jede der vorbezeichneten Schwingungsmoden, mithin auch die Schwingungsmoden erster, zweiter bzw. dritter Ordnung (f1-Mode, f2-Mode, f3-Mode) weist dabei jeweils einen im ersten Rohrende des wenigstens einen Rohrs verorteten ersten Schwingungsknoten und einen im zweiten Rohrende des wenigstens einen Rohrs verorteten zweiten Schwingungsknoten auf (Fig. 5). Für den vorbezeichneten Fall, daß die Rohranordnung zwei oder mehr Rohre aufweist, kann die Rohranordnung, wie bei konventionellen vibronischen (Standard-)Meßsystemen durchaus üblich, ferner dem auch Einstellen von Schwingungseigenschaften der Rohranordnung, nicht zuletzt auch dem Abstimmen einer oder mehrerer der vorbezeichneten Resonanzfrequenzen dienliche Kopplerelemente aufweisen; dies im besonderen in der Weise, daß, wie auch in Fig. 3 angedeutet, ein, beispielsweise plattenförmiges, erstes Kopplerelement 23 mit jedem von der Rohre mechanisch verbunden und vom Strömungsteiler 22 weiter entfernt als vom Strömungsteiler 21 positioniert ist, und daß wenigstens ein, beispielsweise plattenförmiges und/oder zum Kopplerelement 23 baugleiches, zweites Kopplerelement 24 mit jedem von deren Rohren mechanisch verbunden und vom Strömungsteiler 21 weiter entfernt als vom Strömungsteiler 22 positioniert ist. Die Rohranordnung ist nach einer weiteren Ausgestaltung der Erfindung ferner so ausgebildet, daß die Resonanzfrequenz f2 der Schwingungsmode zweiter Ordnung (f2-Mode), insb. nämlich der Biegeschwingungsmode zweiter Ordnung, von der Resonanzfrequenz f1 der Grund-Schwingungsmode (f1-Mode), insb. nämlich Biegeschwingungsmode erster Ordnung, nominell, nämlich bei ursprünglichem bzw. intaktem Meßwandler, um mehr als 10% der Resonanzfrequenz f1 und/oder um mehr als 100 Hz abweicht.

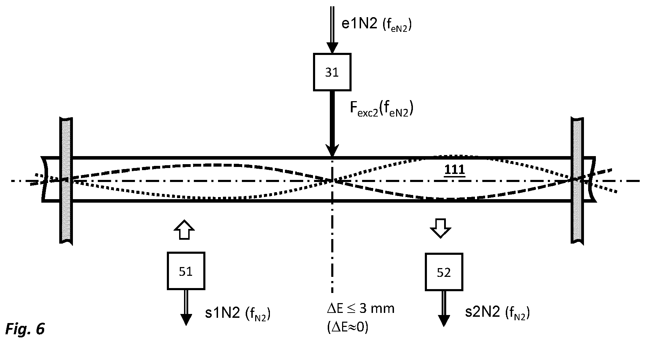

Beim erfindungsgemäßen Meßsystem ist der Schwingungserreger 31 so positioniert und ausgerichtet, daß - wie auch in Fig. 4a bzw. 6 schematisch dargestellt und u.a. auch bei herkömmlichen vibronischen (Standard-)Meßsystemen durchaus üblich - ein Antriebsversatz ∆E, nämlich ein kleinster Abstand zwischen der vorbezeichneten Antriebs-Querschnittsfläche des Rohrs 111 und einer vorgegebenen Referenz-Querschnittsfläche des wenigstens einen Rohrs nicht mehr als 3°mm und/oder weniger als 0,5% der Rohrlänge beträgt, wobei die Referenz-Querschnittsfläche wiederum so gewählt bzw. so festgelegt ist, beispielsweise nämlich bei intaktem bzw. ursprünglichem Meßwandler ermittelt ist, daß ein zwischen zwei Schwingungsbäuchen von Schwingungsbewegungen des wenigstens einen Rohrs in einer Ober-Schwingungsmode, beispielsweise nämlich der Schwingungsmode zweiter Ordnung, gebildeter und/oder (nominell) bei einer halben Rohrlänge verorteter Schwingungsknoten nämlicher Schwingungsbewegungen innerhalb der Referenz-Querschnittsfläche liegt. Der Antriebsversatz ∆E entspricht somit praktisch auch einem Abstand zwischen einem Flächenschwerpunkt (Mittelpunkt) der Antriebs-Querschnittsfläche des Rohrs und einem Flächenschwerpunkt (Mittelpunkt) der Referenz-Querschnittsfläche des wenigstens einen Rohrs. Der Antriebsversatz ∆E kann beispielsweise aus einer Fertigungstoleranz bei der Herstellung der Erregeranordnung, nicht zuletzt auch aus Toleranzen bei der Positionierung des Schwingungserregers am wenigstens einen Rohr und/oder aus Toleranzen bei einer Positionierung der Rohranordnung innerhalb eines Wandler-Schutzgehäuses, und/oder auch aus einer Fertigungstoleranz bei der Herstellung der Rohranordnung, nicht zuletzt auch der Fertigung des wenigstens einen Rohrs, resultieren. Darüberhinaus kann der Antriebsversatz ∆E auch einer zeitlichen Änderung unterliegen, etwa aufgrund von Verschleiß bedingten asymmetrischen bzw. ungleichmäßigen Änderungen mechanischer Eigenschaften der Rohranordnung. Nach einer weiteren Ausgestaltung der Erfindung ist die Referenz-Querschnittsfläche des wenigstens einen Rohrs zudem so gewählt, daß eine senkrecht zur vorbezeichneten Antriebskraft stehende Hauptträgheitsachse nämlichen Rohrs und/oder eine Schnittgeraden zweier zueinander orthogonaler Symmetrieebenen nämlichen Rohrs innerhalb der Referenz-Querschnittsfläche liegt. Zudem sind Rohranordnung und Erregeranordnung nach einer weiteren Ausgestaltung der Erfindung so ausgebildet, daß der Antriebsversatz ∆E - zumindest nominell bzw. initial, mithin bei intaktem bzw. ursprünglichem Meßwandler und wie u.a. auch bei herkömmlichen vibronischen (Standard-)Meßsystemen durchaus üblich - nur geringfügig größer als Null ist, nämlich weniger als 2 mm, beispielsweise auch weniger als 1 mm, und/oder weniger als 0,2% der Rohrlänge beträgt. Für den vorbezeichneten Fall, daß das wenigstens eine Rohr zumindest abschnittsweise gekrümmt, beispielsweise nämlich zumindest abschnittsweise kreisbogenförmig und/oder im wesentlichen V-förmig, ist, kann das wenigstens eine Rohr 111 ferner auch so ausgebildet und kann die vorbezeichneten Referenz-Querschnittsfläche so gewählt sein, daß genau eine Hauptträgheitsachse des wenigstens einen Rohrs innerhalb der Referenz-Querschnittsfläche nämlichen Rohrs liegt. Für den anderen Fall, daß das wenigstens eine Rohr über die gesamte Rohrlänge gerade ist, kann die vorbezeichneten Referenz-Querschnittsfläche wiederum so gewählt sein, daß ein Massenschwerpunkt innerhalb der Referenz-Querschnittsfläche des wenigstens einen Rohrs liegt. Nach einer weiteren Ausgestaltung der Erfindung ist die Referenz-Querschnittsfläche so gewählt, daß ein zwischen den zwei Schwingungsbäuchen der Schwingungsbewegungen des wenigstens einen Rohrs in der vorbezeichneten Schwingungsmode zweiter Ordnung, insb. nämlich der Biegeschwingungsmode zweiter Ordnung, gebildeter Schwingungsknoten nämlicher Schwingungsbewegungen und/oder eine senkrecht zur Schwingungsrichtung der Schwingungsbewegungen des Rohrs in nämlicher Schwingungsmode zweiter Ordnung stehende Hauptträgheitsachse des wenigstens einen Rohrs innerhalb der Referenz-Querschnittsfläche des wenigstens einen Rohrs liegt.

Die Meßsystem-Elektronik 20 des erfindungsgemäßen Meßsystems ist ferner im besonderen dafür eingerichtet, zumindest zeitweise, beispielsweise nämlich im normalen Meßbetrieb bzw. während eines Meßintervalls, das Treibersignal e1 mit einer eine erste (Wechselstrom-)Frequenz $f_{eN1}$ und eine, beispielsweise vorgegebene und/oder veränderliche, erste (Strom-)Amplitude aufweisende sinusförmige erste (Nutz-)Stromkomponente eN1 einzuspeisen, um dadurch in der vorbezeichneten Weise erste Nutzschwingungen, nämlich durch die (mit der Nutz-Stromkomponente eN1 bestromten) Schwingungserreger bzw. eine damit generierte erste Antriebskraft-(Komponente) $F_{exc1}$ erzwungene mechanischen Schwingungen des wenigstens einen Rohrs mit einer ersten Nutzfrequenz $f_{N1}$ nämlich einer der (Wechselstrom-)Frequenz $f_{eN1}$ ($f_{N1} = f_{eN1}$) entsprechenden (Schwingungs-)Frequenz anzuregen, und daraus resultierend die Schwingungssignale s1, s2 jeweils mit einer ersten Nutz-Signalkomponente s1N1, s2N1, nämlich jeweils einer sinusförmige Signalkomponente mit einer der ersten Nutzfrequenz $f_{N1}$ entsprechenden (Signal-)Frequenz $f_{s1N1}$ bzw. $f_{s2N1}$ ($f_{s1N1} = f_{s2N1} = f_{N1}$) bereitzustellen. Zudem ist die Meßsystem-Elektronik 20 des erfindungsgemäßen Meßsystems auch eingerichtet, zumindest zeitweise das Treibersignal e1 mit einer eine zweite (Wechselstrom-)Frequenz $f_{eN2}$ und eine, beispielsweise vorgegebene und/oder veränderliche, zweite (Strom-)Amplitude aufweisende sinusförmige zweite (Nutz-)Stromkomponente eN2 zum Erzeugen von zweiten Nutzschwingungen, nämlich durch den (bestromten) Schwingungserreger 31 bzw. eine damit generierte zweite Antriebskraft-(Komponente) $F_{exc2}$ erzwungene mechanischen Schwingungen des Rohrs mit einer zweiten Nutzfrequenz $f_{eN2}$, nämlich einer der (Wechselstrom-)Frequenz $f_{eN2}$ ($f_{N2} = f_{eN2}$) entsprechenden (Schwingungs-)Frequenz, beispielsweise auch gleichzeitig mit der (Nutz-)Stromkomponente eN1, in den Schwingungserreger 31 einzuspeisen, um dadurch zweite Nutzschwingungen, nämlich durch den (mit der (Nutz-)Stromkomponente eN2 bestromten) Schwingungserreger bzw. eine damit generierte zweite Antriebskraft-(Komponente) $F_{exc2}$ erzwungene mechanischen Schwingungen des wenigstens einen Rohrs mit einer zweiten Nutzfrequenz $f_{N2}$ nämlich einer der (Wechselstrom-)Frequenz $f_{eN1}$ ($f_{N1} = f_{eN1}$) entsprechenden (Schwingungs-)Frequenz anzuregen, und daraus resultierend die Schwingungssignale s1, s2 jeweils mit einer zweiten Nutz-Signalkomponente s1N2, s2N2, nämlich jeweils einer sinusförmige Signalkomponente mit einer der zweiten Nutzfrequenz $f_{N2}$ entsprechenden (Signal-)Frequenz $f_{s1N2}$ bzw. $f_{s2N2}$ ($f_{s1N2} = f_{s2N2} = f_{N2}$) bereitzustellen. Zum Generieren des Treibersignals e1 kann die Meßsystem-Elektronik 20 - wie bei derartigen Meßsystemen durchaus üblich - eine entsprechende, beispielsweise mittels einer oder mehreren dem Ermitteln jeweils einer Resonanzfrequenz bzw. dem Einstellen der momentan benötigten (Wechselstrom-)Frequenz dienlichen Phasenregelschleifen (PLL - phase locked loop) gebildete, Treiberschaltungen Exc aufweisen. Zudem kann die Meßsystem-Elektronik 20 ferner eingerichtet sein, einen Fangbereich einer die zweite (Wechselstrom-)Frequenz justierenden Phasenregelschleife (PLL2) anhand der ersten (Wechselstrom-)Frequenz $f_{eN1}$ bzw. mittels wenigstens eines Ausgangssignals einer nämliche (Wechselstrom-)Frequenz $f_{eN1}$ justierenden Phasenregelschleife (PLL1), beispielsweise nämlich einem Ausgangssignal eines Schleifenfilters nämlicher Phasenregelschleife (PLL1), einzustellen. Desweiteren kann die Meßsystem-Elektronik 20 vorteilhaft auch eingerichtet sein, die ersten und zweiten (Nutz-) Stromkomponenten zumindest zeitweise simultan in den Schwingungserreger 31 einzuspeisen, beispielsweise für ein nicht weniger als zwei Schwingungsperioden des ersten (Nutz-)Stromkomponente und/oder mehr als 10 ms (Millisekunden) andauerndes Zeitintervall; dies beispielsweis derart, daß die Meßsystem-Elektronik (20) eingerichtet ist, während des Einspeisens der (Nutz-)Stromkomponente eN1 die (Nutz-)Stromkomponente e1N2 zuzuschalten bzw. nach einem nicht weniger als zwei Schwingungsperioden des (Nutz-)Stromkomponente e1N1 und/oder mehr als 1 s andauernden Zeitintervall die (Nutz-)Stromkomponente e1N2 wieder abzuschalten, und/oder auch derart, daß die erste (Strom-)Amplitude der (Nutz-)Stromkomponente e1N1 nicht kleiner als die zweite (Strom-)Amplitude der (Nutz-)Stromkomponente e1N2 eingestellt ist und/oder daß die zweite (Strom-)Amplitude zumindest vorübergehend auf mehr als 40 %, beispielsweise nicht weniger als 50%, der ersten (Strom-)Amplitude eingestellt ist.

Die Meßsystem-Elektronik 20 des erfindungsgemäßen Meßsystems ist ferner eingerichtet, die (Wechselstrom-)Frequenzen $f_{eN1}$, $f_{eN2}$ so einzustellen, daß die (Wechselstrom-)Frequenzen $f_{eN1}$ von einer Resonanzfrequenz $f_{2n+1}$ (n=0; 1; 2;... → f1; f3; ..) einer symmetrischen Schwingungsmode, mithin einer Schwingungsmode von ungeradzahliger Ordnung, insb. nämlich der vorbezeichneten Grund-Schwingungsmode (f1-Mode), um weniger als 1% nämlicher Resonanzfrequenz $f_{2n+1}$ und/oder um weniger als 1 Hz abweicht, und daß die (Wechselstrom-)Frequenzen $f_{eN2}$ von einer Resonanzfrequenz $f_{2n+2}$ (n=0; 1; 2;... → f2; f4; ..) einer antisymmetrischen Schwingungsmode, mithin einer Schwingungsmode von geradzahliger Ordnung, insb. nämlich der vorbezeichneten Schwingungsmode zweiter Ordnung (f2-Mode), um weniger als 1% nämlicher Resonanzfrequenz $f_{2n+2}$ (f2; f4) und/oder um weniger als 1 Hz abweicht; dies beispielsweise derart, daß die (Wechselstrom-)Frequenz $f_{eN1}$ der Resonanzfrequenz $f_{2n+1}$ der angeregten Schwingungsmode von ungeradzahliger Ordnung und/oder die (Wechselstrom-)Frequenz $f_{eN2}$ der Resonanzfrequenz $f_{2n+2}$ der angeregten Schwingungsmode von geradzahliger Ordnung entsprechen und/oder derart, daß die ersten Nutzschwingungen geeignet sind, in einem mit einem von Null verschiedenen Massestrom durch das wenigstens eine Rohr strömenden Meßstoff Corioliskräfte $F_c$ zu bewirken und die Nutz-Signalkomponente s1N1, s2N1 jeweils einen vom Massenstrom abhängigen Phasenwinkel aufweisen bzw. einer Änderung des Massenstrom mit einer Änderung einer (Meß-)Phasendifferenz $\Delta\varphi 12$, nämlich einer Änderung einer Differenz zwischen dem Phasenwinkel der Nutz-Signalkomponente s1N1 und einem Phasenwinkel Nutz-Signalkomponente s2N1 folgen, und/oder in der Weise, daß das Treibersignal e1, mithin die Schwingungssignale s1, s2 einer Änderung einer Dichte des in der Rohranordnung geführten Meßstoffs jeweils mit einer Änderung der (Wechselstrom-)Frequenz $f_{eN1}$, $f_{eN2}$ wenigstens einer der Nutz-Stromkomponenten eN1, eN2 bzw. der (Signal-)Frequenz der jeweiligen Nutz-Signalkomponente folgen. Die vorbezeichnete Resonanzfrequenz $f_{2n+1}$, mithin die (Wechselstrom-)Frequenz $f_{eN1}$ korrespondiert mit einer zugehörigen ersten modalen Dämpfung D1, nämlich einer Dämpfung der (angeregten) Schwingungsmode von ungeradzahliger Ordnung bzw. der ersten Nutzschwingungen bzw. ist davon abhängig und die Resonanzfrequenz $f_{2n+2}$, mithin die (Wechselstrom-) Frequenz $f_{eN2}$ korrespondierte mit einer zugehörigen zweiten modalen Dämpfung D2, nämlich einer Dämpfung der (angeregten) Schwingungsmode von geradzahliger Ordnung bzw. den zweiten Nutzschwingungen korrespondiert bzw. ist davon abhängig. Die (Wechselstrom-)Frequenz $f_{eN1}$ der Nutz-Stromkomponenten eN1, mithin die erste Nutzfrequenz $f_{N1}$ kann beispielsweise einer meßbar auch von der Dichte des in der Rohranordnung geführten Meßstoffs FL abhängigen Resonanzfrequenz der Rohranordnung - beispielsweise nämlich einer niedrigsten Resonanzfrequenz des Rohrs 111 bzw. der Resonanzfrequenz f1 der Grund-Schwingungsmode (f1-Mode) - und die vorbezeichnete (Wechselstrom-) Frequenz $f_{eN2}$ der Nutz-Stromkomponenten eN2, mithin die zweite Nutzfrequenz $f_{N2}$ kann beispielsweise der Resonanzfrequenz f2 Schwingungsmode zweiter Ordnung (f2-Mode) entsprechen. Dementsprechend ist Meßsystem-Elektronik 20 nach einer weiteren Ausgestaltung der Erfindung ferner eingerichtet, die (Wechselstrom-)Frequenz $f_{eN1}$ so einzustellen, daß diese bzw. die Nutzfrequenz $f_{N1}$ von der Resonanzfrequenz f1 der Grund-Schwingungsmode um weniger als 1% nämlicher Resonanzfrequenz f1 ($|f1 - f_{N1}| < 0{,}01\,f1$) und/oder um weniger als 1 Hz ($|f1 - f_{N1}| < 1$ Hz) abweicht bzw. der Resonanzfrequenz f1 der Grund-Schwingungsmode (f1-Mode) entspricht, und daß im Ergebnis die Schwingungsbewegungen der ersten Nutzschwingungen denen der Grund-Schwingungsmode (f1-Mode) des wenigstens einen Rohrs 111 entsprechen. Alternativ dazu kann die Meßsystem-Elektronik beispielsweise auch dafür eingerichtet sein , die erste (Wechselstrom-)Frequenz $f_{eN1}$ so einzustellen, daß nämliche (Wechselstrom-)Frequenz $f_{eN1}$ bzw. die Nutzfrequenz $f_{N1}$ von einer Resonanzfrequenz f3 der Schwingungsmode dritter Ordnung (f3-Mode) um weniger als 1% nämlicher Resonanzfrequenz f3 ($| f3 - f_{N1} | < 0{,}01\, f3$) und/oder um weniger als 1 Hz ($| f3 - f_{N1} | < 1$ Hz) abweicht, beispielsweise nämlich der Resonanzfrequenz f3 der Schwingungsmode dritter Ordnung (f3-Mode) entspricht, bzw. daß im Ergebnis die Schwingungsbewegungen der ersten Nutzschwingungen also denen der Schwingungsmode dritter Ordnung (f3-Mode) des wenigstens einen Rohrs 111 entsprechen. Nach einer weiteren Ausgestaltung der Erfindung ist die Meßsystem- Elektronik 20 zudem dafür eingerichtet, die (Wechselstrom-)Frequenz $f_{eN2}$ so einzustellen, daß nämliche (Wechselstrom-)Frequenz $f_{eN2}$ bzw. die Nutzfrequenz $f_{N2}$ von der Resonanzfrequenz f2 der Schwingungsmode zweiter Ordnung (f2-Mode) um weniger als 1% nämlicher Resonanzfrequenz f2 ($| f2 - f_{N2} | < 0{,}01\, f1$) und/oder um weniger als 1 Hz ($|f2 - f_{N2}| < 1$ Hz) abweicht bzw. nämlicher Resonanzfrequenz f2 entspricht, und daß im Ergebnis die Schwingungsbewegungen der zweiten Nutzschwingungen denen der Schwingungsmode zweiter Ordnung (f2-Mode) des wenigstens einen Rohrs 111 entsprechen.

Die vorbezeichneten (System-)Parameter, insb. die Resonanzfrequenzen ($f_{2n+1}, f_{2n+2}$) wie auch die jeweils zughörigen (modalen) Dämpfungen können im Betrieb ohne weiteres mittels der Meßsystem-Elektronik 20 direkt ermittelt, beispielsweise nämlich anhand der Schwingungssignale s1, s2 und/oder des Treibersignals e1 berechnet werden, und für weitere, beispielsweise in der Meßsystem-Elektronik durchzuführende, Berechnungen in Form von entsprechenden digitalen Meßdaten vorgehalten werden. Dementsprechend ist die Meßsystem-Elektronik nach einer weiteren Ausgestaltung der Erfindung ferner eingerichtet, etwa auch zwecks Ermittlung von die Viskosität des Meßstoffs repräsentierenden Viskositäts-Meßwerten $X_\eta$ und/oder von die Dichte des Meßstoffs repräsentierenden Dichte-Meßwer- ten $X_\rho$, basierend auf der ersten Nutz-Signalkomponente (s1N1; s2N1) wenigstens eines der Schwingungssignale (s1, s2) und/oder der (Nutz-)Stromkomponente eN1 des Treibersignals e1 wenigstens einen, beispielsweise digitalen, ersten Gütewert XD1 und basierend auf der zweiten Nutz-Signalkomponente (s1N2; s2N2) wenigstens eines der Schwingungssignale s1, s2 und/oder der (Nutz-)Stromkomponente eN2 des Treibersignals e1 wenigstens einen, beispielsweise digitalen, zweiten Gütewert XD2 zu ermitteln, derart, daß der Gütewert XD1 von der (modalen) Dämpfung D1 und der Gütewert XD2 von der (modalen) Dämpfung D2 abhängig ist bzw. daß der Gütewert XD1 ein Maß für die modale Dämpfung D1, beispielsweise nämlich eine Güte (1/D1) der ersten Nutzschwingungen oder einen Dämpfungsgrad der ersten Nutzschwingungen, und der Gütewert XD2 ein Maß für die (modale) Dämpfung D2, beispielsweise nämlich eine Güte (1/D2) der zweiten Nutzschwingungen oder einen Dämpfungsgrad der zweiten Nutzschwingungen, repräsentiert, insb. nämlich quantifiziert. Die (modalen) Güten bzw. Dämpfungen können bekanntlich anhand einer Geschwindigkeit der jeweiligen (modalen) Schwingungsbewegungen sowie einer diese jeweils treibenden Nutz-Stromkomponenete des Treibesignals e1 im Betrieb des Meßsystems ohne weiteres ermittelt und beispielsweise in Form von entsprechenden digitalen Meßwerten abgebildet werden. Dafür kann die Meßsystem-Elektronik 20 ferner vorteilhaft auch eingerichtet sein, anhand wenigstens eines der Schwingungssignale (s1, s2) einen (digitalen) ersten Geschwindigkeitswert, der eine erste Schwingungsgeschwindigkeit, nämlich eine Geschwindigkeit der Schwingungsbewegungen des die ersten Nutzschwingungen ausführenden wenigstens einen Rohrs repräsentiert, wenigstens einen (digitalen) zweiten Geschwindigkeitswert, der eine zweite Schwingungsgeschwindigkeit, nämlich eine Geschwindigkeit der Schwingungsbewegungen des die zweiten Nutzschwingungen ausführenden wenigstens einen Rohrs repräsentiert, wenigstens einen die (Nutz- )Stromkomponente eN1, insb. eine (Strom-)Amplitude der (Nutz-)Stromkomponente eN1 oder einen Effektivwert der (Nutz-)Stromkomponentes eN1, repräsentierenden (digitalen) ersten Strom-Meßwert und/oder wenigstens einen die (Nutz-)Stromkomponente eN2, beispielsweise eine Amplitude der (Nutz-)Stromkomponente eN2 oder einen Effektivwert der (Nutz-)Stromkomponente eN2, repräsentierenden (digitalen) zweiten Strom-Meßwert zu ermitteln, beispielsweise nämlich auch im vorbezeichneten nicht flüchtigen Datenspeicher EEPROM zu speichern. Darüberhinaus kann die zudem auch eingerichtet Meßsystem-Elektronik sein, anhand wenigstens eines der Schwingungssignale (s1, s2) und/oder anhand des Treibesignals e1 wenigstens einen die Nutzfrequenz fN1 bzw. die Resonanzfrequenz f1 repräsentierenden (digitalen) ersten Frequenz-Meßwert $X_{f1}$ sowie wenigstens einen die Nutzfrequenz fN2 bzw. die Resonanzfrequenz f2 repräsentierenden (digitalen) zweiten Frequenz-Meßwert $X_{f2}$ zu ermitteln und für weiterführende Berechnungen in der Meßsystem-Elektronik entsprechend vorzuhalten, beispielsweise auch im Datenspeicher EEPROM zu speichern; dies beispielsweise auch, um anhand von solchen Frequenzwerten die Dichte $\rho$ des Meßstoffs repräsentierende Dichte- Meßwerte $X_\rho$ zu berechnen, etwa gemäß einer entsprechenden Resonanzfrequenz-zu-Dichte-Meßwert-Kennlinienfunktion der Meßsystem-Elektronik. Alternativ oder in Ergänzung kann die Meßsystem-Elektronik 20 auch dafür vorgesehen bzw. eingerichtet sein, anhand wenigstens eines der Schwingungssignale s1, s2, und/oder des Treibersignals e1, beispielsweise auch basierend auf den vorbezeichneten ersten und/oder zweiten Gütewerten (XD1, XD2), Viskosi- täts-Meßwerte $X_\eta$, nämlich die Viskosität $\eta$ des Meßstoffs FL repräsentierende Meßwerte zu generieren, beispielsweise gemäß einer Dämpfung(en)-zu-Viskosität-Meßwert-Kennlinienfunktion der Meßsystem-Elektronik. Die Verarbeitung der Schwingungssignale s1, s2, ggf. auch ein bei derartigen Meßsystemen durchaus übliches Ansteuern der vorbezeichneten Treiberschaltung(en) Exc kann - wie auch in Fig. 2 bzw. 3 jeweils schematisch dargestellt - beispielsweise auch mittels der vorbezeichneten Meß- und Auswerteschaltung DSV erfolgen. Zur weiteren Verbesserung der Genauigkeit mit der die Meßwerte $X_M$ schlußendlich ermittelt werden, kann der Meßwandler - wie auch in Fig. 2 bzw. 3 jeweils schematisch dargestellt und wie bei solchen Meßsystemen durchaus üblich - ferner auch dem Erfassen von Temperaturen innerhalb der Rohranordnung und dem Bereitstellen eines oder mehrerer dementsprechender Temperaturmeßsignale θ1 (θ1, θ2) dienliche, beispielsweise jeweils direkt am wenigstens einen Rohre der Rohranordnung angebrachte, Temperatursensoren 71 (71, 72) und/oder eine dem Erfassen von mechanischen Spannungen innerhalb der Rohranordnung und dem Bereitstellen von eines oder mehrerer dementsprechender Dehnungsmeßsignalen dienliche, beispielsweise jeweils direkt an einem der Rohre der Rohranordnung angebrachte, Dehnungssensoren aufweisen und kann die Meßsystem-Elektronik ferner eingerichtet sein, die Temperatur- bzw. Dehnungsmeßsignale zu empfangen und zu verarbeiten, insb. nämlich bei der Ermittlung der Meßwerte mit zu verwenden.

Wie bereits angedeutet ist die Meßsystem-Elektronik 20 ferner u.a. auch dafür vorgesehen bzw. ausgestaltet, die mittels des Meßwandlers 10 generierten Schwingungssignale s1, s2 zu empfangen und auszuwerten, insb. nämlich die wenigstens eine Meßgröße repräsentierende Meßwerte $X_M$ zu ermitteln und auszugeben, wobei, wie bereits erwähnt, die ersten Nutz-Signalkomponenten s1N1, s2N1 der Schwingungssignale s1, s2, nicht zuletzt auf Grund des vorbezeichneten Antriebsversatzes ∆E, jeweils zusätzliche (Stör-)Phasenwinkel aufweisen können; dies im beosnderen in der Weise, daß zwischen den Nutz-Signalkomponenten s1N1, s2N1 zusätzlich zur jeweiligen (Meß-)Phasendifferenz ∆φ12 auch eine dazu frequenzgleiche, von einem oder mehreren Stoffparametern des Meßstoffs, insb. auch die die vorbezeichneten modalen Dämpfungen (D1, D2) jeweils mitbestimmende Viskosität des Meßstoffs, abhängige, gleichwohl vom Massestrom unabhängige (Stör-)Phasendifferenz existiert, mithin die Schwingungssignale s1, s2 einen der Phasendifferenz zwischen den Nutz-Signalkomponenten der beiden Schwingungssignale bei einem Massestrom von Null entsprechenden, Meßstoff abhängigen nicht verschwindenden systematischen Phasen- oder auch Nullpunkt-Fehler aufweisen. Zum Minimieren des vorbezeichneten, nicht zuletzt auch von den ersten und zweiten (modalen) Dämpfungen (D1, D2) abhängigen Phasenfehlers bzw. der daraus resultierenden (Stör-)Phasendifferenz ist die Meßsystem-Elektronik des erfindungsgemäßen Meßsystems daher im besonderen auch eingerichtet, anhand sowohl der ersten (Nutz-)Stromkomponente eN1 und/oder der ersten Nutz-Signalkomponenten s1N1, s2N1, beispielsweise nämlich anhand von deren (Signal-)Frequenz und/oder anhand von einer Amplitude wenigstens einer der Nutz-Signalkomponenten s1N1, s2N1 und/oder anhand von einem Phasenwinkel wenigstens einer der Nutz-Signalkomponenten s1N1 bzw. s2N1, als auch der zweiten (Nutz-)Stromkomponente eN2 und/oder wenigsten einer der zweiten Nutz-Signalkomponenten s1N2, s2N2 den wenigstens einen Strömungsparameter des Meßstoffs repräsentierenden Meßwerte, beispielsweise nämlich anhand der vorbezeichneten (Meß-)Phasendifferenz ∆φ12 der ersten Nutz-Signalkomponenten s1N1, s2N1 sowie anhand sowohl einer Amplitude wenigstens einer der ersten Nutz-Signalkomponenten s1N1, s2N1 als auch einer Amplitude wenigstens einer der zweiten Nutz-Signalkomponenten s1N2, s2N2 und/oder anhand der ersten und zweiten Nutz-Stromkomponenten (e1N1, e1N2), insb. nämlich anhand der ersten und zweiten Strom-Amplituden, den Massestrom des Meßstoffs repräsentierende Massestrom-Meßwerte $X_m$, zu ermitteln. Dafür ist in der Meßsystem-Elektronik gemäß einer weiteren Ausgestaltung der Erfindung wenigstens eine Phasendifferenz-zu-Meßwert-Kennlinienfunktion, insb. eine Phasendifferenz-zu-Massenstrom-Meßwert-Kennlinienfunktion ($X_m = f\{∆φ12, D1, D2\}$), eingerichtet, beispielsweise nämlich einprogrammiert, gemäß der die Meßsystem-Elektronik anhand der - ggf., nicht zuletzt im Falle elektrodynamischer Schwingungssensoren auch auf die Nutz-Frequenz fN1 normierten - Meß-Phasendifferenz ∆φ12 ($∆φ12 \sim fN1·∆φ12^*$) den wenigstens einen Strömungsparameter des Meßstoffs repräsentierenden Meßwerte $X_M$, insb. nämlich den Massestrom des Meßstoffs repräsentierende Massestrom-Meßwerte $X_m$, ermitteln kann bzw. ermittelt, wobei die vorbezeichneten ersten und zweiten modalen Dämpfungen (D1, D2) in der wenigstens einen Phasendifferenz-zu-(Massenstrom-)Meßwert-Kennlinienfunktion berücksichtigt sind; dies beispielsweise auch derart, daß in der Phasendifferenz-zu-(Massenstrom-)Meßwert-Kennlinienfunktion ein Produkt einer zweiten Potenz $D1^2$ der ersten modalen Dämpfung D1 und eines Kehrwerts $1/D2$ der zweiten modalen Dämpfung D2 berücksichtigt ist und/oder derart, daß die Phasendifferenz-zu-Massenstrom-Meßwert-Kennlinienfunktion einer Berechnungsvorschrift:

$$Xm = k11 \cdot \frac{∆φ12}{2\pi \cdot fN1} - k12 - k2 \frac{D1^2}{D2} = k11 \cdot ∆φ12^* - k12 - k2 \frac{D1^2}{D2}$$

entspricht bzw. mittels der Meßsystem-Elektronik ermittelte Massenstrom-Meßwerte $X_m$ die vorbezeichnete Berechnungsvorschrift erfüllen. Jede der ersten und zweiten modalen Dämpfungen kann im Betrieb gleichermaßen wie die (Massenstrom-)Meßwerte mittels der Meßsystem-Elektronik ohne weiteres anhand der jeweiligen ersten bzw. zweiten Strom-Amplitude sowie anhand wenigstens einer der ersten bzw. zweiten Nutz-Signalkomponenten, ggf. auch in Echtzeit, wiederkehrend ermittelt, insb. nämlich numerisch berechnet bzw. digital gemessen, werden. Bei den Koeffizienten k11, k12 und k2 der Berechnungsvorschrift handelt es sich jeweils um Meßsystem spezifische (Kalibrier-)Konstanten, die für das jeweilige Meßsystem vorab, etwa anhand von Computer basierten (Simulations-)Berechnungen und/oder anhand von an einigen wenigen Exemplaren einer Meßsystem-Baureihe durchgeführten Labor-Messungen und/oder durch individuelles Einmessen des jeweiligen Meßsystems unter Referenzbedingungen, ermittelt werden können, beispielsweise nämlich im Zuge einer (Naß-)Kalibrierung des jeweiligen Meßsystems beim Hersteller und/oder einer (Re-) Kalibrierung des Meßsystems vor Ort. Der, insb. auch in konventionellen vibronischen Meßsystemen implementierte, Koeffizient k11 entspricht einer auf eine Änderung des (Referenz-)Massenstroms eines im Meßwandler geführten Kalibrierfluids, beispielsweise eine Temperatur von 25°C aufweisendes Wasser, bezogene Änderung der Phasendifferenz der ersten Nutz-Signalkomponente (s1N1, s2N1) Steigung der Kennlinienfunktion der vorbezeichneten Phasendifferenz-zu-Massenstrom-Meßwert-Kennlinienfunktion bzw. einer (Meß-)Empfindlichkeit des Meßsystems und der, insb. auch in konventionellen vibronischen Meßsystemen implementierte, Koeffizient k12 entspricht einem (Skalen-) Nullpunkt, beispielsweise einem statischen Nullpunkt, nämlich einer mit einer bei einem Null betragenden (Referenz-) Massestrom des Kalibrierfluids ermittelten (Meß-)Phasendifferenz korrespondierenden Kalibrierkonstante, oder einem dynamischen Nullpunkt. Die Koeffizienten k11, k12 können beispielsweise auch so gewählt sein, daß allein mit einer verkürzten Berechnungsvorschrift:

$$Xm^* = k11 \cdot \frac{\Delta\varphi 12}{2\pi \cdot fN1} - k12$$

für einen Referenz-Massestrom jeweils ermittelte vorläufige Massenstrom-Meßwerte Xm* jeweils eine Meßabweichung von bereits weniger als 0,2% des Referenz-Massestroms und/oder weniger als 0,05 kg/h aufweisen. Alternativ oder in Ergänzung zu Wasser können beispielsweise auch Luft, Öl und/oder Alkohol, z.B. Glycerol, als eines von mehreren Kalibrierfluiden verwendet werden. In entsprechender Weise kann die Meßsystem-Elektronik 20 insb. auch eingerichtet sein, im Betrieb zunächst anhand der Meß-Phasendifferenz $\Delta\varphi 12$ (bzw. der normierten Meß-Phasendifferenz $\Delta\varphi 12^*$), gleichwohl ohne Berücksichtigung der zweiten Nutzschwingungen bzw. der zweiten (Nutz-)Signalkomponenten vorläufige Massenstrom-Meßwerte Xm* zu ermitteln und hernach die jeweiligen Massenstrom-Meßwerte Xm* mit den aktuell ermittelten ersten und zweiten modalen Dämpfungen (D1, D2) entsprechend zu verrechnen, beispielsweise basierend auf einer entsprechend modifizierten Berechnungsvorschrift:

$$Xm = X_m^* - k2\frac{D1^2}{D2} \ .$$

Die vorbezeichneten vorläufigen Massenstrom-Meßwerte Xm* können beispielsweise auch den in herkömmlicher, nämlich in einer für konventionelle Meßsysteme der in Rede stehenden Art, nicht zuletzt auch den aus den eingangs erwähnten US-A 2006/0266129, der US-A 2007/0113678, der US-A 2010/0011882, der US-A 2012/0123705, der US-A 2017/0356777, der US-A 56 02 345, der US-A 59 26 096, der US-B 63 11 136, der WO-A 2009/136943, der WO-A 2019/017891, der WO-A 2019/081169, der WO-A 2019/081170, der WO-A 87/06691, der WO-A 96/05484, der WO-A 96/08697, der WO-A 97/26508 oder der WO-A 99/39164 bekannten Meßsystemen, typischen Weise berechneten Massenstrom-Meßwerten entsprechen bzw. können demnach ohne weiteres auch basieren auf den in konventionellen Meßsystemen bereits implementierten Phasendifferenz-zu-Massenstrom-Meßwert-Kennlinienfunktion ermittelt werden.

Nach einer weiteren Ausgestaltung der Erfindung ist Meßsystem-Elektronik 20 ferner eingerichtet, basierend auf sowohl der ersten (Nutz-)Stromkomponente eN1 und/oder der ersten Nutz-Signalkomponenten s1N1, s2N1, beispielsweise nämlich anhand von deren (Signal-)Frequenz und/oder anhand einer Amplitude wenigstens einer der Nutz-Signalkomponenten s1N1, s2N1, als auch der zweiten (Nutz-)Stromkomponente eN2 und/oder wenigsten einer der zweiten Nutz-Signalkomponenten s1N2, s2N2, beispielsweise nämlich anhand von deren (Signal-)Frequenz und/oder anhand einer Amplitude wenigstens einer der Nutz-Signalkomponenten s1N2, s2N2, wenigstens einen, beispielsweise der Berücksichtigung der Beiträge der ersten und zweiten modalen Dämpfungen (D1, D2) zum wenigstens einen vorläufigen Massenstrom-Meßwerte $X_m^*$ dienlichen und/oder digitalen, (Dämpfungs-)Korrekturwert $\Delta D12$ für die (Meß-)Phasendifferenz $\Delta\varphi 12$ bzw. für damit ermittelte vorläufige Massenstrom-Meßwerte (Xm*) zu ermitteln, derart, daß der (Dämpfungs-)Korrekturwert $\Delta D12$ mit den ersten und zweiten modalen Dämpfungen (D1, D2) korrespondiert bzw. eine Funktionen der ersten und zweiten modalen Dämpfungen (D1, D2) ist, mithin die ersten und zweiten modalen Dämpfungen (D1, D2) im (Dämpfungs-)Korrekturwert $\Delta D12$ berücksichtigt sind; dies insb. in der Weise, daß ein Betrag des (Dämpfungs-)Korrekturwerts bei zunehmender modaler Dämpfung D1 größer und/oder bei zunehmender modaler Dämpfung D2 kleiner wird und/oder im (Dämpfungs-)Korrekturwert $\Delta D12$ ein Produkt aus einer zweiten Potenz des Kehrwerts einer Güte (1/D1) der ersten Nutzschwingungen und einer Güte (1/D2) der zweiten Nutzschwingungen enthalten ist, und/oder auch derart, daß der wenigstens eine (Dämpfungs-)Korrekturwert $\Delta D12$ proportional ist zu einem Verhältnis ($D1^2/D2$) ist bzw. eine Berechnungsvorschrift:

$$\Delta D12 = k2 \cdot \frac{D1^2}{D2}$$

erfüllt und/oder derart, daß der wenigstens eine Massestrom-Meßwert $X_m$ eine Berechnungsvorschrift:

$$Xm = k11 \cdot \frac{\Delta\varphi12}{2\pi \cdot fN1} - k12 - \Delta D12$$

erfüllt. Es hat sich zudem überraschenderweise gezeigt, daß der in den vorbezeichneten Berechnungsvorschriften für die Berechnung des Massenstrom-Meßwerts Xm bzw. des (Dämpfungs-)Korrekturwerts ΔD12 enthaltene Koeffizient k2 vorteilhaft auch als eine meßwandlertyp- bzw. meßsystembaureihen-spezifische Kalibrierkonstante ausgebildet sein kann, beispielsweise derart, daß der Koeffizient k2 anhand von mittels einem oder einigen wenigen Exemplaren eines Meßwandler-Typs oder einer Meßsystem-Baureihe durchgeführten Labor-Messungen vorab ermittelt und in weiteren, jeweils mittels eines dazu Typ gleichen Meßwandler gebildeten bzw. derselben (Meßsystem-)Baureihe angehörigen Meßsysteme entsprechend wieder verwendet wird bzw. in der jeweiligen Phasendifferenz-zu-Massenstrom-Meßwert-Kennlinienfunktion nämlichen Meßsystems enthalten ist. Der (Dämpfungs-)Korrekturwert ΔD12 kann beispielsweise auch basierend auf den vorbezeichneten Gütewerten XD1, XD2 in Meßsystem-Elektronik 20 berechnet werden, beispielsweise derart, daß der (Dämpfungs-)Korrekturwert ΔD12 mittels eines Produkts des Gütewerts XD2 und einer zweiten Potenz des Kehrwerts des Gütewerts XD1 gebildet ist ($\Delta D12 \sim 1/XD1^2$ XD2). Alternativ oder in Ergänzung kann der (Dämpfungs-)Korrekturwert ΔD12 aber auch als eine Funktion der zweiten Schwingungsgeschwindigkeit, einer zweiten Potenz der (Strom-)Amplitude der (Nutz-)Stromkomponente eN1, eines Kehrwerts der (Strom-)Amplitude der (Nutz-)Stromkomponente eN2 sowie eines Kehrwerts einer zweiten Potenz der ersten Schwingungsgeschwindigkeit ermittelt werden, beispielsweise unter Verwendung der vorbezeichneten ersten und zweiten Geschwindigkeitswerte sowie der vorbezeichneten ersten und zweiten Strom-Meßwerte.

Nach einer weiteren Ausgestaltung ist die Meßsystem-Elektronik zudem eingerichtet, den wenigstens einen (Dämpfungs-)Korrekturwert ΔD12 bzw. auch mehrere zeitlich nacheinander ermittelte (Dämpfungs-)Korrekturwerte zu speichern, beispielsweise nämlich im vorbezeichneten nicht flüchtigen Datenspeicher EEPROM und/oder derart, daß wenigstens ein initial ermittelter (Dämpfungs-)Korrekturwert als ein Meßsystem spezifischer Referenzwert abgespeichert ist. Indem die ersten und zweiten modalen Dämpfungen (D1, D2) bzw. der (Dämpfungs-)Korrekturwert ΔD12 jeweils mit dem vorbezeichneten Antriebsversatz ΔE korrespondieren bzw. davon abhängig sind, können die ersten und zweiten modalen Dämpfungen (D1, D2) bzw. kann der (Dämpfungs-)Korrekturwert ΔD12 jeweils auch als ein Maß für den Antriebsversatz ΔE dienen bzw. zur Berechnung des Antriebsversatzes ΔE herangezogen werden. Beispielsweise kann der (Dämpfungs-)Korrekturwert ΔD12 unter den vorbezeichneten Referenzbedingungen mittels Kalibrierfluids initial bzw. vorab, etwa beim Hersteller des Meßsystems, ermitteltet und in der Meßsystem-Elektronik 20, beispielsweise im vorbezeichneten nicht flüchtigen Datenspeicher (EEPROM), gespeichert werden, um später, etwa bei einer Inbetriebnahme des Meßsystems und/oder während einer (Re-)Kalibrierung des Meßsystems, als ein ein intaktes Meßsystem repräsentierender Referenzwert verwendet zu werden, der mit einem oder mehreren aktuell mittels Kalibrierfluids entsprechend ermittelten (Dämpfungs-)Korrekturwerten jeweils verglichen werden kann. Allfällige, u.a. auch in einer Änderung des Antriebsversatzes ΔE resultierende Veränderungen des Meßwandlers, beispielsweise aufgrund von Überbelastungen, wie etwa hohe (Über-)Temperaturen oder Temperaturshocks, zu hohe Drücke oder Druckstöße im Meßstoff, seitens der Prozeßleitung auf den Meßwandler ausgeübte zu hohe Einspannkräfte und/oder zu starke Rüttelkräfte, für das wenigstens eine Rohr schädliche, insb. korrosive bzw. abrasive, Eigenschaften des im Meßwandler geführten Meßstoffs, oder auch von Materialermüdungen, können so im Zuge einer - zeitgesteuert und/oder auf Anforderung - am Meßsystem durchgeführten (Selbst-)Diagnose frühzeitig erkannt und ggf. von der Meßsystem-Elektronik 20 entsprechend selbst vermeldet werden, beispielsweise an das vorbezeichnete (Meß-)Datenverarbeitungssystem und/oder in Form einer als Alarm deklarierten Systemstatus- bzw. Störungsmeldung vor Ort. Dementsprechend ist die Meßsystem-Elektronik 20 nach einer weiteren Ausgestaltung der Erfindung ferner eingerichtet, basierend auf den Schwingungssignalen s1, s2 und/oder dem Treibersignal e1, beispielsweise nämlich anhand wenigstens einer ersten Nutz-Signalkomponente (s1N1, s2N1) und wenigstens einer zweiten Nutz-Signalkomponente (s1N2, s2N2) und/oder anhand der ersten und zweiten (Nutz-)Stromkomponenten (eN1, eN2) bzw. unter Verwendung des (Dämpfungs-)Korrekturwerts ΔD12, eine (Selbst-)Diagnose des Meßsystems, beispielsweise auch bei in die vorbezeichnete Prozeßleitung eingegliedertem Meßwandler vor Ort, nämlich an einer mittels des Meßwandlers bzw. mittels des Meßsystems gebildeten Meßstelle, und/oder unmittelbar nach dem Einsetzen des Meßwandlers in das, ggf. auch bereits mit dem Leitungssystem mechanisch verbundenen Wandler-Schutzgehäuse. Die vorbezeichnete (Selbst-)Diagnose kann beispielsweise während der Inbetriebnahme des Meßsystems bzw. der damit gebildeten Meßstelle, im Zuge einer (Re-)Kalibrierung und/oder auch intermittierend zum (normalen) Meßbetrieb während durchgeführt werden. So kann beispielsweise eine zu schnell und/oder zeitlich stetig ansteigende (modale) Dämpfung D2 bei gleichzeitig im wesentlicher konstant bleibender oder auch abfallender (modaler) Dämpfung D1 und/oder ein zeitlich stark änderndes, beispielsweise stetig ansteigendes oder stetig abfallendes, Verhältnis D1/D2 (D1/D2 ~ XD2/XD1 = ΔD12 / XD1) der ersten und zweiten (modalen) Dämpfungen (D1, D2) bzw. des (Dämpfungs-)Korrekturwerts ΔD12 bei zugleich im wesentlichen gleichbleibenden Stoffparametern des Meßstoffs (Dichte ρ, Viskosität η, Druck, Temperatur,...) als Indikator für das Vorliegen einer Störung des Meßwandlers dienen und/oder kann ein zeitlich stark schwankender bzw. erheblich streuender (Dämpfungs-)Korrekturwert ΔD12 als Indikator für das Vorliegen einer durch den Meßstoff selbst, beispielsweise durch im Meßstoff mitgeführte Fremdstoffe bzw. Blasen, verursachten Störung dienen. Die für eine oder mehrere der vorbezeichneten (System-)Parameter, insb. nämlich die Resonanzfrequenzen $(f_{2n+1}, f_{2n+2})$ des wenigstens einen Rohrs und die zugehörigen (modalen) Dämpfungen, ermittelten (Parameter-)Meßwerte, beispielsweise nämlich die die (modale) Dämpfungen (D1, D2) repräsentierenden Güterwerte (XD1, XD2) bzw. die (Dämpfungs-)Korrekturwerte ΔD12, können ferner auch zum wiederkehrenden Ermitteln eines Streuungsmaßes für den jeweiligen (System-)Parameter verwendet werden. Ein solches Streuungsmaß kann beispielsweise eine empirische Varianz oder eine Spannweite für den jeweiligen (System-)Parameter bzw. die jeweils ermittelten ersten und zweiten Güterwerte und/oder den (Dämpfungs-)Korrekturwerte ΔD12 sein. Das ermittelte Streuungsmaß kann ebenfalls für die (Selbst-)Diagnose herangezogen werden, beispielsweise derart, daß auf eine (mechanische) Störung des Meßwandlers allenfalls dann geschlossen wird, wenn der jeweilige (System-)Parameter ein niedriges, nämlich unterhalb eines entsprechend vorgegebenen Schwellenwerts liegendes Streuungsmaß aufweist, und/oder daß ein ein oberhalb eines entsprechend vorgegebenen Schwellenwerts liegendes Streuungsmaß aufweisender (System-)Parameter jeweils keine solche Störungsmeldung auslöst, auch wenn ein Vergleich von dessen Parameterwerten mit dem jeweiligen Bezugswert dies zunächst indizieren würde. Zudem kann ein ein oberhalb eines entsprechend vorgegebenen Schwellenwerts liegendes Streuungsmaß aufweisender (System-)Parameter als Indikator für stark schwankende Stoffparameter, beispielsweise infolge von Fremdstoffen und/oder Blasen im Meßstoff, dienen. Das jeweils mit der Meßsystem-Elektronik 20 ermittelte Streuungsmaß kann ggf. zudem auch ausgegeben, beispielsweise vor Ort angezeigt und/oder an das vorbezeichneten (Meß-)Datenverarbeitungssystem weitergeleitet, werden. Alternativ oder in Ergänzung können die für eine oder mehrere der vorbezeichneten (System-)Parameter ermittelten Parameterwerte ferner auch zum wiederkehrenden Ermitteln einer zeitlichen Änderung, beispielsweise nämlich eines Änderungstrends und/oder einer Änderungsrate und/oder einer Änderungsgeschwindigkeit, des jeweiligen (System-)Parameters verwendet werden. Die ermittelte zeitlichen Änderung kann ebenfalls für die (Selbst-)Diagnose herangezogen werden, beispielswiese derart, daß bei kleiner werdender Dämpfung D2 oder bei einem mit einer innerhalb eines vorgegebenen Meßbereich liegenden Änderungsrate zunehmenden Änderung der (Dämpfungs-)Korrekturwerte ΔD12 eine größer werdende Störung des Meßwandler ermittelt und/oder eine Zunahme einer Störung repräsentierende, insb. als (Störungs-)Alarm deklarierte, Meldung ausgegeben wird. Die jeweils mit der Meßsystem-Elektronik 20 ermittelte zeitlichen Änderung bzw. Änderungsrate oder Änderungsgeschwindigkeit kann zudem auch ausgegeben, beispielsweise vor Ort angezeigt und/oder an das vorbezeichneten (Meß-)Datenverarbeitungssystem weitergeleitet, werden. Dementsprechend kann die Meßsystem-Elektronik 20 ferner ausgestaltet sein, wenigstens einen aktuell ermittelten (Dämpfungs-)Korrekturwert ΔD12 und/oder wenigstens einen eine aktuelle Änderungsrate (Δ/Δt) bzw. -geschwindigkeit (d/dt) des (Dämpfungs-)Korrekturwerts ΔD12 repräsentierenden Parameterwert und/oder wenigstens einen eine aktuelle (zeitliche) Streuung des (Dämpfungs-)Korrekturwerts ΔD12 repräsentierenden Parameterwert mit einem oder mehreren dafür jeweils vorgegebenen, beispielsweise anhand von einem oder mehreren initial ermittelten (Dämpfungs-)Korrekturwerten berechneten, Schwellenwerten zu vergleichen, von denen wenigstens einer einen außerhalb einer Spezifikation liegenden Meßwandler und/oder einen unzulässig großen Antriebsversatz ΔE repräsentiert. Alternativ oder in Ergänzung kann die Meßsystem-Elektronik 20 auch eingerichtet sein, mittels wenigstens eines der Schwingungssignale s1, s2 und/oder des Treibersignals e1, beispielsweise nämlich auch unter Verwendung des (Dämpfungs-)Korrekturwerts ΔD12, ein Ausmaß des Antriebsversatzes ΔE zumindest qualitativ zu ermitteln und/oder eine Überprüfung des Meßsystems durchzuführen, beispielsweise auch im Zuge einer Selbst-Diagnose vor Ort.

Die vorbezeichnete (Selbst-)Diagnose des Meßsystems kann beispielsweise während eines dafür entsprechend reservierten, beispielsweise auch gelegentlich wiederholten bzw. jeweils mehr als 10 ms (Millisekunde), vorteilhaft mehr als 100 ms, insb. nicht weniger als 1 s (Sekunde) andauernden, Testintervalls durchgeführt werden. Das Testintervall kann zeitlich begrenzt sein, beispielsweise auf jeweils weniger als 1 min, gleichwohl wiederkehrend aufgestartet werden, beispielsweise per Befehl von extern des Meßsystems und/oder automatisiert, nämlich zeit- und/oder ereignisgesteuert durch die Meßsystem-Elektronik selbst. Beispielsweise kann die Meßsystem-Elektronik eingerichtet sein, das Testintervall bei als stationär strömend erkanntem Meßstof FL zu starten und/oder bei instationär strömendem Meßstof FL bzw. bei rasch ändernden Meßbedingungen und/oder rasch ändernden Meßgrößen zu beenden. Dementsprechend ist die Meßsystem-Elektronik nach einer weiteren Ausgestaltung der Erfindung, selbsttätig das Testintervall aufzustarten und/oder zu beenden, und/oder einen oder mehrere Befehle zu empfangen und auszuführen zu können, der das Testintervall startet. Nach einer weiteren Ausgestaltung der Erfindung ist die Meßsystem-Elektronik ferner eingerichtet, das Testintervall während des normalen Meßbetriebs bzw. während der Anregung der ersten Nutzschwingungen zu starten, derart, daß zumindest das Treibersignal e1 mit der zweiten (Nutz-)Stromkomponente eN2 bereitgestellt wird; dies beispielsweise auch derart, daß das Treibersignal e1 zumindest zeitweise simultan auch die erste (Nutz-)Stromkomponente eN1 enthält, so daß die zweiten Nutzschwingungen simultan mit den ersten Nutzschwingungen angeregt, mithin erste und zweite Nutzschwingungen während des Testintervalls zumindest zeitweise einander überlagert sind.

**Patentansprüche**

1. Vibronisches Meßsystem, insb. einem Coriolis-Massedurchfluß-Meßgerät oder Coriolis-Massedurchfluß-/Dichte-Meßgerät,

   - welches, insb. als In-Line-Meßgerät und/oder Meßgerät in Kompaktbauweise ausgebildete, Meßsystem dafür eingerichtet ist, wenigstens einen Strömungsparameter, insb. nämlich einen Massenstrom und/oder einen Volumenstrom und/oder eine Strömungsgeschwindigkeit, eines, insb. in einer Rohrleitung und/oder einer Schlauchleitung, strömenden fluiden Meßstoffs, insb. eines Gases, einer Flüssigkeit oder einer Dispersion, zu messen;
   - und welches Meßsystem:

     -- einen Meßwandler (10)

       --- mit einer Rohranordnung zum Führen des strömenden Meßstoffs,
       --- mit einer Erregeranordnung zum Wandeln elektrischer Leistung in dem Anregen und Aufrechterhalten erzwungener mechanischer Schwingungen der Rohranordnung dienliche mechanische Leistung
       --- und mit einer Sensoranordnung zum Erfassen von mechanischen Schwingungen der Rohranordnung und zum Bereitstellen von jeweils Schwingungsbewegungen der Rohranordnung repräsentierenden Schwingungssignalen;

     -- sowie eine an den Meßwandler, insb. nämlich sowohl an dessen Erregeranordnung als auch an dessen Sensoranordnung und/oder mittels elektrischer Verbindungsleitungen, elektrisch angeschlossene, insb. mittels wenigstens eines Mikroprozessors gebildete und/oder in einem Elektronik-Schutzgehäuse angeordnete, Meßsystem-Elektronik (20) umfaßt, wobei die Meßsystem-Elektronik (20) eingerichtet ist, zumindest zeitweise ein elektrisches Treibersignal (e1) in den Schwingungserreger einzuspeisen;

   - wobei die Rohranordnung wenigstens ein, insb. zumindest abschnittsweise gekrümmtes und/oder zumindest abschnittsweise gerades und/oder erstes, Rohr (111) aufweist,

     -- welches Rohr sich von einem ersten Rohrende bis zu einem zweiten Rohrende mit einer, insb. mehr als 100 mm betragenden, Rohrlänge erstreckt und ein von einer, insb. metallischen, Rohrwandung umschlossenes, sich vom ersten Rohrende bis zum zweiten Rohrende erstreckendes Lumen aufweist,
     -- und welches Rohr eingerichtet ist, zumindest in einer vom ersten Rohrende zum zweiten Rohrende weisenden Strömungsrichtung von Meßstoff durchströmt und währenddessen vibrieren gelassen zu werden,
     -- und wobei der Rohranordnung eine Vielzahl von jeweils eine zugehörige (modale) Dämpfung (D1, D2,..., Dx) sowie eine davon (mit-)bestimmte zugehörige Resonanzfrequenz (f1, f2, ... , fx) aufweisenden Schwingungsmoden (Eigenschwingungsformen) innewohnt, in denen das wenigstens eine Rohr jeweils ein oder mehr Schwingungsbäuche und jeweils zwei oder mehr Schwingungsknoten aufweisende (gedämpfte) Schwingungsbewegungen ausführen kann bzw. ausführt, derart,

       --- daß Schwingungsbewegungen des Rohrs in einer Grund-Schwingungsmode, nämlich einer Schwingungsmode erster Ordnung (f1-Mode), insb. nämlich eine Biegeschwingungsmode erster Ordnung, genau einen Schwingungsbauch und zwei Schwingungsknoten aufweisen
       --- und daß Schwingungsbewegungen des Rohrs in einer Ober-Schwingungsmode, nämlich einer Schwingungsmode zweiter oder höherer Ordnung (f2-Mode, f3-Mode, f4-Mode,... fx-Mode), insb. nämlich eine Biegeschwingungsmode zweiter bzw. höherer Ordnung, zwei oder mehr Schwingungsbäuche und drei oder mehr Schwingungsknoten aufweisen;

   - wobei die Erregeranordnung wenigstens einen, insb. einzigen und/oder elektrodynamischen, Schwingungserreger (31) aufweist,

     -- der mechanisch mit dem wenigstens einen Rohr verbunden
     -- und eingerichtet ist, elektrische Leistung mit einem zeitlich veränderlichen elektrischen Strom in mechanische Leistung zu wandeln, derart, daß an einem mittels des Schwingungserregers am damit mechanisch verbundenen Rohr gebildeten Antriebspunkt eine zeitlich veränderliche Antriebskraft auf das Rohr wirkt, insb. derart, daß eine Wirklinie der Antriebskraft senkrecht zu einer Normalen einer Antriebs-Querschnittsfläche des Rohrs verläuft,

-- wobei der Schwingungserreger (31) so positioniert und ausgerichtet ist, daß ein Antriebsversatz ($\Delta$E), nämlich ein kleinster Abstand zwischen einer von einer durch den Antriebspunkt hindurchführende gedachte Umfangslinie des Rohrs umschlossenen Antriebs-Querschnittsfläche des Rohrs und einer vorgegebenen, insb. bei intaktem bzw. ursprünglichem Meßwandler ermittelten, Referenz-Querschnittsfläche des wenigstens einen Rohrs nicht mehr als 3°mm, insb. weniger als 2 mm, und/oder weniger als 0,5% der Rohrlänge, insb. nämlich weniger als 0,2% der Rohrlänge, beträgt, wobei ein zwischen zwei Schwingungsbäuchen von Schwingungsbewegungen des wenigstens einen Rohrs in einer (von der Schwingungsmode erster Ordnung abweichenden) Schwingungsmode (zweiter oder höherer Ordnung) gebildeter, insb. (nominell) bei einer halben Rohrlänge verorteter, Schwingungsknoten nämlicher Schwingungsbewegungen innerhalb der Referenz-Querschnittsfläche liegt;

- wobei die Sensoranordnung einen, insb. elektrodynamischen oder opto-elektrischen, ersten Schwingungssensor aufweist,

-- der, insb. in Strömungsrichtung mehr als 10 mm und/oder mehr als ein Fünftel der Rohrlänge vom Schwingungserreger beabstandet, am Rohr positioniert, insb. nämlich zumindest anteilig mit dem Rohr mechanisch verbunden, ist

-- und der eingerichtet ist, Schwingungsbewegungen des wenigstens einen Rohrs zu erfassen und in ein nämliche Schwingungsbewegungen repräsentierendes, insb. elektrisches oder optisches, erstes Schwingungssignal zu wandeln, insb. derart, daß das erste Schwingungssignal eine oder mehrere sinusförmige Signalkomponenten mit jeweils einer einer Schwingungsfrequenz von Schwingungsbewegungen des Rohrs entsprechenden Frequenz enthält;

- und wobei die Sensoranordnung wenigstens einen, insb. elektrodynamischen oder opto-elektrischen, zweiten Schwingungssensor aufweist,

-- der, insb. in Strömungsrichtung mehr als 10 mm und/oder mehr als ein Fünftel der Rohrlänge vom Schwingungserreger beabstandet und/oder der in Strömungsrichtung vom ersten Schwingungssensor beabstandet, am Rohr positioniert, insb. nämlich zumindest anteilig mit dem Rohr mechanisch verbunden, ist

-- und der eingerichtet ist, Schwingungsbewegungen des wenigstens einen Rohrs zu erfassen und in ein nämliche Schwingungsbewegungen repräsentierendes, insb. elektrisches oder optisches, zweites Schwingungssignal zu wandeln, insb. derart, daß das zweite Schwingungssignal eine oder mehrere sinusförmige Signalkomponenten mit jeweils einer einer Schwingungsfrequenz von Schwingungsbewegungen des Rohrs entsprechenden Frequenz enthält;

- wobei die Meßsystem-Elektronik (20) eingerichtet ist, das elektrische Treibersignal (e1)

-- sowohl zumindest zeitweise mit einem eine erste (Wechselstrom-)Frequenz ($f_{eN1}$) und eine, insb. vorgegebene und/oder veränderliche, erste (Strom-)Amplitude aufweisenden sinusförmigen ersten (Nutz-)Stromkomponente (eN1) zum Anregen von ersten Nutzschwingungen, nämlich durch den (bestromten) Schwingungserreger erzwungenen mechanischen Schwingungen des wenigstens einen Rohrs mit einer ersten Nutzfrequenz (fN1), nämlich einer der ersten (Wechselstrom-)Frequenz entsprechenden (Schwingungs-)Frequenz in den Schwingungserreger (31) einzuspeisen, derart,

--- daß die erste die (Wechselstrom-)Frequenz ($f_{eN1}$) von einer Resonanzfrequenz ($f_{2n+1}$) einer Schwin-gungsmode von ungeradzahliger Ordnung, insb. nämlich der Grund-Schwingungsmode (f1-Mode), um weniger als 1% nämlicher Resonanzfrequenz ($f_{2n+1}$) und/oder um weniger als 1 Hz abweicht, insb. nämlich der Resonanzfrequenz (f1) der Schwingungsmode von ungeradzahliger Ordnung entspricht und/oder derart, daß die zweiten Nutzschwingungen geeignet sind, in einem mit einem von Null verschiedenen Massestrom durch das wenigstens eine Rohr strömenden Meßstoff Corioliskräfte zu bewirken, wobei die Resonanzfrequenz ($f_{2n+1}$) mit einer zugehörigen ersten modalen Dämpfung (D1) nämlicher Schwingungsmode von ungeradzahliger Ordnung korrespondiert bzw. davon abhängig ist,

--- und daß die mittels der ersten und zweiten Schwingungssensoren erzeugten ersten bzw. zweiten Schwingungssignale jeweils eine erste Nutz-Signalkomponente (s1N1; s2N1), nämlich einer sinusförmigen Signalkomponente mit einer der ersten Nutzfrequenz (fN1) entsprechenden (Signal-)Frequenz, insb. nämlich auch jeweils mit einem vom Massenstrom des durch das wenigstens eine Rohr strömenden Meßstoffs abhängigen Phasenwinkel, aufweisen,

-- als auch zumindest zeitweise mit einem eine zweite (Wechselstrom-)Frequenz ($f_{eN2}$) und eine, insb. vorgegebene und/oder veränderliche, zweite (Strom-)Amplitude aufweisenden sinusförmigen zweiten (Nutz-)Stromkomponente (eN2) zum Erzeugen von zweiten Nutzschwingungen, nämlich durch den (bestromten) Schwingungserreger erzwungenen mechanischen Schwingungen des Rohrs mit einer zweiten Nutzfrequenz (fN2), nämlich einer der zweiten (Wechselstrom-)Frequenz entsprechenden (Schwingungs-)Frequenz, insb. gleichzeitig mit dem ersten (Nutz-)Stromkomponente (eN1), in den Schwingungserreger (31) einzuspeisen, derart,

--- daß die zweite (Wechselstrom-)Frequenz ($f_{eN2}$) von einer Resonanzfrequenz ($f_{2n+2}$) einer Schwingungsmode von geradzahliger Ordnung, insb. nämlich der Schwingungsmode zweiter Ordnung (f2-Mode), um weniger als 1%, insb. um weniger als 0,1 %, nämlicher Resonanzfrequenz ($f_{2n+2}$), und/oder um weniger als 1 Hz, insb. um weniger als 0,1 Hz, abweicht, insb. nämlich der Resonanzfrequenz ($f_{2n+2}$) der Schwingungsmode von geradzahliger Ordnung entspricht, wobei die Resonanzfrequenz ($f_{2n+2}$) mit einer zugehörigen zweiten modalen Dämpfung (D2) nämlicher Schwingungsmode von geradzahliger Ordnung korrespondiert bzw. davon abhängig ist,
--- und daß die mittels der ersten und zweiten Schwingungssensoren erzeugte ersten bzw. zweiten Schwingungssignale jeweils eine zweite Nutz-Signalkomponente (s1N2; s2N2), nämlich einer sinusförmige Signalkomponente mit einer der zweiten Nutzfrequenz (fN2) entsprechenden (Signal-)Frequenz, aufweisen,

- und wobei die Meßsystem-Elektronik (20) eingerichtet ist, anhand sowohl der ersten Nutz-Signalkomponenten (s1N1, s2N1), insb. anhand einer Differenz zwischen einem Phasenwinkel der ersten Nutz-Signalkomponente (s1N1) des ersten Schwingungssignals (s1) und einem Phasenwinkel der ersten Nutz-Signalkomponente (s2N1) des zweiten Schwingungssignals (s2), als auch wenigsten einer der zweiten Nutz-Signalkomponenten (s1N2, s2N2) und/oder der zweiten (Nutz-)Stromkomponente (eN2) den wenigstens einen Strömungsparameter des Meßstoffs repräsentierenden Meßwerte, insb. nämlich den Massestrom des Meßstoffs repräsentierende Massestrom-Meßwerte, zu ermitteln.

2. Meßsystem nach Anspruch 1, wobei die erste Nutzfrequenz von einer Resonanzfrequenz, f1, der Grund-Schwingungsmode (f1-Mode) insb. nämlich einer Biegeschwingungsmode erster Ordnung, um weniger als 1% nämlicher Resonanzfrequenz, f1, und/oder um weniger als 1 Hz abweicht.

3. Meßsystem nach Anspruch 1, wobei die erste Nutzfrequenz von einer Resonanzfrequenz, f3, einer dem wenigstens einen Rohr innewohnenden Schwingungsmode dritter Ordnung (f3-Mode), insb. nämlich eine Biegeschwingungsmode dritter Ordnung, in welcher Schwingungsmode die Schwingungsbewegungen des Rohrs genau drei Schwingungsbäuche und vier Schwingungsknoten aufweisen, um weniger als 1% nämlicher Resonanzfrequenz, f3, und/oder um weniger als 1 Hz abweicht, insb. nämlich der Resonanzfrequenz, f3, entspricht.

4. Meßsystem nach dem vorherigen Anspruch, wobei ein erster Schwingungsknoten von Schwingungsbewegungen des wenigstens einen Rohrs in der Schwingungsmode dritter Ordnung im ersten Rohrende und ein zweiter Schwingungsknoten von Schwingungsbewegungen des wenigstens einen Rohrs in der Schwingungsmode dritter Ordnung im zweiten Rohrende verortet ist.

5. Meßsystem nach einem der vorherigen Ansprüche, wobei die zweite Nutzfrequenz von einer Resonanzfrequenz, f2, einer dem wenigstens einen Rohr innewohnenden Schwingungsmode zweiter Ordnung (f2-Mode), insb. nämlich einer Biegeschwingungsmode zweiter Ordnung, in welcher Schwingunsgmode die Schwingungsbewegungen des Rohrs genau zwei Schwingungsbäuche und drei Schwingungsknoten aufweisen, um weniger als 1% nämlicher Resonanzfrequenz, f2, und/oder um weniger als 1 Hz abweicht, insb. nämlich der Resonanzfrequenz, f2, entspricht.

6. Meßsystem nach dem vorherigen Anspruch

- wobei ein erster Schwingungsknoten von Schwingungsbewegungen des wenigstens einen Rohrs in der Schwingungsmode zweiter Ordnung im ersten Rohrende und ein zweiter Schwingungsknoten von Schwingungsbewegungen des wenigstens einen Rohrs in der Schwingungsmode zweiter Ordnung im zweiten Rohrende verortet ist; und/oder

- wobei ein zwischen den zwei Schwingungsbäuchen der Schwingungsbewegungen des wenigstens einen Rohrs in der Schwingungsmode zweiter Ordnung gebildeter, insb. bei einer halben Rohrlänge verorteter, Schwingungsknoten nämlicher Schwingungsbewegungen innerhalb der Referenz-Querschnittsfläche liegt;

- und/oder wobei eine senkrecht zur Schwingungsrichtung der Schwingungsbewegungen des Rohrs in der Schwingungsmode zweiter Ordnung stehende Hauptträgheitsachse des wenigstens einen Rohrs innerhalb der Referenz-Querschnittsfläche des wenigstens einen Rohrs liegt.

7. Meßsystem nach einem der vorherigen Ansprüche,

- wobei der Antriebsversatz ($\Delta E$) einem Abstand zwischen einem Flächenschwerpunkt (Mittelpunkt) der Antriebs-Querschnittsfläche des Rohrs und einem Flächenschwerpunkt (Mittelpunkt) der Referenz-Querschnittsfläche des wenigstens einen Rohrs entspricht; und/oder

- wobei eine Wirklinie der Antriebskraft senkrecht zu einer Normalen einer Antriebs-Querschnittsfläche des Rohrs verläuft; und/oder

- wobei eine Schnittgeraden zweier zueinander orthogonaler Symmetrieebenen des wenigstens einen Rohrs innerhalb der Referenz-Querschnittsfläche liegt; und/oder

- wobei eine senkrecht zur Antriebskraft stehende Hauptträgheitsachse des wenigstens einen Rohrs innerhalb der Referenz-Querschnittsfläche des wenigstens einen Rohrs liegt; und/oder

- wobei der Antriebsversatz ($\Delta E$) aus einer Fertigungstoleranz bei der Herstellung der Erregeranordnung, insb. nämlich aus Toleranzen bei einer Positionierung des Schwingungserregers am wenigstens einen Rohr und/oder aus Toleranzen bei einer Positionierung der Rohranordnung innerhalb eines Wandler-Schutzgehäuses, resultiert; und/oder

- wobei der Antriebsversatz ($\Delta E$) aus einer Fertigungstoleranz bei der Herstellung der Rohranordnung, insb. nämlich der Fertigung des wenigstens einen Rohrs, resultiert.

8. Meßsystem nach einem der vorherigen Ansprüche,

- wobei die Meßsystem-Elektronik eingerichtet ist, den zweiten Nutzstrom des Treibersignals (e1) zumindest zeitweise simultan mit dem ersten (Nutz-)Stromkomponente bereitzustellen, insb. derart, daß eine Amplitude des ersten (Nutz-)Stromkomponentes nicht kleiner als eine Amplitude des zweiten (Nutz-)Stromkomponentes eingestellt ist und/oder daß eine Amplitude des zweiten (Nutz-)Stromkomponentes auf mehr als 40 %, insb. nicht weniger als 50%, einer Amplitude des ersten (Nutz-)Stromkomponentes eingestellt ist; und/oder

- wobei die Meßsystem-Elektronik (20) eingerichtet ist, die ersten und zweiten (Nutz-)Ströme des Treibersignals, insb. für ein nicht weniger als zwei Schwingungsperioden des ersten (Nutz-)Stromkomponentes und/oder mehr als 10 ms andauerndes Zeitintervall, simultan in den Schwingungserreger einzuspeisen; und/oder

- wobei die Meßsystem-Elektronik (20) eingerichtet ist, während des Einspeisens des ersten (Nutz-)Stromkomponentes den zweiten (Nutz-)Stromkomponente zuzuschalten, insb. nämlich nach einem nicht weniger als zwei Schwingungsperioden des ersten (Nutz-)Stromkomponentes und/oder mehr als 1 s andauernden Zeitintervall den zweiten (Nutz-)Stromkomponente wieder abzuschalten; und/oder

- wobei die Meßsystem-Elektronik eingerichtet ist, die zweite (Wechselstrom-)Frequenz in Abhängigkeit von der ersten (Wechselstrom-)Frequenz einzustellen, insb. derart, daß die zweite (Wechselstrom-)Frequenz innerhalb eines Frequenzeinstellintervall liegt, von dem eine obere Intervallgrenze und/oder eine untere Intervallgrenze und/oder eine Mittenfrequenz einem vorgegebenen Vielfachen der ersten (Wechselstrom-)Frequenz, insb. nämlich mehr als 230 % der ersten (Wechselstrom-)Frequenz und/oder weniger als 300 % der ersten (Wechselstrom-)Frequenz entsprechenden Vielfachen der ersten (Wechselstrom-)Frequenz, entspricht; und/oder

- wobei die Meßsystem-Elektronik (20) eingerichtet ist, basierend auf den ersten und zweiten Schwingungssignalen (s1, s2) und/oder dem Treibersignal (e1), insb. anhand wenigstens einer ersten Nutz-Signalkomponente (s1N1, s2N1) und wenigstens einer zweiten Nutz-Signalkomponente (s1N2, s2N2) und/oder anhand der ersten und zweiten (Nutz-)Stromkomponenten (eN1, eN2) eine (Selbst-)Diagnose und/oder (Re-)Kalibrierung des Meßsystems, insb. bei in ein Rohrleitungssystem eingegliedertem Meßwandler und/oder mittels einer an den Meßwandler elektrisch angeschlossenen Meßsystem-Elektronik, durchzuführen; und/oder

- wobei die Meßsystem-Elektronik eingerichtet ist, einer Änderung einer Dichte des im Rohr geführten Meßstoffs mit einer Änderung der ersten (Wechselstrom-)Frequenz des Treibersignals zu folgen, und wobei die Meßsystem-Elektronik eingerichtet ist, anhand der ersten (Wechselstrom-)Frequenz des Treibersignals und/oder anhand der Signalfrequenz der ersten Nutz-Signalkomponente wenigstens eines der Schwingungssignale (s1N1; s2N1) die Dichte repräsentierende Dichte-Meßwerte zu generieren.

9. Meßsystem nach einem der vorherigen Ansprüche,

- wobei das Meßsystem weiters ein, insb. metallisches und/oder als Wandler-Schutzgehäuse ausgebildetes, Trägergerüst (100) umfaßt, wobei das Trägergerüst und die Rohranordnung aneinander, insb. wieder lösbar, befestigt sind, und wobei die Erregeranordnung, insb. nämlich der wenigstens eine Schwingungserreger, und/oder die Sensoranordnung, insb. nämlich die ersten und zweiten Schwingungssensoren, anteilig am Trägergerüst angebracht sind; und/oder

- wobei das Meßsystem weiters ein, insb. an einem Trägergerüst bzw. einem Wandler-Schutzgehäuse des Meßwandlers befestigtes und/oder metallisches, Elektronik-Schutzgehäuse (200) für die Meßsystem-Elektronik (20) umfaßt.

**10.** Meßsystem nach einem der vorherigen Ansprüche,

- wobei die Meßsystem-Elektronik eingerichtet ist, basierend auf der ersten Nutz-Signalkomponente (s1N1; s2N1) wenigstens eines der ersten und zweiten Schwingungssignale und/oder dem ersten (Nutz-)Stromkomponente (eN1) des Treibersignals wenigstens einen, insb. digitalen, ersten Gütewert zu ermitteln, wobei der erste Gütewert ein Maß für die erste modale Dämpfung (D1), insb. nämlich eine Güte (1/D1) der ersten Nutzschwingungen oder einen Dämpfungsgrad der ersten Nutzschwingungen, repräsentiert bzw. von nämlicher ersten modalen Dämpfung (D1) abhängig ist, und

- wobei die Meßsystem-Elektronik eingerichtet ist, basierend auf der zweiten Nutz-Signalkomponente (s1N2; s2N2) wenigstens eines der ersten und zweiten Schwingungssignale und/oder dem zweiten (Nutz-)Stromkomponente (eN1) des Treibersignals wenigstens einen, insb. digitalen, zweiten Gütewert zu ermitteln, wobei der zweite Gütewert ein Maß für die zweite modale Dämpfung (D2), insb. nämlich eine Güte (1/D2) der zweiten Nutzschwingungen oder einen Dämpfungsgrad der zweiten Nutzschwingungen, repräsentiert bzw. von nämlicher zweiten modalen Dämpfung (D2) abhängig ist.

**11.** Meßsystem nach einem der vorherigen Ansprüche,

- wobei die Meßsystem-Elektronik eingerichtet ist, den wenigstens einen Strömungsparameter des Meßstoffs zumindest vorläufig repräsentierenden Meßwerte, insb. nämlich den Massestrom des Meßstoffs zumindest vorläufig repräsentierende Massestrom-Meßwerte, anhand einer Meß-Phasendifferenz, nämlich einer Differenz zwischen einem Phasenwinkel der ersten Nutz-Signalkomponente (s1N1) des ersten Schwingungssignals (s1) und einem Phasenwinkel der ersten Nutz-Signalkomponente (s2N1) des zweiten Schwingungssignals (s2) zu ermitteln,

- und wobei die Meßsystem-Elektronik eingerichtet ist, basierend auf den ersten und zweiten Schwingungssignalen (s1, s2) und/oder dem Treibersignal (e1), insb. anhand wenigstens einer ersten Nutz-Signalkomponente (s1N1, s2N1) und wenigstens einer zweiten Nutz-Signalkomponente (s1N2, s2N2) und/oder anhand der ersten und zweiten (Nutz-)Stromkomponenten (eN1, eN2), wenigstens einen, insb. digitalen, (Dämpfungs-)Korrekturwert für die Meß-Phasendifferenz und/oder anhand nämlicher Meß-Phasendifferenz vorläufig ermittelte Meßwerte zu ermitteln, insb. derart, daß der (Dämpfungs-)Korrekturwert mit den ersten und zweiten modalen Dämpfungen korrespondiert bzw. eine Funktionen nämlicher ersten und zweiten modalen Dämpfungen ist und/oder daß der (Dämpfungs-)Korrekturwert von der Meß-Phasendifferenz und/oder von anhand der Meß-Phasendifferenz vorläufig ermittelten Meßwerte abgezogen wird.

**12.** Meßsystem nach Anspruch 10 und 11, wobei die Meßsystem-Elektronik eingerichtet ist, mittels der ersten und zweiten Gütewerte den (Dämpfungs-)Korrekturwert zu ermitteln, insb. derart, daß der (Dämpfungs-)Korrekturwert einer Funktion einer Güte (1/D2) der zweiten Nutzschwingungen bzw. eines Kehrwerts eines Dämpfungsgrads der zweiten Nutzschwingungen sowie einer zweiten Potenz eines Dämpfungsgrades der ersten Nutzschwingungen bzw. eines Kehrwerts einer Güte (1/D1) der ersten Nutzschwingungen entspricht.

**13.** Meßsystem nach einem der Ansprüche 11 bis 12,

- wobei der (Dämpfungs-)Korrekturwert mit dem Antriebsversatz (ΔE) korrespondiert, insb. nämlich davon abhängig ist und/oder ein Maß für den Antriebsversatz (ΔE) ist; und/oder

- wobei der (Dämpfungs-)Korrekturwert mit den ersten und zweiten modalen Dämpfungen korrespondiert bzw. eine Funktionen der ersten und zweiten modalen Dämpfungen ist, insb. derart, daß der (Dämpfungs-)Korrekturwert einer Funktion einer Güte (1/D2) der zweiten Nutzschwingungen bzw. eines Kehrwerts eines Dämpfungsgrads der zweiten Nutzschwingungen sowie einer zweiten Potenz eines Dämpfungsgrades der ersten Nutzschwingungen bzw. eines Kehrwerts einer Güte (1/D1) der ersten Nutzschwingungen entspricht; und/oder

- wobei der (Dämpfungs-)Korrekturwert einer Funktion eines Produkts einer Güte (1/D1) der ersten Nutzschwingungen und einer zweiten Potenz einer Güte (1/D2) der zweiten Nutzschwingungen bzw. eines Produkts eines Kehrwerts eines Dämpfungsgrads der ersten Nutzschwingungen und einer zweiten Potenz eines Kehrwerts eines Dämpfungsgrades der zweiten Nutzschwingungen entspricht; und/oder

- wobei ein Betrag des (Dämpfungs-)Korrekturwerts bei zunehmender erster modaler Dämpfung (D1) kleiner und/oder bei zunehmender zweiter modaler Dämpfung (D2) größer wird; und/oder

- wobei der (Dämpfungs-)Korrekturwert proportional ist zu einem Verhältnis (D1$^2$/D2) einer zweiten Potenz (D1$^2$) der ersten modalen Dämpfung (D1) zur zweiten modalen Dämpfung (D2); und/oder

- wobei die Meßsystem-Elektronik eingerichtet ist, den (Dämpfungs-)Korrekturwert zu speichern, insb. in einem nicht flüchtigen Datenspeicher und/oder derart, daß der (Dämpfungs-)Korrekturwert als ein Meßsystem spezifische Referenzwert abgespeichert ist und/oder in einer Meßfunktion des Meßsystems, gemäß der das Meßsystem den wenigstens einen zu messenden Strömungsparameter in die jeweiligen Meßwerte konvertiert, enthalten ist; und/oder

- wobei die Meßsystem-Elektronik eingerichtet ist, den (Dämpfungs-)Korrekturwert mit einem vorab, insb. unter Referenzbedingungen und/oder während einer Inbetriebnahme des Meßsystems und/oder während einer (Re-)Kalibrierung des Meßsystems und/oder mit einem baugleichen anderen Meßsystem, ermittelten, insb. in der Meßsystem-Elektronik gespeicherten und/oder als Referenzwert dienlichen, initialen (Dämpfungs-)Korrekturwert zu vergleichen; und/oder

- wobei die Meßsystem-Elektronik eingerichtet ist, den (Dämpfungs-)Korrekturwert mit wenigstens einem dafür vorgegebenen, insb. einen außerhalb einer Spezifikation liegenden Meßwandler und/oder einen unzulässig großen Antriebsversatz (ΔE) repräsentierenden, Schwellenwert zu vergleichen; und/oder

- wobei die Meßsystem-Elektronik eingerichtet ist, mittels wenigstens eines der ersten und zweiten Schwingungsignale und/oder des Treibersignals, insb. unter Verwendung des (Dämpfungs-)Korrekturwerts, ein Ausmaß des Antriebsversatzes (ΔE) zu ermitteln und/oder eine Überprüfung des Meßsystems durchzuführen; und/oder

- wobei die Meßsystem-Elektronik (20) eingerichtet ist, unter Verwendung des (Dämpfungs-)Korrekturwerts eine (Selbst-)Diagnose und/oder (Re-)Kalibrierung des Meßsystems, insb. bei in ein Rohrleitungssystem eingegliedertem Meßwandler und/oder mittels einer an den Meßwandler elektrisch angeschlossenen Meßsystem-Elektronik, durchzuführen.

**14.** Meßsystem nach einem der vorherigen Ansprüche,

- wobei die Meßsystem-Elektronik (20) eingerichtet ist, anhand wenigstens eines der ersten und zweiten Schwingungssignale einen ersten Geschwindigkeitswert, der eine erste Schwingungsgeschwindigkeit, nämlich eine Geschwindigkeit der Schwingungsbewegungen des die ersten Nutzschwingungen ausführenden wenigstens einen Rohrs repräsentiert, zu ermitteln, insb. in einem nicht flüchtigen Datenspeicher zu speichern; und/oder

- wobei die Meßsystem-Elektronik (20) eingerichtet ist, anhand wenigstens eines der ersten und zweiten Schwingungssignale wenigstens einen zweiten Geschwindigkeitswert, der eine zweite Schwingungsgeschwindigkeit, nämlich eine Geschwindigkeit der Schwingungsbewegungen des die zweiten Nutzschwingungen ausführenden wenigstens einen Rohrs repräsentiert, zu ermitteln, insb. in einem nicht flüchtigen Datenspeicher zu speichern; und/oder

- wobei die Meßsystem-Elektronik (20) eingerichtet ist, anhand des Treibersignals (e1) wenigstens einen die erste (Nutz-)Stromkomponente (eN1), insb. eine (Strom-)Amplitude der ersten (Nutz-)Stromkomponente (eN1) oder einen Effektivwert des ersten (Nutz-)Stromkomponente (eN1), repräsentierenden, insb. digitalen, ersten Strom-Meßwert zu ermitteln, insb. in einem nicht flüchtigen Datenspeicher zu speichern; und/oder

- wobei die Meßsystem-Elektronik (20) eingerichtet ist, anhand des Treibersignals (e1) wenigstens einen die zweite (Nutz-)Stromkomponente (eN2), insb. eine Amplitude der zweiten (Nutz-)Stromkomponente (eN2) oder einen Effektivwert der zweiten (Nutz-)Stromkomponente (eN2), repräsentierenden, insb. digitalen, zweiten Strom-Meßwert zu ermitteln, insb. in einem nicht flüchtigen Datenspeicher zu speichern.

**15.** Meßsystem nach dem vorherigen Anspruch in Kombination mit einem der Ansprüche 13 bis 14,

- wobei die Meßsystem-Elektronik (20) eingerichtet ist, den (Dämpfungs-)Korrekturwert mittels der ersten und zweiten Geschwindigkeitswerte sowie der ersten und zweiten Strom-Meßwerte zu ermitteln, insb. als eine Funktion der ersten Schwingungsgeschwindigkeit, einer zweiten Potenz einer (Strom-)Amplitude des zweiten (Nutz-)Stromkomponentes (eN2), eines Kehrwerts einer (Strom-)Amplitude des ersten (Nutz-)Stromkomponentes (eN1) sowie eines Kehrwerts einer zweiten Potenz der zweiten Schwingungsgeschwindigkeit; und/oder

- wobei die Meßsystem-Elektronik (20) eingerichtet ist, den (Dämpfungs-)Korrekturwert als eine Funktion der ersten Schwingungsgeschwindigkeit, einer zweiten Potenz einer (Strom-)Amplitude der zweiten (Nutz-)Stromkomponente (eN2), eines Kehrwerts einer (Strom-)Amplitude der ersten (Nutz-)Stromkomponente (eN1) sowie eines Kehrwerts einer zweiten Potenz der zweiten Schwingungsgeschwindigkeit zu ermitteln, insb. unter Verwendung der ersten und zweiten Geschwindigkeitswerte sowie der ersten und zweiten Strom-Meßwerte.

**16.** Meßsystem nach einem der vorherigen Ansprüche,

- wobei die ersten Nutz-Signalkomponenten (s1N1; s2N1) der ersten und zweiten Schwingungssignale einer Änderung eines Massenstromes des im Rohr geführten Meßstoffs mit einer Änderung einer (Meß-)Phasendifferenz der ersten Nutz-Signalkomponenten, nämlich einer Differenz zwischen einem Phasenwinkel der ersten Nutz-Signalkomponente (s1N1) des ersten Schwingungssignals (s1) und einem Phasenwinkel der ersten Nutz-Signalkomponente (s2N1) des zweiten Schwingungssignals (s2) folgen;
- und wobei die Meßsystem-Elektronik eingerichtet ist, anhand der (Meß-)Phasendifferenz der ersten Nutz-Signalkomponenten (s1N1; s2N1) den Massenstrom repräsentierende Massenstrom-Meßwerte zu generieren.

**17.** Meßsystem nach dem vorherigen Anspruch, wobei in der Meßsystem-Elektronik eine Phasendifferenz-zu-Meßwert-Kennlinienfunktion, gemäß der die Meßsystem-Elektronik anhand der Meß-Phasendifferenz den wenigstens einen Strömungsparameter des Meßstoffs repräsentierenden Meßwerte, insb. nämlich den Massestrom des Meßstoffs repräsentierende Massestrom-Meßwerte, ermitteln kann bzw. ermittelt, eingerichtet ist, insb. derart, daß die ersten und zweiten modalen Dämpfungen in der Phasendifferenz-zu-Massenstrom-Meßwert-Kennlinienfunktion berücksichtigt sind bzw. daß der (Dämpfungs-)Korrekturwert in der Phasendifferenz-zu-Massenstrom-Meßwert-Kennlinienfunktion enthalten ist.

**18.** Meßsystem nach dem vorherigen Anspruch,

- wobei die ersten und zweiten modale Dämpfungen in der Phasendifferenz-zu-Massenstrom-Meßwert-Kennlinienfunktion berücksichtigt sind bzw. der (Dämpfungs-)Korrekturwert in der Phasendifferenz-zu-Massenstrom-Meßwert-Kennlinienfunktion enthalten ist, insb. derart, daß in der Phasendifferenz-zu-Massenstrom-Meßwert-Kennlinienfunktion ein Produkt einer zweiten Potenz der ersten modalen Dämpfung (D1) und eines Kehrwerts der zweiten modalen Dämpfung (D2) berücksichtigt und/oder ein Produkt aus einer zweiten Potenz des Kehrwerts der Güte (1/D1) der ersten Nutzschwingungen und der Güte (1/D2) der zweiten Nutzschwingungen enthalten ist; und/oder
- wobei die Meßsystem-Elektronik eingerichtet ist, mittels wenigstens eines der ersten und zweiten Schwingungsignale und/oder des Treibersignals, insb. unter Verwendung des (Dämpfungs-)Korrekturwerts, die Phasendifferenz-zu-Meßwert-Kennlinienfunktion zu überprüfen.

**19.** Meßsystem nach einem der vorherigen Ansprüche,

- wobei die Meßsystem-Elektronik (20) einen nicht-flüchtigen Datenspeicher (EEPROM) aufweist, der dafür eingerichtet ist, digitale Daten, insb. nämlich erste und zweite Gütewerte und/oder einen (Dämpfungs-)Korrekturwert, vorzuhalten, insb. auch ohne eine angelegte Betriebsspannung; und/oder
- wobei der Meßwandler außer dem Schwingungserreger keinen weiteren Schwingungserreger aufweist, der mechanisch mit dem wenigstens einen Rohr (111) verbunden ist; und/oder
- wobei der Schwingungserreger (31) mittels einer, insb. eine Luftspule und einen Anker aufweisende, Schwingspule gebildet ist; und/oder
- wobei jeder der ersten und zweiten Schwingungssensoren jeweils mittels einer, insb. eine Luftspule und einen Anker aufweisende, Tauchspule gebildet ist.

**20.** Meßsystem nach einem der vorherigen Ansprüche, wobei die Meßsystem-Elektronik eingerichtet ist, das Treibersignal (e1) mit der zweiten (Nutz-)Stromkomponente (eN2) während eines, insb. mehr als 10 ms andauernden und/oder zeitlich begrenzten und/oder wiederkehrend aufgestarteten, Testintervalls bereitzustellen.

**21.** Meßsystem nach dem vorherigen Anspruch,

- wobei das Testintervall jeweils länger als 100 ms (Millisekunde), insb. nicht weniger als 1 s (Sekunde), andauert; und/oder
- wobei die Meßsystem-Elektronik eingerichtet ist, selbsttätig, insb. zeitgesteuert, das Testintervall, insb. wiederkehrend, aufzustarten und/oder zu beenden; und/oder
- wobei die Meßsystem-Elektronik eingerichtet ist, einen oder mehrere Befehle zu empfangen und auszuführen, der das Testintervall startet.

22. Meßsystem nach einem der vorherigen Ansprüche,

- wobei die Erregeranordnung außer dem Schwingungserreger (31) keinen weiteren mit dem Rohr verbunden Schwingungserreger aufweist; und/oder
- wobei der Schwingungserreger (31) so positioniert und ausgerichtet ist, daß Antriebsversatz weniger als 0,5 mm beträgt, insb. nämlich Null ist, bzw. daß der Flächenschwerpunkt der Antriebs-Querschnittsfläche des Rohrs dem Antriebs-Referenzpunkt entspricht bzw. damit koinzidiert; und/oder
- wobei jede der Schwingungsmoden erster und zweiter Ordnung des Rohrs jeweils einen im ersten Rohrende des wenigstens einen Rohrs verorteten ersten Schwingungsknoten und einen im zweiten Rohrende des wenigstens einen Rohrs verorteten zweiten Schwingungsknoten aufweist; und/oder
- wobei das Rohr abschnittsweise, insb. kreisbogenförmig und/oder V-förmig, gekrümmt ist, insb. derart, daß das Rohr ein zentrales Scheitelbogensegment aufweist und/oder daß genau eine Hauptträgheitsachse des wenigstens einen Rohrs innerhalb der Referenz-Querschnittsfläche des wenigstens einen Rohrs liegt; und/oder
- wobei das Rohr abschnittsweise, insb. über die gesamte Rohrlänge, gerade ist, insb. derart, daß ein Massenschwerpunkt innerhalb der Referenz-Querschnittsfläche des wenigstens einen Rohrs liegt.

23. Meßsystem nach einem der vorherigen Ansprüche, wobei die Rohranordnung wenigstens ein, insb. zumindest abschnittsweise gekrümmtes und/oder zumindest abschnittsweise gerades und/oder zum ersten Rohr baugleiches und/oder zum ersten Rohr zumindest abschnittsweise paralleles, zweites Rohr (112) aufweist.

24. Meßsystem nach dem vorherigen Anspruch,

- wobei der Schwingungserreger (31) sowohl anteilig mit dem ersten Rohr als auch anteilig mit dem zweiten Rohr mechanisch verbunden ist; und/oder
- wobei der Schwingungserreger (31) eingerichtet ist, differenziell auf die ersten und zweiten Rohre zu wirken, insb. derart, daß die ersten und zweiten Rohre simultan Frequenz gleiche, entgegengesetzte erzwungene mechanische Schwingungen ausführen; und/oder
- wobei der Schwingungserreger (31) eingerichtet ist, elektrische Leistung mit einem zeitlich veränderlichen elektrischen Strom so in mechanische Leistung zu wandeln, daß an einem mittels des Schwingungserregers am damit mechanisch verbundenen zweiten Rohr gebildeten Antriebspunkt eine zeitlich veränderliche Antriebskraft auf das zweite Rohr wirkt, insb. zeitgleich und/oder entgegengesetzt zu der am mittels des Schwingungserregers am damit mechanisch verbundenen ersten Rohr gebildeten Antriebspunkt auf das erste Rohr wirkende Antriebskraft; und/oder
- wobei der Schwingungserreger (31) eingerichtet ist, mittels des elektrischen Treibersignals (e1) eingespeiste elektrische Leistung zeitgleich in erzwungene mechanische Schwingungen der ersten und zweiten Rohre zu wandeln, insb. derart, daß die ersten und zweiten Rohre erzwungene mechanische Schwingungen mit der ersten Nutzfrequenz und/oder mit der zweiten Nutzfrequenz simultan ausführen.

**Claims**

1. A vibronic measuring system, in particular a Coriolis mass flow meter or Coriolis mass flow/density meter,

- said measuring system, in particular a measuring system configured as an in-line measuring device and/or measuring device with a compact design, being configured to measure at least one flow parameter, that is to say, in particular a mass flow and/or a volume flow and/or a flow velocity, of a flowing fluid measured substance, in particular in a pipeline and/or a hose line, in particular a gas, a liquid or a dispersion;
- and said measuring system comprising:

  • a measuring transducer (10)

    ◦ with a tube arrangement for conveying the flowing measured substance,
    ◦ with an exciter arrangement for converting electrical power into mechanical power serving to excite and maintain forced mechanical oscillations of the tube arrangement,
    ◦ and with a sensor arrangement for registering mechanical oscillations of the tube arrangement and for providing oscillation signals each representing oscillatory movements of the tube arrangement;

• and measuring system electronics (20) electrically connected to the measuring transducer, that is to say, in particular both to its exciter arrangement and to its sensor arrangement and/or by means of electrical connecting cables, and formed, in particular, by means of at least one microprocessor and/or arranged in an electronics protective housing, wherein the measuring system electronics (20) are configured to supply the oscillation exciter at least temporarily with an electrical driver signal (e1);

- wherein the tube arrangement has at least one tube (111), in particular curved at least in sections and/or straight at least in sections and/or a first tube,

  • said tube extending from a first tube end to a second tube end with a tube length, in particular more than 100 mm, and having a lumen surrounded by an, in particular metal, tube wall extending from the first tube end to the second tube end,
  • and said tube being configured to have the measured substance flow through it, at least in a flow direction going from the first tube end to the second tube end, and during that to be caused to oscillate,
  • and wherein a number of oscillation modes (natural modes) each with an associated (modal) damping (D1, D2, ... , Dx) as well as a (co-)determined associated resonant frequency (f1, f2, ... , fx) are inherent in the tube arrangement, in which the at least one tube can execute or executes (damped) oscillatory movements with in each case one or more antinodes and in each case two or more nodes in such a way

    ◦ that oscillatory movements of the tube in a basic oscillation mode, that is to say an oscillation mode of the first order (f1-Mode), that is to say, in particular a bending oscillation mode of the first order, have exactly one antinode and two nodes,
    ◦ and in such a way that oscillatory movements of the tube in a higher-level oscillation mode, that is to say an oscillation mode of the second order or higher (f2-Mode, f3-Mode, f4-Mode, ... fx-Mode), that is to say, in particular a bending oscillation mode of the second order or higher, have two or more antinodes and three or more nodes;

- wherein the exciter arrangement has at least one, in particular a single and/or electrodynamic, oscillation exciter (31)

  • which is mechanically connected to the at least one tube
  • and is configured to convert electrical power of a time-variable electrical current into mechanical power in such a way that a time-variable driving force acts on the tube at a drive point formed by means of the oscillation exciter on the tube mechanically connected to it, in particular in such a way that an effective line of the driving force runs perpendicular to a normal of a drive cross-sectional area of the tube,
  • wherein the oscillation exciter (31) is positioned and aligned in such a way that a drive offset (L1E), that is to say a smallest distance between a drive cross-sectional area of the tube enclosed by an imaginary perimeter of the tube leading through the drive point and a specified reference cross-sectional area of the at least one tube, in particular ascertained with an intact measuring transducer or the original measuring transducer, is not more than 3°mm, in particular less than 2 mm, and/or less than 0.5% of the tube length, that is to say, in particular less than 0.2% of the tube length, wherein a node of oscillatory movements formed between two antinodes of said oscillatory movements of the at least one tube in an oscillation mode (of the second order or higher) (different from the oscillation mode of the first order), in particular (nominally) located at a half tube length, is inside the reference cross-sectional area,

- wherein the sensor arrangement has an, in particular electrodynamic or optoelectronic, first oscillation sensor

  • which is positioned on the tube, in particular in the flow direction spaced more than 10 mm and/or more than one fifth of the tube length away from the oscillation exciter, that is to say, in particular is at least partially mechanically connected to the tube,
  • and which is configured to detect oscillatory movements of the at least one tube and to convert them into an, in particular electrical or optical, first oscillation signal representing said oscillatory movements, in particular in such a way that the first oscillation signal contains one or more sinusoidal signal components each with a frequency corresponding to an oscillation frequency of oscillatory movements of the tube;

- and wherein the sensor arrangement has at least an, in particular electrodynamic or optoelectronic, second oscillation sensor

• which is positioned on the tube, in particular in the flow direction spaced more than 10 mm and/or more than one fifth of the tube length away from the oscillation exciter and/or away from the first oscillation sensor in the flow direction, that is to say, in particular is at least partially mechanically connected to the tube,

• and which is configured to detect oscillatory movements of the at least one tube and to convert them into an, in particular electrical or optical, second oscillation signal representing said oscillatory movements, in particular in such a way that the second oscillation signal contains one or more sinusoidal signal components each with a frequency corresponding to an oscillation frequency of oscillatory movements of the tube;

- wherein the measuring system electronics (20) are configured to supply the oscillation exciter (31) with the electrical driver signal (e1)

• both at least temporarily with a sinusoidal first (useful) current component (eN1) having a first (alternating current) frequency (feN1) and an, in particular specified and/or changing, first (current) amplitude for initiating first useful oscillations, that is to say mechanical oscillations of the at least one tube forced by the oscillation exciter (supplied with current) with a first useful frequency (fN1), that is to say an (oscillation) frequency corresponding to the first (alternating current) frequency in such a way

○ that the first (alternating current) frequency (feN1) differs from a resonant frequency (fan+1) of an oscillation mode of an odd order, that is to say, in particular the basic oscillation mode (f1-Mode), by less than 1% of said resonant frequency (fan+1) and/or by less than 1 Hz, that is to say, in particular corresponds to the resonant frequency (f1) of the oscillation mode of an odd order and/or in such a way that the second useful oscillations are suitable for effecting Coriolis forces in a measured substance flowing through the at least one tube with a mass flow that is not zero, wherein the resonant frequency (fan+1) corresponds to an associated first modal damping (D1) of said oscillation mode of an odd order or is dependent thereon,

○ and that the first and second oscillation signals generated by means of the first and second oscillation sensors have in each case a first useful signal component (s1N1; s2N1), that is to say a sinusoidal signal component with a (signal) frequency corresponding to the first useful frequency (fN1), that is to say, in particular also in each case with a phase angle dependent on the mass flow of the measured substance flowing through the at least one tube,

• and also to supply the oscillation exciter (31) at least temporarily with a sinusoidal second (useful) current component (eN2) having a second (alternating current) frequency (feN2) and an, in particular specified and/or changing, second (current) amplitude for initiating second useful oscillations, that is to say mechanical oscillations of the tube forced by the oscillation exciter (supplied with current) with a second useful frequency (fN2), that is to say an (oscillation) frequency corresponding to the second (alternating current) frequency, in particular simultaneously with the first (useful) current component (eN1) in such a way

○ that the second (alternating current) frequency (feN2) differs from a resonant frequency (fan+2) of an oscillation mode of an even order, that is to say, in particular the oscillation mode of the second order (f2-Mode), by less than 1%, in particular by less than 0.1%, of said resonant frequency (fan+2), and/or by **less than 1 Hz,** in particular by less than 0.1 Hz, that is to say, in particular corresponds to the resonant frequency (fan+2) of the oscillation mode of an even order, wherein the resonant frequency (fan+2) corresponds to an associated second modal damping (D2) of said oscillation mode of an even order or is dependent thereon,

○ and that the first and second oscillation signals generated by means of the first and second oscillation sensors have in each case a second useful signal component (s1N2; s2N2), that is to say a sinusoidal signal component with a (signal) frequency corresponding to the second useful frequency (fN2),

- and wherein the measuring system electronics (20) are configured, based on both the first useful signal components (s1N1, s2N1), in particular based on a difference between a phase angle of the first useful signal component (s1N1) of the first oscillation signal (s1) and a phase angle of the first useful signal component (s2N1) of the second oscillation signal (s2), and also at least one of the second useful signal components (s1N2, s2N2) and/or the second (useful) current component (eN2), to determine measured values representing the at least one flow parameter of the measured substance, that is to say, in particular mass flow measured values representing the mass flow of the measured substance.

2. The measuring system as claimed in claim 1, wherein the first useful frequency differs from a resonant frequency, f1, of the basic oscillation mode (f1-Mode), that is to say, in particular a bending oscillation mode of the first order, by less than 1% of said resonant frequency, f1, and/or by less than 1 Hz.

3. The measuring system as claimed in claim 1, wherein the first useful frequency differs from a resonant frequency, f3, of an oscillation mode of the third order (f3-Mode) inherent in the at least one tube, that is to say, in particular a bending oscillation mode of the third order, in which oscillation mode the oscillatory movements of the tube have exactly three antinodes and four nodes, by less than 1% of said resonant frequency, f3, and/or by less than 1 Hz, that is to say, in particular corresponds to the resonant frequency, f3.

4. The measuring system as claimed in the preceding claim, wherein a first node of oscillatory movements of the at least one tube is located in the first tube end in the oscillation mode of the third order and a second node of oscillatory movements of the at least one tube is located in the second tube end in the oscillation mode of the third order.

5. The measuring system as claimed in one of the preceding claims, wherein the second useful frequency differs from a resonant frequency, f2, of an oscillation mode of the second order (f2-Mode) inherent in the at least one tube, that is to say, in particular a bending oscillation mode of the second order, in which oscillation mode the oscillatory movements of the tube have exactly two antinodes and three nodes, by less than 1% of said resonant frequency, f2, and/or by less than 1 Hz, that is to say, in particular corresponds to the resonant frequency, f2.

6. The measuring system as claimed in the preceding claim,

   - wherein a first node of oscillatory movements of the at least one tube is located in the first tube end in the oscillation mode of the second order and a second node of oscillatory movements of the at least one tube is located in the second tube end in the oscillation mode of the second order;
   and/or
   - wherein a node of the oscillatory movements formed between the two antinodes of said oscillatory movements of the at least one tube in the oscillation mode of the second order, in particular located at a half tube length, is inside the reference cross-sectional area;
   - and/or wherein a main axis of inertia of the at least one tube located perpendicular to the direction of oscillation of the oscillatory movements of the tube in the oscillation mode of the second order is inside the reference cross-sectional area of the at least one tube.

7. The measuring system as claimed in one of the preceding claims,

   - wherein the drive offset (L1E) corresponds to a distance between a centroid of an area (center point) of the drive cross-sectional area of the tube and a centroid of an area (center point) of the reference cross-sectional area of the at least one tube;
   and/or
   - wherein an effective line of the driving force runs perpendicular to a normal of a drive cross-sectional area of the tube;
   and/or
   - wherein an intersection line between two planes of symmetry which are orthogonal relative to one another of the at least one tube is inside the reference cross-sectional area;
   and/or
   - wherein a main axis of inertia of the at least one tube located perpendicular to the driving force is inside the reference cross-sectional area of the at least one tube; and/or
   - wherein the drive offset (L1E) is the result of a production tolerance when manufacturing the exciter arrangement, that is to say, in particular of tolerances when positioning the oscillation exciter on the at least one tube and/or of tolerances when positioning the tube arrangement inside a transducer protective housing;
   and/or
   - wherein the drive offset (L1E) is the result of a production tolerance when manufacturing the tube arrangement, that is to say, in particular when manufacturing the at least one tube.

8. The measuring system as claimed in one of the preceding claims,

   - wherein the measuring system electronics are configured to supply the second useful current of the driver signal (e1) at least sometimes simultaneously with the first (useful) current component, in particular in such a way that an amplitude of the first (useful) current component is not set to be less than an amplitude of the second (useful) current component and/or in such a way that an amplitude of the second (useful) current component is set to more than 40%, in particular not less than 50%, of an amplitude of the first (useful) current component;
and/or
- wherein the measuring system electronics (20) are configured to supply the oscillation exciter with the first and second (useful) currents of the driver signal simultaneously, in particular for a time interval lasting not less than two oscillation periods of the first (useful) current component and/or for more than 10 ms;
and/or
- wherein the measuring system electronics (20) are configured to activate the second (useful) current component while supplying the first (useful) current component, that is to say, in particular to deactivate the second (useful) current component again after a time interval lasting not less than two oscillation periods of the first (useful) current component and/or for more than 1 s;
and/or
- wherein the measuring system electronics are configured to set the second (alternating current) frequency as a function of the first (alternating current) frequency, in particular in such a way that the second (alternating current) frequency is within a frequency setting interval of which an upper interval limit and/or a lower interval limit and/or a center frequency correspond to a specified multiple of the first (alternating current) frequency, that is to say, in particular correspond to a multiple of the first (alternating current) frequency corresponding to more than 230% of the first (alternating current) frequency and/or less than 300% of the first (alternating current) frequency; and/or
- wherein the measuring system electronics (20) are configured, based on the first and second oscillation signals (s1, s2) and/or the driver signal (e1), in particular based on at least a first useful signal component (s1N1, s2N1) and at least a second useful signal component (s1N2, s2N2) and/or based on the first and second (useful) current components (eN1, eN2), to perform a (self-)diagnostics and/or re(calibration of the measuring system, in particular in the case of a measuring transducer incorporated into a pipeline system and/or by means of measuring system electronics electrically connected to the measuring transducer;
and/or
- wherein the measuring system electronics are configured to follow a change in a density of the measured substance conducted in the tube with a change in the first (alternating current) frequency of the driver signal, and wherein the measuring system electronics are configured to generate density measured values representing the density based on the first (alternating current) frequency of the driver signal and/or based on the signal frequency of the first useful signal component of at least one of the oscillation signals (s1N1; s2N1).

9. The measuring system as claimed in one of the preceding claims,

- wherein the measuring system further comprises a support structure (100), in particular metal and/or configured as a transducer protective housing, wherein the support structure and the tube arrangement are secured to one another, in particular in such a way that they can be separated again, and wherein the exciter arrangement, that is to say, in particular the at least one oscillation exciter, and/or the sensor arrangement, that is to say, in particular the first and second oscillation sensors, is/are partially attached to the support structure;
and/or
- wherein the measuring system further comprises an electronics protective housing (200) for the measuring system electronics (20), in particular secured to a support structure or a transducer protective housing of the measuring transducer and/or metal.

10. The measuring system as claimed in one of the preceding claims,

- wherein the measuring system electronics are configured, based on the first useful signal component (s1N1; s2N1) of at least one of the first and second oscillation signals and/or the first (useful) current component (eN1) of the driver signal, to determine at least one, in particular digital, first quality value, wherein the first quality value represents a measure of the first modal damping (D1), that is to say, in particular a quality (1/D1) of the first useful oscillations or a degree of damping of the first useful oscillations, or is dependent on said first modal damping (D1), and
- wherein the measuring system electronics are configured, based on the second useful signal component (s1N2; s2N2) of at least one of the first and second oscillation signals and/or the second (useful) current component (eN1) of the driver signal, to determine at least one, in particular digital, second quality value, wherein the second quality value represents a measure of the second modal damping (D2), that is to say, in particular a quality (1/D2) of the second useful oscillations or a degree of damping of the second useful oscillations, or is dependent on said second modal damping (D2).

11. The measuring system as claimed in one of the preceding claims,

- wherein the measuring system electronics are configured to determine measured values at least provisionally representing the at least one flow parameter of the measured substance, that is to say, in particular mass flow measured values at least provisionally representing the mass flow of the measured substance, based on a measured phase difference, that is to say a difference between a phase angle of the first useful signal component (s1N1) of the first oscillation signal (s1) and a phase angle of the first useful signal component (s2N1) of the second oscillation signal (s2),
- and wherein the measuring system electronics are configured, based on the first and second oscillation signals (s1, s2) and/or the driver signal (e1), in particular based on at least a first useful signal component (s1N1, s2N1) and at least a second useful signal component (s1N2, s2N2) and/or based on the first and second (useful) current components (eN1, eN2), to determine at least one, in particular digital, (damping) correction value for the measured phase difference and/or measured values provisionally determined based on said measured phase difference, in particular in such a way that the (damping) correction value corresponds to the first and second modal dampings or is a function of said first and second modal dampings and/or in such a way that the (damping) correction value is subtracted from the measured phase difference and/or measured values provisionally determined based on the measured phase difference.

12. The measuring system as claimed in claims 10 and 11, wherein the measuring system electronics are configured, by means of the first and second quality values, to determine the (damping) correction value, in particular in such a way that the (damping) correction value corresponds to a function of a quality (1/D2) of the second useful oscillations or a square of a degree of damping of the second useful oscillations as well as a second power of a degree of damping of the first useful oscillations or a square of a quality (1/D1) of the first useful oscillations.

13. The measuring system as claimed in one of claims 11 to 12,

- wherein the (damping) correction value corresponds to the drive offset (L1E), that is to say, in particular is dependent thereon and/or is a measure of the drive offset (L1E); and/or
- wherein the (damping) correction value corresponds to the first and second modal dampings or is a function of the first and second modal dampings, in particular in such a way that the (damping) correction value corresponds to a function of a quality (1/D2) of the second useful oscillations or a square of a degree of damping of the second useful oscillations as well as a second power of a degree of damping of the first useful oscillations or a square of a quality (1/D1) of the first useful oscillations;
and/or
- wherein the (damping) correction value corresponds to a function of a product of a quality (1/D1) of the first useful oscillations and a second power of a quality (1/D2) of the second useful oscillations or a product of a square of a degree of damping of the first useful oscillations and a second power of a square of a degree of damping of the second useful oscillations;
and/or
- wherein an amount of the (damping) correction value decreases as the first modal damping (D1) increases and/or increases as the second modal damping (D2) increases; and/or
- wherein the (damping) correction value is proportional to a ratio (D12/D2) of a second power (D12) of the first modal damping (D1) to the second modal damping (D2); and/or
- wherein the measuring system electronics are configured to save the (damping) correction value, in particular in a non-volatile memory and/or in such a way that the (damping) correction value is saved as a measuring system-specific reference value and/or is contained in a measuring function of the measuring system, according to which the measuring system converts the at least one flow parameter to be measured into the respective measured values;
and/or
- wherein the measuring system electronics are configured to compare the (damping) correction value with an initial (damping) correction value determined in advance, in particular under reference conditions and/or during a start-up of the measuring system and/or during a (re)calibration of the measuring system and/or with a different measuring system that is identical in design, in particular saved in the measuring system electronics and/or serving as a reference value;
and/or
- wherein the measuring system electronics are configured to compare the (damping) correction value with at least one threshold value specified for this, in particular representing a measuring transducer outside a specification and/or an impermissibly large drive offset (L1E);

and/or
- wherein the measuring system electronics are configured to determine an extent of the drive offset (L1E) and/or to perform a check on the measuring system by means of at least one of the first and second oscillation signals and/or the driver signal, in particular using the (damping) correction value;
and/or
- wherein the measuring system electronics (20) are configured to perform a (self-)diagnostics and/or (re) calibration of the measuring system using the (damping) correction value, in particular in the case of a measuring transducer incorporated into a pipeline system and/or by means of measuring system electronics electrically connected to the measuring transducer.

**14.** The measuring system as claimed in one of the preceding claims,

- wherein the measuring system electronics (20) are configured to determine, based on at least one of the first and second oscillation signals, a first speed value which represents a first oscillation speed, that is to say a speed of the oscillatory movements of the at least one tube performing the first useful oscillations, in particular to save this in a non-volatile memory;
and/or
- wherein the measuring system electronics (20) are configured to determine, based on at least one of the first and second oscillation signals, at least a second speed value which represents a second oscillation speed, that is to say a speed of the oscillatory movements of the at least one tube performing the second useful oscillations, in particular to save this in a non-volatile memory;
and/or
- wherein the measuring system electronics (20) are configured to determine, based on the driver signal (e1), at least an, in particular digital, first current measured value representing the first (useful) current component (eN1), in particular a (current) amplitude of the first (useful) current component (eN1) or an effective value of the first (useful) current component (eN1), in particular to save this in a non-volatile memory; and/or
- wherein the measuring system electronics (20) are configured to determine, based on the driver signal (e1), at least an, in particular digital, second current measured value representing the second (useful) current component (eN2), in particular an amplitude of the second (useful) current component (eN2) or an effective value of the second (useful) current component (eN2), in particular to save this in a non-volatile memory.

**15.** The measuring system as claimed in the preceding claim in conjunction with one of claims 13 to 14,

- wherein the measuring system electronics (20) are configured to determine the (damping) correction value by means of the first and second speed values as well as the first and second current measured values, in particular as a function of the first oscillation speed, a second power of a (current) amplitude of the second (useful) current component (eN2), a square of a (current) amplitude of the first (useful) current component (eN1) as well as a square of a second power of the second oscillation speed; and/or
- wherein the measuring system electronics (20) are configured to determine the (damping) correction value as a function of the first oscillation speed, a second power of a (current) amplitude of the second (useful) current component (eN2), a square of a (current) amplitude of the first (useful) current component (eN1) as well as a square of a second power of the second oscillation speed, in particular using the first and second speed values as well as the first and second current measured values.

**16.** The measuring system as claimed in one of the preceding claims,

- wherein the first useful signal components (s1N1; s2N1) of the first and second oscillation signals follow a change in a mass flow of the measured substance conducted in the tube with a change in a (measured) phase difference between the first useful signal components, that is to say a difference between a phase angle of the first useful signal component (s1N1) of the first oscillation signal (s1) and a phase angle of the first useful signal component (s2N1) of the second oscillation signal (s2);
- and wherein the measuring system electronics are configured to generate mass flow measured values representing the mass flow based on the (measured) phase difference between the first useful signal components (s1N1; s2N1).

**17.** The measuring system as claimed in the preceding claim, wherein in the measuring system electronics a phase difference-to-measured value characteristic curve function is configured, according to which the measuring system electronics can determine or determine measured values representing the at least one flow parameter of the measured substance based on the measured phase difference, that is to say, in particular mass flow measured values representing the mass flow of the measured substance, in particular in such a way that the first and second modal dampings are considered in the phase difference-to-mass flow measured value characteristic curve function or in such a way that the (damping) correction value is contained in the phase difference-to-mass flow measured value characteristic curve function.

18. The measuring system as claimed in the preceding claim,

- wherein the first and second modal dampings are considered in the phase difference-to-mass flow measured value characteristic curve function or the (damping) correction value is contained in the phase difference-to-mass flow measured value characteristic curve function, in particular in such a way that the phase difference-to-mass flow measured value characteristic curve function considers a product of a second power of the first modal damping (D1) and a square of the second modal damping (D2) and/or contains a product of a second power of the square of the quality (1/01) of the first useful oscillations and the quality (1/D2) of the second useful oscillations; and/or
- wherein the measuring system electronics are configured to check the phase difference-to-measured value characteristic curve function by means of at least one of the first and second oscillation signals and/or the driver signal, in particular using the (damping) correction value.

19. The measuring system as claimed in one of the preceding claims,

- wherein the measuring system electronics (20) have a non-volatile memory (EEPROM) which is configured to store digital data, that is to say, in particular first and second quality values and/or a (damping) correction value, in particular even when there is no operating voltage; and/or
- wherein the measuring transducer, with the exception of the oscillation exciter, does not have any other oscillation exciters that are mechanically connected to the at least one tube (111); and/or
- wherein the oscillation exciter (31) is formed by a moving coil, in particular one having an air coil and an anchor; and/or
- wherein both of the first and second oscillation sensors are formed in each case by a plunger coil, in particular one with an air coil and an anchor.

20. The measuring system as claimed in one of the preceding claims, wherein the measuring system electronics are configured to supply the driver signal (e1) with the second (useful) current component (eN2) during a test interval, in particular one that lasts for more than 10 ms and/or is temporary and/or is restarted repeatedly.

21. The measuring system as claimed in the preceding claim,

- wherein each test interval lasts for more than 100 ms (milliseconds), in particular not less than 1 s (second); and/or
- wherein the measuring system electronics are configured to start and/or to end the test interval automatically, in particular in a time-controlled manner, in particular on a recurring basis; and/or
- wherein the measuring system electronics are configured to receive and execute one or more commands which start the test interval.

22. The measuring system as claimed in one of the preceding claims,

- wherein the exciter arrangement, with the exception of the oscillation exciter (31), does not have any other oscillation exciters that are connected to the tube; and/or
- wherein the oscillation exciter (31) is positioned and aligned in such a way that the drive offset is less than 0.5 mm, that is to say, in particular is zero, or in such a way that the centroid of an area of the drive cross-sectional area of the tube corresponds to the drive reference point or coincides with it; and/or
- wherein both of the oscillation modes of the first and of the second order of the tube have in each case a first node located in the first tube end of the at least one tube and a second node located in the second tube end of the at least one tube;
and/or
- wherein the tube is curved in sections, in particular is in the shape of an arc and/or a V, in particular in such a way that the tube has a central crown segment and/or in such a way that precisely one main axis of inertia of the at least one tube is inside the reference cross-sectional area of the at least one tube;
and/or
- wherein the tube is straight in sections, in particular over the entire tube length, in particular in such a way that a center of mass is inside the reference cross-sectional area of the at least one tube.

23. The measuring system as claimed in one of the preceding claims, wherein the tube arrangement has at least one second tube (112), in particular curved at least in sections and/or straight at least in sections and/or identical in design to the first tube and/or parallel to the first tube at least in sections.

24. The measuring system as claimed in the preceding claim,

- wherein the oscillation exciter (31) is partially mechanically connected to the first tube and also partially mechanically connected to the second tube;
and/or
- wherein the oscillation exciter (31) is configured to act differentially on the first and second tubes, in particular in such a way that the first and second tubes simultaneously execute forced mechanical oscillations in opposite directions at the same frequency; and/or
- wherein the oscillation exciter (31) is configured to convert electrical power of a time-variable electrical current into mechanical power in such a way that a time-variable driving force acts on the second tube at a drive point formed by means of the oscillation exciter on the second tube mechanically connected to it, in particular at the same time as and/or in the opposite direction to the driving force acting on the first tube at the drive point formed by means of the oscillation exciter on the first tube mechanically connected to it;
and/or
- wherein the oscillation exciter (31) is configured to convert electrical power supplied by means of the electrical driver signal (e1) simultaneously into forced mechanical oscillations of the first and second tubes, in particular in such a way that the first and second tubes simultaneously execute forced mechanical oscillations with the first useful frequency and/or with the second useful frequency.

**Revendications**

1. Système de mesure vibronique, notamment un débitmètre massique Coriolis ou un débitmètre massique Coriolis/densimètre,

- lequel système de mesure, réalisé notamment comme appareil de mesure en ligne et/ou comme appareil de mesure de construction compacte, est conçu pour mesurer au moins un paramètre d'écoulement, notamment à savoir un débit massique et/ou un débit volumique et/ou une vitesse d'écoulement d'un produit fluide s'écoulant notamment dans une conduite et/ou dans un tuyau flexible, notamment d'un gaz, d'un liquide ou d'une dispersion
- et lequel système de mesure comprend :

-- un transducteur (10)

--- avec un agencement de tubes destiné à guider le produit en écoulement,
--- avec un circuit d'excitation destiné à convertir la puissance électrique en puissance mécanique servant à exciter et à maintenir des vibrations mécaniques forcées de l'agencement de tubes
--- et avec un agencement de capteurs destiné à détecter les vibrations mécaniques de l'agencement de tubes et à mettre à disposition des signaux de vibration représentant respectivement des mouvements de vibration de l'agencement de tubes ;

-- ainsi qu'une électronique de système de mesure (20) raccordée électriquement au transducteur, notamment à savoir aussi bien à son circuit d'excitation qu'à son agencement de capteurs et/ou au moyen de fils de liaison électriques, laquelle électronique est notamment formée au moyen d'au moins un microprocesseur et/ou disposée dans un boîtier de protection électronique, l'électronique de système de mesure (20) étant conçue pour injecter au moins temporairement un signal d'attaque électrique (e1) dans l'excitateur de vibrations ;

- l'agencement de tubes présentant au moins un premier tube (111), notamment au moins partiellement courbé et/ou au moins partiellement droit,

-- lequel tube s'étend d'une première extrémité de tube jusqu'à une deuxième extrémité de tube avec une longueur de tube, notamment supérieure à 100 mm, et lequel tube présente un canal intérieur entouré d'une paroi de tube, notamment métallique, lequel canal s'étend de la première extrémité de tube jusqu'à la deuxième extrémité de tube,

-- et lequel tube est conçu pour être traversé par un produit au moins dans un sens d'écoulement orienté de la première extrémité de tube vers la deuxième extrémité de tube et pour être laissé vibrer pendant ce temps,

-- et l'agencement de tubes comprenant une pluralité de modes de vibration (modes de vibration propres), lesquels modes présentent respectivement un amortissement (modal) (D1, D2, ..., Dx) associé ainsi qu'une fréquence de résonance associée (f1, f2, , fx) (co)déterminée par lesdits modes, modes dans lesquels l'au moins un tube peut exécuter ou exécute des mouvements de vibration (amortis) présentant respectivement un ou plusieurs ventres de vibration et respectivement deux ou plusieurs nœuds de vibration, de telle sorte,

--- que les mouvements de vibration du tube dans un mode de vibration fondamental, à savoir un mode de vibration de premier ordre (mode f1), notamment à savoir un mode de vibration de flexion de premier ordre, présentent exactement un ventre de vibration et deux nœuds de vibration

--- et que les mouvements de vibration du tube dans un mode de vibration supérieur, notamment à savoir un mode de vibration de deuxième ordre ou d'ordre supérieur (mode f2, mode f3, mode f4,... mode fx), notamment à savoir un mode de vibration de flexion de deuxième ordre ou d'ordre supérieur, présentent deux ventres de vibration ou plus et trois nœuds de vibration ou plus ;

- le circuit d'excitation présentant au moins un excitateur de vibrations (31), notamment unique et/ou électrodynamique

-- lequel circuit est relié mécaniquement avec l'au moins un tube

-- et lequel circuit est conçu pour convertir la puissance électrique, avec un courant électrique variable dans le temps, en puissance mécanique, de telle sorte qu'en un point d'entraînement formé au moyen de l'excitateur de vibrations sur le tube relié mécaniquement audit excitateur, une force d'entraînement variable dans le temps agit sur le tube, notamment de telle sorte qu'une ligne d'action de la force d'entraînement s'étend perpendiculairement à une normale à une surface de section transversale d'entraînement du tube,

-- l'excitateur de vibrations (31) étant positionné et orienté de telle sorte qu'un décalage d'entraînement (ΔE), à savoir la plus petite distance entre une surface de section transversale d'entraînement du tube, laquelle surface est entourée par une ligne périphérique imaginaire du tube passant par le point d'entraînement, et une surface de section transversale de référence de l'au moins un tube, laquelle surface est prédéfinie et notamment déterminée lorsque le transducteur est intact ou d'origine, n'est pas supérieure à 3 mm, notamment inférieure à 2 mm, et/ou inférieure à 0,5 % de la longueur du tube, notamment inférieure à 0,2 % de la longueur du tube, un nœud de vibration de mouvements de vibration, lequel nœud est formé entre deux ventres de vibration de mouvements de vibration de l'au moins un tube dans un mode de vibration (de deuxième ordre ou d'ordre supérieur) (différent du mode de vibration de premier ordre), notamment situé (nominalement) à une demi-longueur de tube, se trouvant à l'intérieur de la surface de section transversale de référence ;

- l'agencement de capteurs présentant un premier capteur de vibrations, notamment électrodynamique ou optoélectrique,

-- lequel capteur est positionné sur le tube, notamment à une distance de plus de 10 mm et/ou de plus d'un cinquième de la longueur du tube dans le sens de l'écoulement, par rapport à l'excitateur de vibrations, et lequel capteur est notamment relié mécaniquement au moins partiellement au tube,

-- et lequel capteur est conçu pour détecter des mouvements de vibration de l'au moins un tube et les convertir en un premier signal de vibration, notamment électrique ou optique, représentant lesdits mouvements de vibration, notamment de telle sorte que le premier signal de vibration contienne une ou plusieurs composantes de signal sinusoïdales ayant chacune une fréquence correspondant à une fréquence des mouvements de vibration du tube ;

- et l'agencement de capteurs présentant au moins un deuxième capteur de vibrations, notamment électrodynamique ou opto-électrique,

-- lequel capteur est positionné sur le tube, notamment à une distance de plus de 10 mm et/ou de plus d'un cinquième de la longueur du tube dans le sens d'écoulement, par rapport à l'excitateur de vibrations, et/ou lequel capteur est distant du premier capteur de vibrations dans le sens d'écoulement, et lequel capteur est notamment relié mécaniquement au moins partiellement au tube

-- et lequel capteur est conçu pour détecter des mouvements de vibration de l'au moins un tube et les convertir en un deuxième signal de vibration, notamment électrique ou optique, représentant lesdits mouvements de vibration, notamment de telle sorte que le deuxième signal de vibration contienne une ou plusieurs composantes de signal sinusoïdales ayant chacune une fréquence correspondant à une fréquence des mouvements de vibration du tube ;

- l'électronique de système de mesure (20) étant conçue pour injecter dans l'excitateur de vibrations (31) le signal d'attaque électrique (e1)

-- aussi bien au moins temporairement avec une première composante de courant (utile) sinusoïdale (eN1) présentant une première fréquence (alternative) ($f_{eN1}$) et une première amplitude (de courant), notamment prédéfinie et/ou variable, pour générer des premières vibrations utiles, à savoir des vibrations mécaniques forcées de l'au moins un tube par l'excitateur de vibrations (alimenté) avec une première fréquence utile (fN1), à savoir une fréquence (de vibration) correspondant à la première fréquence (alternative), de telle sorte

--- que la première fréquence (alternative) ($f_{eN1}$) s'écarte d'une fréquence de résonance ($f_{2n+1}$) d'un mode de vibration d'ordre impair, notamment à savoir le mode de vibration fondamental (mode f1), de moins de 1 % de ladite fréquence de résonance ($f_{2n+1}$) et/ou de moins de 1 Hz, notamment à savoir correspond à la fréquence de résonance (f1) du mode de vibration d'ordre impair et/ou de telle sorte que les deuxièmes vibrations utiles soient appropriées pour provoquer des forces de Coriolis dans un produit à mesurer s'écoulant à travers l'au moins un tube avec un débit massique non nul, la fréquence de résonance ($f_{2n+1}$) correspondant à un premier amortissement modal (D1) associé du même mode de vibration d'ordre impair ou étant dépendante dudit amortissement,

--- et que les premiers ou deuxièmes signaux de vibration générés au moyen des premiers et deuxièmes capteurs de vibrations présentent chacun une première composante de signal utile (s1N1 ; s2N1), à savoir une composante de signal sinusoïdale avec une fréquence (de signal) correspondant à la première fréquence utile (fN1), notamment également avec un angle de phase dépendant du débit massique du produit à mesurer s'écoulant à travers l'au moins un tube,

-- qu'au moins temporairement avec une deuxième composante de courant (utile) sinusoïdale (eN2) présentant une deuxième fréquence (alternative) ($f_{eN2}$) et une deuxième amplitude (de courant), notamment prédéfinie et/ou variable, pour générer des deuxièmes vibrations utiles, à savoir des vibrations mécaniques forcées du tube par l'excitateur de vibrations (alimenté) avec une deuxième fréquence utile (fN2), à savoir une fréquence (de vibration) correspondant à la deuxième fréquence (alternative), notamment en même temps que la première composante de courant (utile) (eN1), de telle sorte,

--- que la deuxième fréquence (alternative) ($f_{eN2}$) s'écarte d'une fréquence de résonance ($f_{2n+2}$) d'un mode de vibration d'ordre pair, notamment du mode de vibration de deuxième ordre (mode f2), de moins de 1 %, notamment de moins de 0,1 %, de ladite fréquence de résonance ($f_{2n+2}$), et/ou de moins de 1 Hz, notamment de moins de 0,1 Hz, à savoir qu'elle correspond à la fréquence de résonance ($f_{2n+2}$) du mode de vibration d'ordre pair, la fréquence de résonance ($f_{2n+2}$) correspondant à un deuxième amortissement modal (D2) associé du mode de vibration d'ordre pair ou étant dépendant dudit amortissement,

--- et que les premier ou deuxième signaux de vibration générés au moyen des premier et deuxième capteurs de vibrations présentent chacun une deuxième composante de signal utile (s1N2 ; s2N2), à savoir une composante de signal sinusoïdale avec une fréquence (de signal) correspondant à la deuxième fréquence utile (fN2),

- et l'électronique de système de mesure (20) étant conçue pour déterminer - à l'aide des premières composantes de signal utiles (s1N1, s2N1), notamment à l'aide d'une différence entre un angle de phase de la première composante de signal utile (s1N1) du premier signal de vibration (s1) et un angle de phase de la première composante de signal utile (s2N1) du deuxième signal de vibration (s2), ainsi qu'au moins une des deuxièmes composantes de signal utiles (s1N2, s2N2) et/ou de la deuxième composante de courant (utile) (eN2) - des valeurs mesurées représentant au moins un paramètre d'écoulement du produit à mesurer, notamment des valeurs mesurées de débit massique représentant le débit massique du produit à mesurer.

2. Système de mesure selon la revendication 1, pour lequel la première fréquence utile s'écarte d'une fréquence de résonance, f1, du mode de vibration fondamental (mode f1), notamment d'un mode de vibration de flexion de premier ordre, de moins de 1 % de la même fréquence de résonance, f1, et/ou de moins de 1 Hz.

3. Système de mesure selon la revendication 1, pour lequel la première fréquence utile s'écarte d'une fréquence de résonance, f3, d'un mode de vibration de troisième ordre (mode f3) inhérent à l'au moins un tube, notamment à savoir un mode de vibration de flexion de troisième ordre, mode de vibration dans lequel les mouvements de vibration du tube présentent exactement trois ventres de vibration et quatre nœuds de vibration, de moins de 1 % de la fréquence de résonance, f3, et/ou de moins de 1 Hz, notamment à savoir la fréquence de résonance, f3.

4. Système de mesure selon la revendication précédente, pour lequel un premier nœud de vibration des mouvements de vibration de l'au moins un tube dans le mode de vibration de troisième ordre est situé dans la première extrémité de tube et un deuxième nœud de vibration des mouvements de vibration de l'au moins un tube dans le mode de vibration de troisième ordre est situé dans la deuxième extrémité de tube.

5. Système de mesure selon l'une des revendications précédentes, pour lequel la deuxième fréquence utile s'écarte d'une fréquence de résonance, f2, d'un mode de vibration de deuxième ordre (mode f2) inhérent à l'au moins un tube, notamment à savoir un mode de vibration de flexion de deuxième ordre, mode de vibration dans lequel les mouvements de vibration du tube présentent exactement deux ventres de vibration et trois nœuds de vibration, de moins de 1 % de la fréquence de résonance, f2, et/ou de moins de 1 Hz, notamment à savoir de la fréquence de résonance, f2.

6. Système de mesure selon la revendication précédente,

    - pour lequel un premier nœud de vibration des mouvements de vibration de l'au moins un tube dans le mode de vibration de deuxième ordre est situé dans la première extrémité de tube et un deuxième nœud de vibration des mouvements de vibration de l'au moins un tube dans le mode de vibration de deuxième ordre est situé dans la deuxième extrémité de tube ; et/ou
    - pour lequel un nœud de vibration des mêmes mouvements de vibration formé entre les deux ventres de vibration des mouvements de vibration de l'au moins un tube dans le mode de vibration de deuxième ordre, notamment situé à une demi-longueur de tube, se trouve à l'intérieur de la surface de section transversale de référence ;
    - et/ou pour lequel un axe principal d'inertie de l'au moins un tube, perpendiculaire à la direction de vibration des mouvements de vibration du tube dans le mode de vibration de deuxième ordre, se trouve à l'intérieur de la surface de section transversale de référence de l'au moins un tube.

7. Système de mesure selon l'une des revendications précédentes,

    - pour lequel le décalage d'entraînement ($\Delta$E) correspond à une distance entre un centre de gravité (centre) de la surface de section transversale d'entraînement du tube et un centre de gravité (centre) de la surface de section transversale de référence de l'au moins un tube ; et/ou
    - une ligne d'action de la force d'entraînement étant perpendiculaire à une normale d'une surface de section transversale d'entraînement du tube ; et/ou
    - une droite d'intersection de deux plans de symétrie mutuellement orthogonaux de l'au moins un tube se trouvant à l'intérieur de la surface de section transversale de référence ; et/ou
    - un axe principal d'inertie de l'au moins un tube, perpendiculaire à la force d'entraînement, étant situé à l'intérieur de la surface de section de référence de l'au moins un tube ; et/ou
    - le décalage d'entraînement ($\Delta$E) résultant d'une tolérance de fabrication lors de la fabrication du circuit d'excitation, notamment à savoir de tolérances lors d'un positionnement de l'excitateur de vibrations sur au moins un tube et/ou de tolérances lors d'un positionnement de l'agencement de tubes à l'intérieur d'un boîtier de protection de transducteur ; et/ou
    - le décalage d'entraînement ($\Delta$E) résultant d'une tolérance de fabrication lors de la fabrication de l'agencement de tubes, notamment à savoir la fabrication de l'au moins un tube.

8. Système de mesure selon l'une des revendications précédentes,

- pour lequel l'électronique de système de mesure est conçue pour fournir le deuxième courant utile du signal d'attaque (e1) au moins temporairement et simultanément avec la première composante de courant (utile), notamment de telle sorte qu'une amplitude de la première composante de courant (utile) ne soit pas inférieure à une amplitude de la deuxième composante de courant (utile) et/ou qu'une amplitude de la deuxième composante de courant (utile) soit réglée à plus de 40 %, notamment à pas moins de 50 %, d'une amplitude de la première composante de courant (utile) ; et/ou

- pour lequel l'électronique de système de mesure (20) est conçue pour injecter simultanément les premier et deuxième courants (utiles) du signal d'attaque dans l'excitateur de vibrations, notamment pour un intervalle de temps qui n'est pas inférieur à deux périodes de vibration de la première composante de courant (utile) et/ou qui dure plus de 10 ms ; et/ou

- pour lequel l'électronique de système de mesure (20) est conçue pour activer la deuxième composante de courant (utile) pendant l'injection de la première composante de courant (utile), notamment pour désactiver à nouveau la deuxième composante de courant (utile) après un intervalle de temps qui n'est pas inférieur à deux périodes de vibration du premier composant de courant (utile) et/ou qui dure plus de 1 s ; et/ou

- pour lequel l'électronique de système de mesure est conçue pour régler la deuxième fréquence (alternative) en fonction de la première fréquence (alternative), notamment de telle sorte que la deuxième fréquence (alternative) se situe à l'intérieur d'un intervalle de réglage de fréquence dont une limite d'intervalle supérieure et/ou une limite d'intervalle inférieure et/ou une fréquence centrale correspondent à un multiple prédéfini de la première fréquence (alternative), notamment à plus de 230 % de la première fréquence (alternative) et/ou à moins de 300 % de multiples de la première fréquence (alternative) correspondant à la première fréquence (alternative) ; et/ou

- pour lequel l'électronique de système de mesure (20) est conçue - sur la base des premier et deuxième signaux de vibration (s1, s2) et/ou du signal d'attaque (e1), notamment à l'aide d'au moins une première composante de signal utile (s1N1, s2N1) et d'au moins une deuxième composante de signal utile (s1N2, s2N2) et/ou à l'aide des première et deuxième composantes de courant (utiles) (eN1, eN2) - pour effectuer un (auto)diagnostic et/ou un (ré)étalonnage du système de mesure, notamment lorsque le transducteur est intégré dans un système de conduite et/ou au moyen d'une électronique de système de mesure raccordée électriquement au transducteur ; et/ou

- pour lequel l'électronique de système de mesure est conçue pour suivre une modification d'une densité du produit à mesurer guidé dans le tube avec une modification de la première fréquence (alternative) du signal d'attaque, et pour lequel l'électronique de système de mesure est conçue pour générer, à l'aide de la première fréquence (alternative) du signal d'attaque et/ou à l'aide de la fréquence de signal de la première composante de signal utile de l'au moins un des signaux de vibration (s1N1 ; s2N1), des valeurs mesurées de densité représentant la densité.

9. Système de mesure selon l'une des revendications précédentes,

- pour lequel le système de mesure comprend en outre une ossature de support (100), notamment métallique et/ou réalisée sous forme de boîtier de protection de transducteur, l'ossature de support et l'agencement de tubes étant fixés l'un à l'autre, notamment de manière amovible, et le circuit d'excitation, notamment à savoir l'au moins un excitateur de vibrations, et/ou l'agencement de capteurs, notamment à savoir les premier et deuxième capteurs de vibrations, étant montés partiellement sur l'ossature de support ; et/ou

- pour lequel le système de mesure comprend en outre un boîtier de protection électronique (200) pour l'électronique de système de mesure (20), lequel boîtier est notamment métallique et/ou fixé sur une ossature de support ou sur un boîtier de protection du transducteur.

10. Système de mesure selon l'une des revendications précédentes,

- pour lequel l'électronique de système de mesure est conçue pour déterminer, sur la base de la première composante de signal utile (s1N1 ; s2N1) d'au moins l'un des premier et deuxième signaux de vibration et/ou de la première composante de courant (utile) (eN1) d'attaque, au moins une première valeur de qualité, notamment numérique, la première valeur de qualité représentant une mesure du premier amortissement modal (D1), notamment un facteur de qualité (1/D1) des premières vibrations utiles ou un degré d'amortissement des premières vibrations utiles, ou dépendant dudit premier amortissement modal (D1), et

- pour lequel l'électronique de système de mesure est conçue pour déterminer, sur la base de la deuxième composante de signal utile (s1N2 ; s2N2) d'au moins l'un des premier et deuxième signaux de vibration et/ou de la deuxième composante de courant (utile) (eN2) du signal d'attaque, au moins une deuxième valeur de qualité, notamment numérique, la deuxième valeur de qualité représentant une mesure du deuxième amortissement modal (D2), notamment à savoir une qualité (1/D2) des deuxièmes vibrations utiles ou un degré d'amortissement des deuxièmes vibrations utiles, ou dépendant dudit deuxième amortissement modal (D2).

11. Système de mesure selon l'une des revendications précédentes,

- pour lequel l'électronique de système de mesure est conçue pour déterminer des valeurs mesurées représentant au moins provisoirement l'au moins un paramètre d'écoulement du produit à mesurer, notamment des valeurs mesurées de débit massique représentant au moins provisoirement le débit massique du produit à mesurer, à l'aide d'une différence de phase de mesure, à savoir une différence entre un angle de phase de la première composante de signal utile (s1N1) du premier signal de vibration (s1) et un angle de phase de la première composante de signal utile (s2N1) du deuxième signal de vibration (s2),
- et pour lequel l'électronique de système de mesure est conçue pour déterminer, sur la base des premier et deuxième signaux de vibration (s1, s2) et/ou du signal d'attaque (e1), notamment à l'aide d'au moins une première composante de signal utile (s1N1, s2N1) et d'au moins une deuxième composante de signal utile (s1N2, s2N2) et/ou à l'aide des première et deuxième composantes de courant (utile) (eN1, eN2), pour déterminer au moins une valeur de correction (d'amortissement), notamment numérique, pour la différence de phase de mesure et/ou des valeurs mesurées déterminées provisoirement à l'aide de cette même différence de phase de mesure, notamment de telle sorte que la valeur de correction (d'amortissement) corresponde aux premier et deuxième amortissement modaux ou soit une fonction desdits premier et deuxième amortissement modaux et/ou que la valeur de correction (d'amortissement) soit déduite de la différence de phase de mesure et/ou de valeurs mesurées déterminées provisoirement à l'aide de la différence de phase de mesure.

12. Système de mesure selon les revendications 10 et 11, pour lequel l'électronique de système de mesure est conçue pour déterminer la valeur de correction (d'amortissement) au moyen des premières et deuxièmes valeurs de qualité, notamment de telle sorte que la valeur de correction (d'amortissement) corresponde à une fonction d'une qualité (1/D2) des deuxièmes vibrations utiles ou à une valeur inverse d'un degré d'amortissement des deuxièmes vibrations utiles ainsi qu'à une deuxième puissance d'un degré d'amortissement des premières vibrations utiles ou à une valeur inverse d'une qualité (1/D1) des premières vibrations utiles.

13. Système de mesure selon l'une des revendications 11 à 12,

- pour lequel la valeur de correction (d'amortissement) correspond au décalage d'entraînement ($\Delta E$), notamment laquelle valeur de correction dépend dudit décalage d'entraînement et/ou est une mesure du décalage d'entraînement ($\Delta E$) ; et/ou
- pour lequel la valeur de correction (d'amortissement) correspond aux premier et deuxième amortissements modaux ou est une fonction des premier et deuxième amortissements modaux, notamment de telle sorte que la valeur de correction (d'amortissement) corresponde à une fonction d'un facteur de qualité (1/D2) des deuxièmes vibrations utiles ou à une valeur inverse d'un facteur d'amortissement des deuxièmes vibrations utiles ainsi qu'à une deuxième puissance d'un facteur d'amortissement des premières vibrations utiles ou à une valeur inverse d'un facteur de qualité (1/D1) des premières vibrations utiles ; et/ou
- pour lequel la valeur de correction (d'amortissement) correspond à une fonction d'un produit d'un facteur de qualité (1/D1) des premières vibrations utiles et d'une deuxième puissance d'un facteur de qualité (1/D2) des deuxièmes vibrations utiles ou d'un produit d'une valeur inverse d'un degré d'amortissement des premières vibrations utiles et d'une deuxième puissance d'une valeur inverse d'un degré d'amortissement des deuxièmes vibrations utiles ; et/ou
- pour lequel une valeur de la valeur de correction (d'amortissement) devient plus petite lorsque le premier amortissement modal (D1) augmente et/ou plus grande lorsque le deuxième amortissement modal (D2) augmente ; et/ou
- pour lequel la valeur de correction (d'amortissement) est proportionnelle à un rapport ($D1^2/D2$) entre une deuxième puissance ($D1^2$) du premier amortissement modal (D1) et le deuxième amortissement modal (D2) ; et/ou
- pour lequel l'électronique de système de mesure est conçue pour mémoriser la valeur de correction (d'amortissement), notamment dans une mémoire de données non volatile et/ou de telle sorte que la valeur de correction (d'amortissement) est mémorisée en tant que valeur de référence spécifique à un système de mesure et/ou est contenue dans une fonction de mesure du système de mesure, selon laquelle le système de mesure convertit l'au moins un paramètre d'écoulement à mesurer en les valeurs mesurées respectives ; et/ou

- pour lequel l'électronique de système de mesure est conçue pour comparer la valeur de correction (d'amortissement) avec une valeur de correction (d'amortissement) initiale déterminée au préalable, notamment dans des conditions de référence et/ou pendant une mise en service du système de mesure et/ou pendant un (ré) étalonnage du système de mesure et/ou avec un autre système de mesure de construction identique, laquelle valeur de correction (d'amortissement) initiale est notamment enregistrée dans l'électronique du système de mesure et/ou sert de valeur de référence ; et/ou

- pour lequel l'électronique de système de mesure est conçue pour comparer la valeur de correction (d'amortissement) avec au moins une valeur seuil prédéfinie à cet effet, laquelle valeur seuil représente notamment un transducteur situé en dehors d'une spécification et/ou un décalage d'entraînement (ΔE) d'une amplitude inadmissible ; et/ou

- pour lequel l'électronique de système de mesure est conçue pour déterminer une ampleur du décalage d'entraînement (ΔE) au moyen d'au moins l'un des premier et deuxième signaux de vibration et/ou du signal d'attaque, notamment en utilisant la valeur de correction (d'amortissement), et/ou pour effectuer un contrôle du système de mesure ; et/ou

- pour lequel l'électronique de système de mesure (20) est conçue pour effectuer, en utilisant la valeur de correction (d'amortissement), un (auto)diagnostic et/ou un (ré)étalonnage du système de mesure, notamment lorsque le transducteur est intégré dans un système de conduite et/ou au moyen d'une électronique de système de mesure raccordée électriquement au transducteur.

**14.** Système de mesure selon l'une des revendications précédentes,

- pour lequel l'électronique de système de mesure (20) est conçue pour déterminer, à l'aide d'au moins l'un des premier et deuxième signaux de vibration, une première valeur de vitesse qui représente une première vitesse de vibration, à savoir une vitesse des mouvements de vibration de l'au moins un tube exécutant les premières vibrations utiles, notamment pour l'enregistrer dans une mémoire de données non volatile ; et/ou

- pour lequel l'électronique de système de mesure (20) est conçue pour déterminer, à l'aide d'au moins l'un des premiers et deuxièmes signaux de vibration, au moins une deuxième valeur de vitesse qui représente une deuxième vitesse de vibration, à savoir une vitesse des mouvements de vibration de l'au moins un tube exécutant les deuxièmes vibrations utiles, notamment pour l'enregistrer dans une mémoire de données non volatile ; et/ou

- pour lequel l'électronique de système de mesure (20) est conçue pour déterminer, à l'aide du signal d'attaque (e1), au moins une première valeur mesurée de courant, notamment numérique, représentant la première composante de courant (utile) (eN1), notamment une amplitude (de courant) de la première composante de courant (utile) (eN1) ou une valeur efficace de la première composante de courant (utile) (eN1), notamment pour l'enregistrer dans une mémoire de données non volatile ; et/ou

- pour lequel l'électronique de système de mesure (20) est conçue pour déterminer, à l'aide du signal d'attaque (e1), au moins une deuxième valeur de mesure de courant, notamment numérique, représentant la deuxième composante de courant (utile) (eN2), notamment une amplitude de la deuxième composante de courant (utile) (eN2) ou une valeur efficace de la deuxième composante de courant (utile) (eN2), notamment pour l'enregistrer dans une mémoire de données non volatile.

**15.** Système de mesure selon la revendication précédente en combinaison avec l'une des revendications 13 à 14,

- dans lequel le système électronique de mesure (20) est conçu pour déterminer la valeur de correction (d'amortissement) au moyen des première et deuxième valeurs de vitesse ainsi que des première et deuxième valeurs mesurées de courant, notamment en fonction de la première vitesse de vibration, d'une deuxième puissance d'une amplitude (de courant) de la deuxième composante (utile) de courant (eN2), d'une valeur inverse d'une amplitude (de courant) de la première composante (utile) de courant (eN1) ainsi que d'une valeur inverse d'une deuxième puissance de la deuxième vitesse de vibration ; et/ou

- pour lequel l'électronique de système de mesure (20) est conçue pour déterminer la valeur de correction (d'amortissement) en fonction de la première vitesse de vibration, d'une deuxième puissance d'une amplitude (de courant) de la deuxième composante de courant (utile) (eN2), d'une valeur inverse d'une amplitude (de courant) de la première composante de courant (utile) (eN1) ainsi que d'une valeur inverse d'une deuxième puissance de la deuxième vitesse de vibration, notamment en utilisant les première et deuxième valeurs de vitesse ainsi que les première et deuxième valeurs mesurées de courant.

**16.** Système de mesure selon l'une des revendications précédentes,

- pour lequel les premières composantes de signal utiles (s1N1 ; s2N1) des premier et deuxième signaux de vibration suivent une modification d'un débit massique du produit guidé dans le tube avec une modification d'une différence de phase (de mesure) des premières composantes de signal utiles, à savoir une différence entre un angle de phase de la première composante de signal utile (s1N1) du premier signal de mesure de vibration (s1) et un angle de phase de la première composante de signal utile (s2N1) du deuxième signal de mesure de vibration (s2) ; et

- pour lequel l'électronique de système de mesure est conçue pour générer, à l'aide de la différence de phase (de mesure) des premières composantes de signal utiles (s1N1 ; s2N1), des valeurs mesurées de débit massique représentant le débit massique.

**17.** Système de mesure selon la revendication précédente, pour lequel, dans l'électronique de système de mesure, une fonction caractéristique « différence de phase/valeur mesurée », selon laquelle l'électronique de système de mesure représente, à l'aide de la différence de phase de mesure, l'au moins un paramètre d'écoulement du produit, notamment des valeurs mesurées de débit massique représentant le débit massique du produit, notamment de telle sorte que les premier et deuxième amortissements modaux sont pris en compte dans la fonction caractéristique « différence de phase/valeur mesurée » du débit massique ou que la valeur de correction (d'amortissement) est contenue dans la fonction caractéristique « différence de phase/valeur mesurée » du débit massique.

**18.** Système de mesure selon la revendication précédente,

- pour lequel les premier et deuxième amortissements modaux sont pris en compte dans la fonction caractéristique « différence de phase/valeur mesurée » du débit massique ou la valeur de correction (d'amortissement) est contenue dans la fonction caractéristique « différence de phase/valeur mesurée » du débit massique, notamment de telle manière qu'un produit d'une deuxième puissance du premier amortissement modal (D1) et d'une valeur inverse du deuxième amortissement modal (D2) est pris en compte dans la fonction caractéristique « différence de phase/valeur mesurée » du débit massique et/ou qu'un produit d'une deuxième puissance de la valeur inverse du facteur de qualité (1/DI) des premières vibrations utiles et du facteur de qualité (1/D2) des deuxièmes vibrations utiles est contenu ; et/ou
- pour lequel l'électronique de système de mesure est conçue pour vérifier la fonction caractéristique « différence de phase/valeur mesurée » au moyen d'au moins l'un des premier et deuxième signaux de vibration et/ou du signal d'attaque, notamment en utilisant la valeur de correction (d'amortissement).

**19.** Système de mesure selon l'une des revendications précédentes,

- pour lequel l'électronique de système de mesure (20) présente une mémoire de données non volatile (EEPROM), laquelle est conçue pour conserver des données numériques, notamment des premières et deuxièmes valeurs de qualité et/ou une valeur de correction (d'amortissement), notamment même sans tension de service appliquée ; et/ou
- pour lequel le circuit d'excitation ne comporte pas, en dehors de l'excitateur de vibrations, d'autre excitateur de vibrations qui soit relié mécaniquement à l'au moins un tube (111) ; et/ou
- l'excitateur de vibrations (31) étant formé au moyen d'une bobine mobile, présentant notamment une bobine à air et un induit ; et/ou
- chacun des premier et deuxième capteurs de vibrations étant formé respectivement au moyen d'une bobine à noyau plongeur, présentant notamment une bobine à air et un induit.

**20.** Système de mesure selon l'une des revendications précédentes, pour lequel l'électronique de système de mesure est conçue pour mettre à disposition le signal d'attaque (e1) avec la deuxième composante de courant (utile) (eN2) pendant un intervalle de test, notamment d'une durée supérieure à 10 ms et/ou limité dans le temps et/ou démarré de manière récurrente.

**21.** Système de mesure selon la revendication précédente,

- pour lequel l'intervalle de test dure à chaque fois plus de 100 ms (millisecondes), notamment pas moins de 1 s (seconde) ; et/ou
- pour lequel l'électronique de système de mesure est conçue pour démarrer et/ou terminer automatiquement, notamment de manière commandée dans le temps, l'intervalle de test, notamment de manière récurrente ; et/ou
- pour lequel l'électronique de système de mesure est conçue pour recevoir et exécuter une ou plusieurs instructions qui démarre(nt) l'intervalle de test

22. Système de mesure selon l'une des revendications précédentes,

- pour lequel le circuit d'excitation ne comporte pas d'autre excitateur de vibrations relié au tube que l'excitateur de vibrations (31) ; et/ou
- pour lequel l'excitateur de vibrations (31) est positionné et orienté de telle sorte que le décalage d'entraînement soit inférieur à 0,5 mm, notamment qu'il soit nul, ou que le centre de gravité de surface de la section transversale d'entraînement du tube corresponde au point de référence d'entraînement ou coïncide avec le dit point de référence,
et/ou
- pour lequel chacun des modes de vibration de premier et de deuxième ordre du tube présente respectivement un premier nœud de vibration situé dans la première extrémité de tube de l'au moins un tube et un deuxième nœud de vibration situé dans la deuxième extrémité de tube de l'au moins un tube ; et/ou
- le tube étant courbé par sections, notamment en forme d'arc de cercle et/ou en forme de V, notamment de telle sorte que le tube présente un segment d'arc de sommet central et/ou qu'exactement un axe principal d'inertie de l'au moins un tube se trouve à l'intérieur de la surface de section transversale de référence de l'au moins un tube ; et/ou
- le tube étant droit par sections, notamment sur toute la longueur du tube, notamment de telle sorte qu'un centre de masse se trouve à l'intérieur de la surface de section transversale de référence de l'au moins un tube.

23. Système de mesure selon l'une des revendications précédentes, pour lequel l'agencement de tubes présente au moins un deuxième tube (112), lequel deuxième tube est notamment incurvé au moins par tronçons et/ou droit au moins par tronçons et/ou de construction identique au premier tube et/ou parallèle au premier tube au moins par tronçons.

24. Système de mesure selon la revendication précédente,

- pour lequel l'excitateur de vibrations (31) est relié mécaniquement aussi bien en partie au premier tube qu'en partie au deuxième tube ; et/ou
- pour lequel l'excitateur de vibrations (31) est conçu pour agir de manière différentielle sur les premier et deuxième tubes, notamment de telle sorte que les premier et deuxième tubes exécutent simultanément des fréquences identiques de vibrations mécaniques forcées opposées ; et/ou
- pour lequel l'excitateur de vibrations (31) est conçu pour convertir la puissance électrique, avec un courant électrique variable dans le temps, en puissance mécanique de telle sorte qu'en un point d'entraînement formé au moyen de l'excitateur de vibrations sur le deuxième tube relié mécaniquement audit excitateur de vibrations, une force d'entraînement variable dans le temps agit sur le deuxième tube, notamment simultanément et/ou en sens inverse de la force d'entraînement agissant sur le premier tube au point d'entraînement formé au moyen de l'excitateur de vibrations sur le premier tube relié mécaniquement audit excitateur de vibrations ; et/ou
- pour lequel l'excitateur de vibrations (31) est conçu pour convertir simultanément la puissance électrique injectée au moyen du signal d'attaque électrique (e1) en vibrations mécaniques forcées des premier et deuxième tubes, notamment de telle sorte que les premier et deuxième tubes exécutent simultanément des vibrations mécaniques forcées à la première fréquence utile et/ou à la deuxième fréquence utile.

Fig. 1

**Fig. 2**

*Fig. 3*

EP 4 168 752 B1

e1N1 ($f_{eN1}$)

31

$F_{exc1}(f_{eN1})$

**111**

$f_{N1}$

$\Delta E$

*Fig. 4a*

FL

**111**

$F_c(f_{N1})$

$F_c(f_{N1})$

$f_{N1}$

51

52

s1N1 ($f_{N1}$)

s2N1 ($f_{N1}$)

*Fig. 4b*

*Fig. 5*

Fig. 6

e1N2 ($f_{eN2}$)

31

$F_{exc2}(f_{eN2})$

111

51

s1N2 ($f_{N2}$)

52

s2N2 ($f_{N2}$)

$\Delta E \leq 3$ mm
($\Delta E \approx 0$)

e1N2 (f$_{eN2}$)

31

F$_{exc2}$(f$_{eN2}$)

η↑

**111**

51

s1N2 (f$_{N2}$)

ΔE > 0

52

s2N2 (f$_{N2}$)

e1N2 (f$_{eN2}$)

31

F$_{exc2}$(f$_{eN2}$)

**111**

51

s1N2 (f$_{N2}$)

ΔE↑

52

s2N2 (f$_{N2}$)

*Fig. 7*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 317340 A
- EP 816807 A
- JP 8136311 A
- JP 9015015 A
- DE 102019124709 A
- US 20050125167 A
- US 20060000293 A
- US 20060112774 A
- US 20060266129 A
- US 20070062308 A
- US 20070113678 A
- US 20070119264 A
- US 20070119265 A
- US 20070151370 A
- US 20070151371 A
- US 20070186685 A
- US 20080034893 A
- US 20080041168 A
- US 20080141789 A
- US 20100011882 A
- US 20100050783 A
- US 20100101333 A
- US 20100139417 A
- US 20100236338 A
- US 20100242623 A
- US 20100242624 A
- US 20100251830 A
- US 20110167907 A
- US 20120123705 A
- US 20140352454 A
- US 20160033314 A
- US 20160349091 A
- US 20160116319 A
- US 20160123836 A
- US 20160138997 A
- US 20170030870 A
- US 20170356777 A
- US 20190003875 A
- US 20200132529 A
- US 20200393278 A
- US 4680974 A
- US 4738144 A
- US 4768384 A
- US 4777833 A
- US 4793191 A
- US 4801897 A
- US 4823614 A
- US 4831885 A
- US 4879911 A
- US 5009109 A
- US 5024104 A
- US 5027662 A
- US 5050439 A
- US 5291792 A
- US 5359881 A
- US 5398554 A
- US 5476013 A
- US 5531126 A
- US 5602345 A
- US 5691485 A
- US 5728952 A
- US 5734112 A
- US 5796010 A
- US 5796011 A
- US 5796012 A
- US 5804741 A
- US 5831178 A
- US 5861561 A
- US 5869770 A
- US 5926096 A
- US 5945609 A
- US 5979246 A
- US 6047457 A
- US 6073495 A
- US 6092429 A
- US 6311136 A
- US 20100139416 A
- US 6223605 B
- US 6311136 B
- US 6330832 B
- US 6397685 B
- US 6513393 B
- US 6557422 B
- US 6651513 B
- US 6666098 B
- US 6691583 B
- US 6840109 B
- US 6868740 B
- US 6883387 B
- US 7017424 B
- US 7040179 B
- US 7073396 B
- US 7077014 B
- US 7080564 B
- US 7134348 B
- US 7299699 B
- US 7305892 B
- US 7360451 B

- US 7392709 B
- US 7406878 B
- US 7562586 B
- WO 0014485 A
- WO 0102816 A
- WO 03021205 A
- WO 2004072588 A
- WO 2005040734 A
- WO 2005050145 A
- WO 2006036139 A
- WO 2007097760 A
- WO 2008013545 A
- WO 2008077574 A
- WO 2009136943 A
- WO 2011019345 A
- WO 2013002759 A
- WO 2013009307 A
- WO 2017019016 A
- WO 2017069749 A

- WO 2019017891 A
- WO 2019081169 A
- WO 2019081170 A
- WO 2020259762 A
- WO 2020126285 A
- WO 8706691 A
- WO 9301472 A
- WO 9516897 A
- WO 9529386 A
- WO 9605484 A
- WO 9608697 A
- WO 9726508 A
- WO 9939164 A
- WO 9940394 A
- WO 9944018 A
- EP 2019082044 W
- WO 9928708 A
- WO 9902945 A